(19) **Europäisches Patentamt**

**European Patent Office**

**Office européen des brevets**

(11) **EP 0 472 148 B1**

(12) **EUROPEAN PATENT SPECIFICATION**

(45) Date of publication and mention
of the grant of the patent:
**09.05.2001 Bulletin 2001/19**

(51) Int Cl.⁷: $G06F\ 7/48$, $G06F\ 7/50$, $G06F\ 7/52$

(21) Application number: **91113901.2**

(22) Date of filing: **20.08.1991**

(54) **Method and apparatus for computing floating point data**

Verfahren und Gerät zur Berechnung von Gleitkommadaten

Procédé et appareil pour le calcul avec des données en virgule flottante

(84) Designated Contracting States:
**DE FR GB NL**

(30) Priority: **24.08.1990 JP 22276390**
**30.10.1990 JP 29383690**

(43) Date of publication of application:
**26.02.1992 Bulletin 1992/09**

(60) Divisional application:
**97118606.9 / 0 820 005**
**99116001.1 / 0 973 089**

(73) Proprietor: **MATSUSHITA ELECTRIC INDUSTRIAL CO., LTD.**
**Kadoma-shi, Osaka 571-8501 (JP)**

(72) Inventors:
• **Suzuki, Masato**
  **Toyonaka-shi, Osaka-fu (JP)**
• **Yasutome, Mikako**
  **Moriguchi-shi, Osaka-fu (JP)**
• **Tsuruta, Hideyo**
  **Hirakata-shi, Osaka-fu (JP)**

(74) Representative: **Eisenführ, Speiser & Partner**
**Martinistrasse 24**
**28195 Bremen (DE)**

(56) References cited:
**US-A- 4 590 584**     **US-A- 4 839 846**
**US-A- 4 926 370**

• **IEEE TRANSACTIONS ON COMPUTERS vol. C-26, no. 7, July 1977, NEW YORK US pages 643 - 650 D. KUCK ET AL. 'Analysis of Rounding Methods in Floating-Point Arithmetic'**
• **IEEE TRANSACTIONS ON COMPUTERS vol. C-26, no. 7, July 1977, NEW YORK US pages 643 - 650 D. KUCK ET AL. 'Analysis of Rounding Methods in Floating-Point Arithmetic'**
• **PROCEEDINGS OF THE 1989 IEEE INTERNATIONAL CONFERENCE ON COMPUTER DESIGN: VLSI IN COMPUTERS & PROCESSORS (ICCD'89), 2-4 OCTOBER 1989. 1989, IEEE, NEW YORK pages 374 - 379 H. SIT ET AL. 'An 80 MFLOPS Floating-point Engine in the Intel i860(TM) Processor'**
• **PROCEEDINGS OF THE 5TH SYMPOSIUM ON COMPUTER ARITHMETIC, 18-19 MAY 1981. IEEE, NEW YORK pages 50 - 55 J. GOSLING ET AL. 'A CHIP SET FOR A HIGH-SPEED LOW-COST FLOATING-POINT UNIT'**
• **ELEKTRONIK vol. 29, no. 9, April 1980, MUNCHEN, GERMANY. pages 50 - 54 S. WASER 'Entwicklung von Gleitkomma-Prozessoren'**
• **PROCEEDINGS OF THE IEEE INTERNATIONAL CONFERENCE ON ACOUSTICS, SPEECH AND SIGNAL PROCESSING, 30 MARCH-1 APRIL 1981 (ICASSP 81), ATLANTA, GEORGIA, USA. vol. 1, 1981, IEEE, NEW YORK, USA. pages 374 - 377 L. SCHIRM IV 'A FAMILY OF HIGH SPEED, FLOATING POINT ARITHMETIC CHIPS'**

## Description

### BACKGROUND OF THE INVENTION

The present invention generally relates to a method and an apparatus for computing floating point data which are used in the central processing units and so on of the digital computers, and more particularly, are adapted to effect the four fundamental rules of arithmetics computation of the floating point data, further, the four fundamental rules of arithmetics computation of the floating point data, rounding and normalizing computation in accordance with ANSI/IEEE Standard for Binary Floating Point Arithmetic P754.

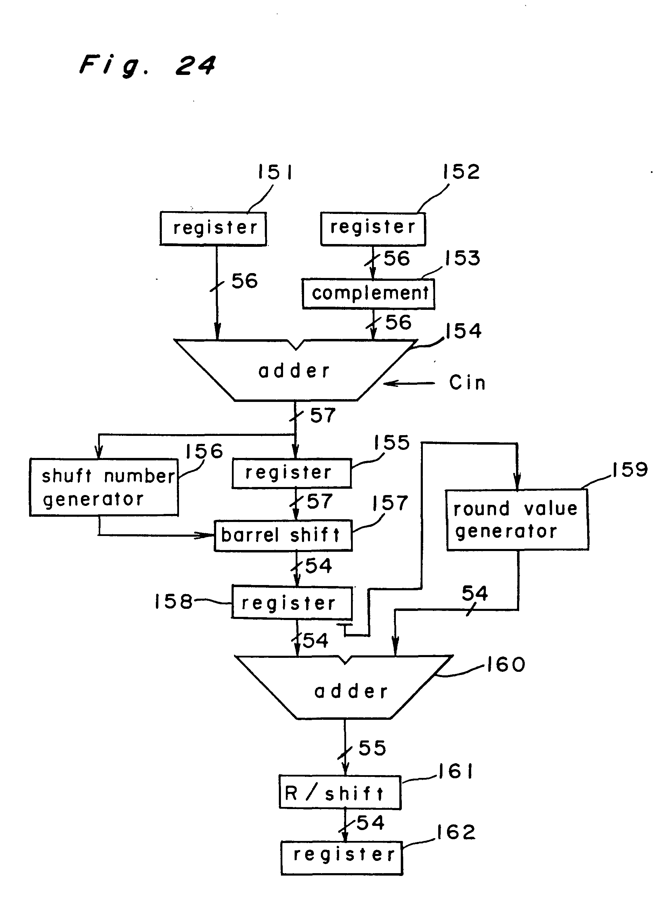

The conventional adding apparatus of the floating point data is shown in the block diagram of Fig. 24. The adding operation shows the addition which is effected with respect to the mantissa data at the subtraction time of different signs or at the addition time of the same signs. The subtraction shows the subtraction which is effected with respect to the mantissa data at the addition of the different signs or the subtraction of the same signs. The addition or subtraction is decided prior to the operation by the type of the signs of the input data and the instructions. Referring now to the same drawing, reference numeral 151 is a register wherein a mantissa which is not smaller in exponent from two floating-point data is accommodated, reference numeral 152 is a resister wherein a mantissa which is smaller in exponent from two floating-point data is aligned in unit to the exponent not smaller and is accommodated, reference numeral 153 is a complementer which takes 1's complement of the output of the register 152 at the subtraction time, reference numeral 154 is an adder which executes the addition with the carry input (Cin) into the least significant bit being 0 at the addition time with the outputs of the register 151 and the complementer 153 being inputs, executes the subtraction with the carry input (Cin) being 1 at the subtraction time, reference numeral 155 being a register for accommodating the output of the adder 154, reference neutral 156 is a shift number generating circuit for generating shift numbers for the normalization of the output of the adder 154, reference numeral 157 is a barrel shifter which is adapted to shift by bit number the shift number generating circuit 156 shows with respect to the output of the register 155 for the normalization, reference numeral 158 is a register for accommodating the output of the barrel shifter 157, reference numeral 159 is a round value generating circuit which is adapted to decide the existence of the round addition in accordance with the value retained in the register 158, the round mode and the round precision, to generate the round addition value with the least significant bit (L) corresponding to the round precision being 1, the other bits being 0 when rounding up by the rounding, to generate the round addition value with all the bits being 0 when rounding down by the rounding, reference numeral 160 is an adder for adding the output of the register 158 and the output of the round value generating circuit 159, reference numeral 161 is a R1 shifter for shifting by 1 bit the output of the adder 160 in the least significant bit direction (hereinafter referred to as right), reference numeral 162 is a register for accommodating the mantissa of the addition, subtraction result to be obtained by the output of the R1 shifter 161.

The conventional addition, subtraction apparatus of the floating point data constructed as constructed hereinabove will be described hereinafter in its operation.

First, a case where the augend, the minuend and the addend, the subtrahend are the basic single precision format by ANSI/IEEE Standard for Binary Floating-Point Arithmetic P754 (hereinafter referred to as single precision), and the sum or difference is also rounded in single precision.

(1) Before Processing Step Start

A mantissa which is not smaller in exponent out of the augend, the minuend and the addend, the subtrahend is accommodated in the register 151. A mantissa which is smaller in exponent out of the augend, the minuend and the addend, the subtrahend is aligned in unit to the exponent that is not smaller is accommodated in the register 152. The bits which have been taken down at the alignment are accommodated, in the register 152, collectively as a round bit (R) having the weight of $2^{-24}$ in the bit lower by one unit of the least significant bit (L) and a sticky bit (S) which is the logical or of the bits of the bit or lower having the weight of $2^{-25}$.

(2) Step 1

The complementer 153 and the adder 154 add, subtract two mantissas retained in the register 151 and the register 152 so as to accommodate the result in the register 155. At the adding time, the complementer 153 outputs, into the adder 154, the output of the register 152 as it is so as to make zero the Cin of the adder 154. At the subtracting time, the complementer 153 takes 1's complement of the output of the register 152 so as to output it into the adder 154 and make one the Cin.

(3) Step 2

The shift number generating circuit 156 generates the shift number for normalization of the output of the adder 154. The barrel shifter 157 effects the shifting of the output of the register 155 in accordance with the output of the shift number generating circuit 156 so as to effect the normalization shifting operation with respect to the computation result of the step 1. At this time, the barrel shifter 157 generates the shift results down to the least significant bit (L), the round bit (R) having the weight of the $2^{-24}$ lower by one unit of the least significant bit, a sticky bit (S) which is the logical or of the bits of the bit or lower having the weight of $2^{-25}$ and accommodates them in the register 158.

(4) Step 3

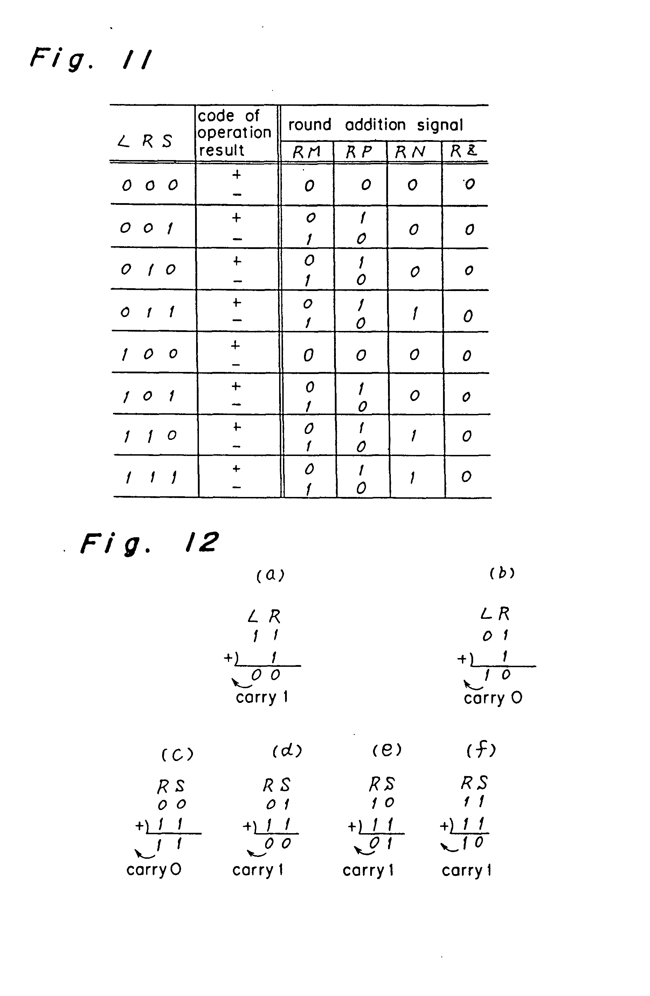

The round value generating circuit 159 generates the round addition value with the least significant bit (L) retained in the register 158, the round bit (R), the sticky bit (S), the round mode and the round precision and the sign of the operation result. The round addition value to be generated has a value with the bit having the weight of $2^{-23}$ being 1, the other bits being 0 when the round addition signal is 1, a round value with the all the bits being made 0 when the round addition signal is 0, in accordance with the input, output relation chart shown in Fig. 11. RM, RP, RN, RZ show in order the directed rounding toward minus, the directed rounding toward plus, the rounding to nearest even in the round mode stipulated in the ANSI/IEEE Standard for Binary Floating-Point Arithmetic P754. The adder 160 adds the output of the register 158 and the output of the round value generating circuit 159. The R1 shifter 161 shifts, by one bit to right, the output of the adder 160 when the overflow has been generated in the adder 160, in the other case, accommodates the output of the adder 160 as it is in the register 162 so as to complete the processing.

A case where the augend, the minuend and the addend, the subtrahend are the basic double precision format by ANSI/IEEE Standard for Binary Floating-Point Arithmetic P754 (hereinafter referred to simply as double precision), and the sum or difference is also rounded in double precision.

(1) Before Processing Step Start

A mantissa which is not smaller in exponent of the augend, the minuend and the addend, the subtrahend is accommodated in the register 151. A mantissa which is smaller in index out of the augend, the minuend and the addend, the subtrahend and is aligned in unit to the exponent that is not smaller, is accommodated in the register 152. The bits which have been taken down at the alignment are accommodated in the register 152 collectively as a round bit (R) having the weight of $2^{-53}$ of the bit lower by one unit of the least significant bit (L) and a sticky bit (S) which is the logical or of the bits of the bit or lower of having the weight of $2^{-54}$.

(2) Step 1

The complementer 153 and the adder 154 add, subtract two mantissas retained in the register 151 and the register 152 so as to accommodate the result in the register 155. At the adding time, the complementer 153 outputs into the adder 154 the output of the register 152 as it is so as to make the Cin of the adder 154 zero. At the subtracting time, the complementer 153 takes 1's complement of the output of the register 152 so as to output it into the adder 154 and make one turning the Cin.

(3) Step 2

The shift number generating circuit 156 generates the shift number for normalization of the output of the adder 154. The barrel shift 157 effects the shifting of the output of the register 155 in accordance with the output of the shift number generating circuit 156 so as to effect the normalization shifting operation with respect to the operation result of the step 1. At this time, the barrel shifter 157 generates the shift results down to the least significant bit (L), the round bit (R) having the weight of the $2^{-53}$ lower by one unit of the least significant bit, a sticky bit (S) which is the logical or of the bits of the bit or lower having the weight of $2^{-54}$ and accommodates them in the register 158.

(4) Step 3

The round value generating circuit 159 generates the round addition value with the least significant bit (L) retained in the register 158, the round bit (R), the sticky bit (S), the round mode, the round precision and the sign of the operation result. The round addition value to be generated has a value with a bit having the weight of $2^{-52}$ being 1, the other bit being 0 when the round addition signal is 1, a round value with all the bits being 0 when the round addition signal is 0, in accordance with the input, output relation chart shown in Fig. 11. The adder 160 adds the output of the register 158 and the output of the round value generating circuit 159. The R1 shifter 161 shifts by one bit to right the output of the adder 160 when the overflow has been generated in the adder, in the other case, accommodates the output of the adder 160 as it is in the register 162 so as to complete the processing.

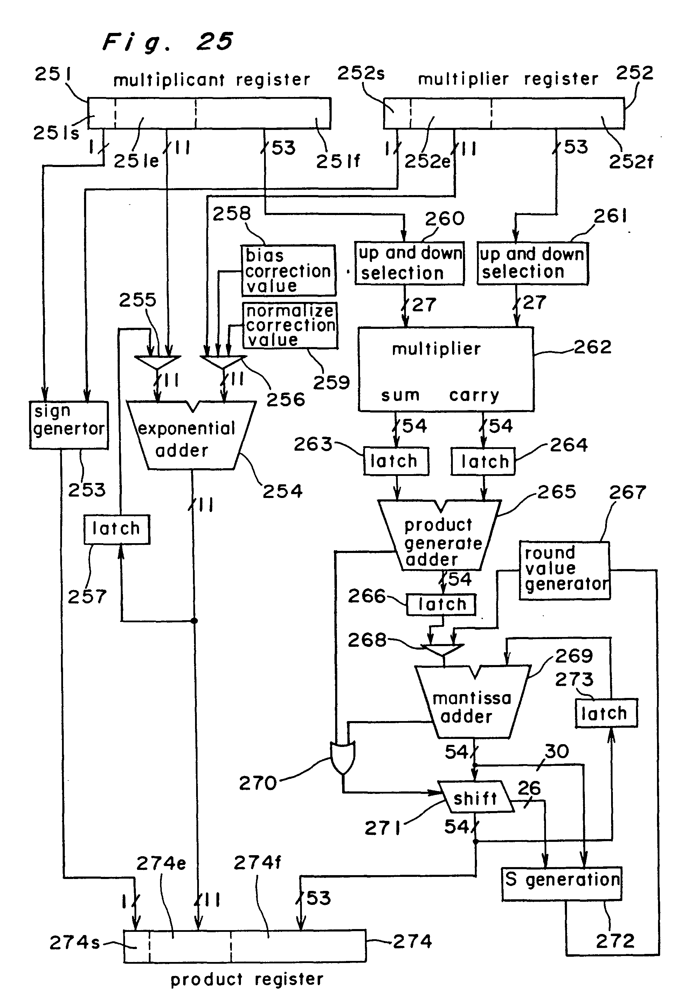

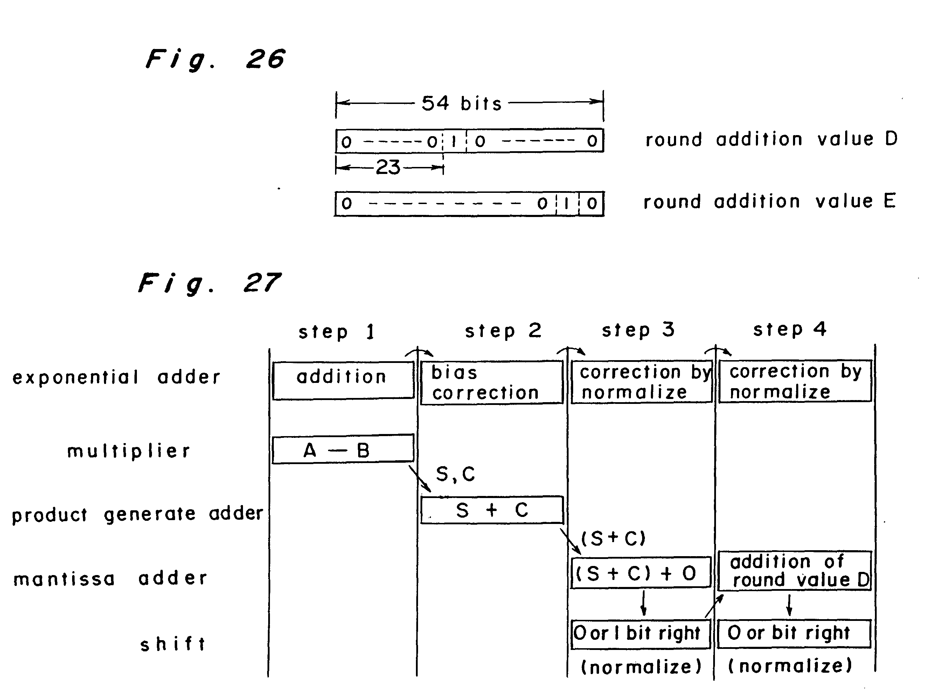

The conventional multiplication apparatus for the floating point data is shown in the block diagram of Fig. 25. In Fig. 25, reference numeral 251 is a multiplicand register for retaining the multiplicand, consisting of a sign portion 251s of one bit, an exponent portion 251e of 11 bits, a mantissa portion 251f of 53 bits. Reference numeral 252 is a multiplier register for retaining the multipliers, consisting of a sign portion 251s of 1 bit, an exponent portion 252e of 11 bit, a mantissa portion 252f of 53 bits. The most significant bits of the multiplicand register mantissa portion 251f or the multiplier register mantissa portion 252f is so-called "hidden bit" each having the weight of $2^{0}$, is 1 in the normalized number. Except for this bit, the multiplicand register 251 and the multiplier register 252 both conform in the double precision format. Reference numeral 253 is a sign generating circuit for reading the signs of the multiplicand and multiplier from the multiplicand register sign portion 251s and the multiplier register sign portion 252s so as to generate the sign of the product, reference numeral 254 is an exponent adder of 11 bits for reading the exponents of the multiplicand and the multiplier from the multiplicand register exponent portion 251e and the multiplier register exponent portion 252e so as to compute the exponent of the product, reference numerals 255, 256 are selectors of 11 bits for respectively selecting two inputs of the exponent adder 254, reference numeral 257 is a latch of 11 bits for retaining the output of the exponent adder 254 so as to input it into the exponent adder 254 again through the selector 255, reference numeral 258 is a bias correction value generating circuit for generating the bias (deviation) of 11 bits in a step of computing the exponent of the product, reference numeral 259 is a normalized correction value generating circuit for generating the constant of increasing by 1 the exponent through the normalization of 1 bit shift of the mantissa of the product, reference numeral 260 is a multiplicand upper, lower selecting circuit for reading the multiplicand register mantissa portion 251f, selecting the upper 27 bits or the lower 27 bits (the most significant bit at this time is 0) so as to output it, reference numeral 261 is a multiplier upper, lower selecting circuit for reading the multiplier resister mantissa portion 252f and selecting the upper 27 bits or the lower 27 bits (the most significant bit at this time is zero) so as to output it, reference numeral 262 is a multiplying unit for multiplying the output of the multiplicand upper, lower selecting circuit 260 of 27 bits by the output of the multiplier upper, lower selecting circuit 261 of 27 bits so as to respectively output the sum of 54 bits and the carry of 54 bit, reference numerals 263, 264 are latches of 54 bits for retaining the sum output and the carry output of the multiplying unit 262, reference numeral 265 is a product generating adder of 54 bits for adding the sum output and carry output of the multiplying unit 262 retained in the latch 263 and the latch 264, reference numeral 266 is a latch of 54 bits for retaining the output of the product generating adder 265, reference numeral 267 is a round adding value generating circuit for generating the constant in the adding operation for rounding the mantissa of the product into the single precision or the double precision, reference numeral 268 is a selector of 54 bits for selecting the output of the round addition value generating circuit 267 and the value of the latch 266, reference numeral 269 is a mantissa adder of 54 bits for adding the output of the selector 268 and the value to be retained in the latch 273 to be described later, reference numeral 270 is a logical or gate for computing the logical or of the overflow from the most significant bit of the product generating adder 265 and the overflow from the most significant bit of the mantissa adder 269, reference numeral 271 is a shifter of 54 bits for shifting by 0 bit, 1 bit or 26 bits the output of the mantissa adder 269 in the least significant bit direction, reference numeral 272 is a sticky bit generating circuit for inputting the lower 30 bits of the output of the mantissa adder 269 and the shift overflow from the least significant bit of the 26 bits in the shifter . 271 so as to generate the sticky bit in accordance with the single precision or double precision in the round precision, reference numeral 273 is a latch of 54 bits for retaining the output of the shifter 271, reference numeral 274 is a product register for retaining the product, consisting of a sign portion 274s of 1 bit, an exponent portion 274e of 11 bits, a mantissa portion 274f of 53 bits. The most significant bit of the product register mantissa portion 274f is also so-called "hidden bit" having the weight of $2^0$, is 1 in the normalized number. Except for this bit, the product register 274 conforms to the double precision format. Fig. 26 is a performance illustrating chart showing the constant the round addition value generating circuit 267 shown in Fig. 25 generates, a round addition value D is generated with only the 24th bit from the most significant bit being 1, the others being 0, a round addition value E is generated with only the 2nd bit from the least significant bit being 1, the others being 0.

The conventional multiplying apparatus of the floating point data constructed as described hereinabove will be described hereinafter in its operation.

First, a case where the multiplicand and the multiplier are the single precision and the product is also rounded in the single precision will be described hereinafter with the use of the operation flow chart of the single precision multiplication shown in Fig. 27. Fig. 27 shows the contents of the operation of each of the processing steps of the exponent adder 254, the multiplying unit 262, the product generating adder 265, the mantissa adder 269, the shifter 271.

(1) Before Processing Step Start

The multiplicand and the multiplier of the single precision are expanded into the double precision and are accommodated respectively into the multiplicand register 251 and the multiplier register 252. At this time, the multiplicand register exponent portion 251e and the multiplier register exponent portion 252e are both converted into the biased expression of the double precision (real exponent value = exponent value - $1023_{(10)}$), with 0 being filled in the lower 29 bits of the multiplicand register mantissa portion 251f and the multiplier register mantissa portion 252f. The latch 273 is cleared into 0. Here the (10) shows the decimal number expression in numerical value.

(2) Step 1

By the selector 255 and the selector 256, the exponents of the multiplicand and the multiplier are inputted from the multiplicand register exponent portion 251e and the multiplier register exponent portion 252e into the exponent adder 254 and are added so as to accommodate the addition result into the latch 257. The multiplicand upper, lower selecting circuit 260 reads, outputs the upper 27 bits of the multiplicand register mantissa portion 251f (all the effective bits of the mantissa portion of the multiplicand are included in it), the multiplier upper, lower selecting circuit 261 reads, outputs the upper 27 bits of the multiplier register mantissa portion 252f (all the effective bits of the mantissa portion of the multiplier are included in it). The multiplier 262 executes the multiplication in accordance with the inputs from the multiplicand upper, lower selecting circuit 260 and the multiplier upper, lower selecting circuit 261 so as to accommodate the sum output and the carry output respectively into the latch 263 and the latch 264. At the same time, in the sign generating circuit 253, the signs of the multiplicand and the multiplier are read from the multiplicand register sign portion 251s and the multiplier register sign portion 252s so as to take the exclusive or of both, and to generate the sign of the product so as to accommodate it into the product register sign portion 724s.

(3) Step 2

As the value the latch 257 retains is the sum of the biased exponents of the multiplicand and the multiplier, the biasing is doubly applied. Therefore, -1023 (actually 2's complement expression is used) from the bias correction value generating circuit 258 is outputted. By the selector 255 and the selector 256, the value of the latch 257 and the output of the bias correction value generating circuit 258 in the exponent adder 254 are added and are accommodated again into the latch 257. The product generating adder 265 adds the sum output and the carry output of the multiplying unit 262 retained in the latch 263 and the latch 264 are added so as to accommodate the addition result into the latch 266.

(4) Step 3

The mantissa adder 269 adds the value retained in the latch 266 and the value 0 of the latch 273 by the selector 268. When the overflow from the product generating adder 265 exists at the step 2, namely, when the product of the mantissa is 2 or more, the shifter 271 shifts (at this time, 1 is buried at the most significant bit), in the 1 bit least significant bit direction, the output from the mantissa adder 269 for normalization so as to accommodate the result into the latch 273. By the selector 255 and the selector 256, the exponent adder 254 adds the value of the latch 257 and the constant 1 the normalized correction value generating circuit 259 outputs so as to accommodate it again into the latch 257. When the overflow from the product generating adder 265 at the step 2 does not exist, namely, when the product of the mantissa portion is 1 or more, less than 2, the shifter 271 accommodate it as it is into the latch 273 without shifting of the output from the mantissa adder 269, because the normalization is not required to effect. By the selector 255 and the selector 256, the exponent adder 254 outputs the value of the latch 257 as it is and accommodates it again into the latch 257. The sticky bit generating circuit 272 takes the logical or of the lower 30 bits of the output of the mantissa adder 269 so as to make 1 the sticky bit output if the bit of the value 1 exists in the 30 bits, makes zero the sticky bit output if the full bit of the 30 bits is 0 at value.

(5) Step 4

Round addition value generating circuit 267 decides the requirement of the round addition by the rounding mode, the value of the 25th bit from the most significant bit which is a round bit of the value retained in the latch 273, the sign of the product the sign generating circuit 253 outputs (necessary when the round mode is a round toward plus mode and a round toward minus mode) and the value of the sticky bit the sticky bit generating circuit 272 outputs, outputs the round addition value D shown in Fig. 26 when the round addition is necessary, and outputs 0 when the round addition is not necessary. By the selector 268, the mantissa adder 269 adds the round addition value the round addition value generating circuit 267 outputs, and a value retained in the latch 273 retains. At this time, when the overflow is caused in the mantissa adder 269, namely, the mantissa is 2 or more by rounding up, the shifter 271 shifts by 1 bit in the least significant bit direction the output from the mantissa adder 269 again for normalization (at this time, 1 is buried at the most significant bit). By the the selector 255 and the selector 256, the exponent adder 254 adds the value of the latch 257 and the constant 1 the normalized correction value generating circuit 259. When the overflowing is not caused in the mantissa adder 269, namely, the mantissa value is 1 or more, less than 2, the shifter 271 outputs the output, as it is, from the mantissa adder 269 without shifting as it is not necessary to effect the normalization. By the selector 255 and the selector 256, the exponent adder 254 also outputs the value, as it is, of the latch 257. In any case, the output of the exponent adder 254 is accommodated into the product register exponent portion 274e, the lower 29 bits of the 53 bits except for the least significant bit of the output of the shifter 271 are masked into 0, are accommodated in the product register mantissa portion 274f so as to complete the processing.

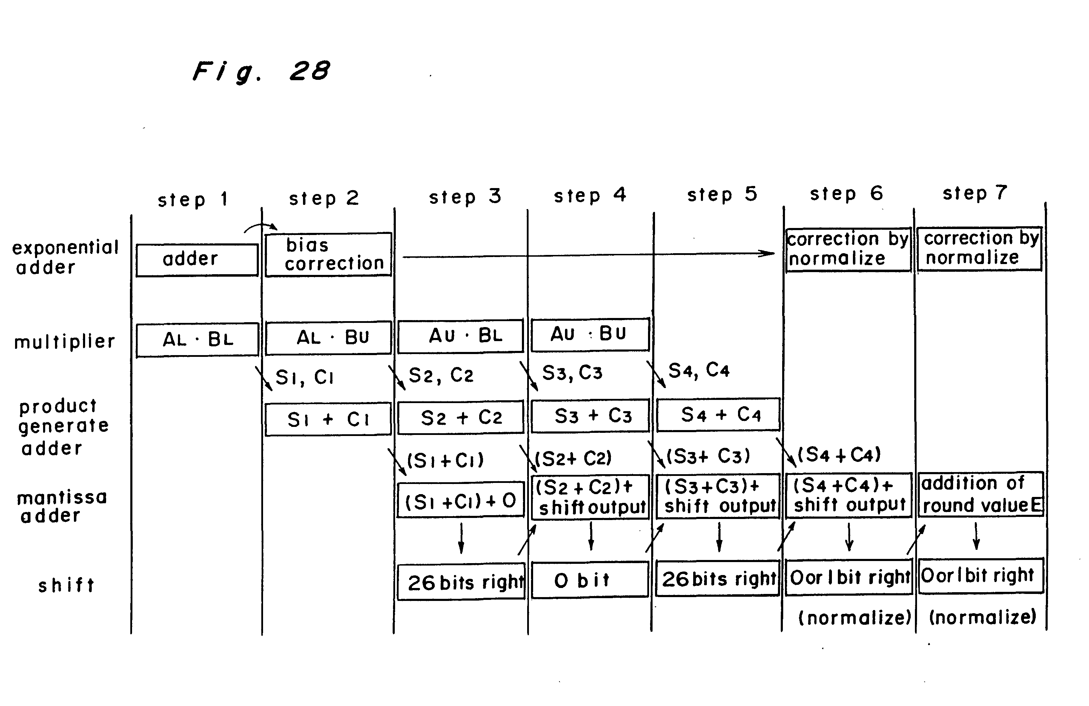

Then, a case where the multiplicand and the multiplier are the double precision and the product is also rounded in the double precision will be described with the use of the operation flow chart of the double precision multiplication shown in Fig. 28. Fig. 28 also shows the contents of the operations of each processing step of the exponent adder 254, the multipling unit 262, the product generating adder 265, the mantissa adder 269, the shifter 271.

(1) Before Processing Step Start

The multiplicand and the multiplier in double precision are respectively accommodated in the multiplicand register 251 and the multiplier register 252. At this time, the multiplicand register exponent portion 251e and the multiplier register exponent portion 252e are both converted into the biased expression of the double precision (real exponent value = exponent value $-1023_{(10)}$). The latch 273 is cleared into 0.

(2) Step 1

By the selector 255 and the selector 256, the exponents of the multiplicand and the multiplier are inputted from the multiplicand register exponent portion 251e and the multiplier register exponent portion 252e into the exponent adder 254 and are added so as to accommodate the addition result into the latch 257. The multiplicand upper, lower selecting circuit 260 reads, outputs the lower 27 bits (the most significant bit is 0) of the multiplicand register mantissa portion 251f, the multiplier upper, lower selecting circuit 261 reads, outputs the lower 27 bits (the most significant bit is 0) of the multiplier register mantissa portion 252f. The multipling unit 262 executes the multiplication in accordance with the inputs from the multiplicand upper, lower selecting circuit 260 and the multiplier upper, lower selecting circuit 261 so as to accommodate the sum output and the carry output respectively into the latch 263 and the latch 264. At the same time, in the sign generating circuit 253, the signs of the multiplicand and the multiplier are read from the multiplicand register sign portion 251s and the multiplier register sign portion 252s to take the exclusive or of both, and to generate the sign of the product so as to accommodate it into the product register sign portion 724s.

(3) Step 2

As the value the latch 257 retains is the sum of the biased exponents of the multiplicand and the multiplier, the biasing is doubly applied. Therefore, -1023 (actually 2's complement expression is used) from the bias correction value generating circuit 258 is outputted. By the selector 255 and the selector 256, the value of the latch 257 and the output of the bias correction value generating circuit 258 in the exponent adder 254 are added and are accommodated again into the latch 257. The product generating adder 265 adds the sum output and the carry output of the multiplying unit 262 retained in the latch 263 and the latch 264 so as to accommodate the addition results into the latch 266. The value accommodated in the latch 266 is the least significant partial product. At the same time, the multiplicand upper, lower selecting circuit 260 reads, outputs the lower 27 bits (the most significant bit is 0) of the multiplicand register mantissa portion 251f. The multiplier upper, lower selecting circuit 261 reads, outputs the upper 27 bits of the multiplier register mantissa portion 252f. The multiplying unit 262 executes the multiplication in accordance with the inputs from the multiplicand upper, lower selecting circuit 260 and the multiplier upper, lower selecting circuit 261 so as to accommodate the sum output and the carry output respectively into the latch 263 and the latch 264.

(4) Step 3

The mantissa adder 269 adds the value retained in the latch 266 and the value 0 of the latch 273 by the selector 268. The shifter 271 shifts by 26 bits in the least significant bit direction the data of 55 bits which consists of 54 bits of the addition result in the mantissa adder 269 and 1 bit being added onto the most significant bit side, where the logical or of the overflow from the product generating adder 265 at the step 2, and the overflow from the mantissa adder 269 at the step 3 was taken in the "or" gate 270, so as to accommodate the result into the altch 273. The product generating adder 265 adds the sum output and the carry output of the multiplying unit 262 retained in the latch 263 and the latch 264 so as to accommodate the addition result. The value accommodated in the latch 266 is a first intermediate partial product. At the same time, the multiplicand upper, lower selecting circuit 260 reads, outputs the upper 27 bits of the multiplicand register mantissa portion 252f, and the multiplier upper, lower selecting circuit 261 reads, outputs the lower 27 bits (the most significant bit is 0) of the multiplier register mantissa portion 252f. The multiplying unit 262 executes the multiplication in accordance with the inputs from the multiplicand upper, lower selecting circuit 260 and the multiplier upper, lower selecting circuit 261 so as to accommodate the sum output and the carry output respectively into the latch 263 and the latch 264.

(5) Step 4

The mantissa adder 269 adds the value retained in the latch 266 and the output of the shifter 271 retained in the latch 273 by the selector 268. The shifter 271 outputs, without shifting, 54 bits of the addition result, as it is, in the mantissa adder 269 so as to accommodate it in the latch 273. The product generating adder 265 adds the sum output of the multiplying unit 262 retained in the latch 263 and the latch 264, and the carry output so as to accommodate the addition result. The value of accommodated in the latch 266 is a second intermediate partial product. At the same time, the multiplicand upper, lower selecting circuit 260 reads, outputs the upper 27 bits of the multiplicand register mantissa portion 251f, the multiplier upper, lower selecting circuit 261 reads, outputs the upper 27 bits of the multiplier register mantissa portion 252f. The multiplying unit 262 executes the multiplication in accordance with the inputs from the multiplicand upper, lower selecting circuit 260 and the multiplier upper, lower selecting circuit 261 so as to accommodate the sum output and the carry output respectively in the latch 263 and the latch 264.

## (6) Step 5

The mantissa adder 269 adds the value retained in the latch 266 and the output of the shifter 271 retained in the latch 273 by the selector 268. The shifter 271 shifts by 26 bits in the least significant bit direction the data of 55 bits, which consists of 54 bits of the addition result in the mantissa adder 269 and 1 bit being added onto the most significant bit side, where the logical or of the overflow from the product generating adder 265 at the step 4 and the overflow from the mantissa adder 269 at the step 5 is taken in the "or" gate 270, so as to accommodate the result into the altch 273. The product generating adder 265 adds the the sum output and carry output of the multiplying unit 262 retained in the latch 263 and the latch 264 so as to accommodate the addition result. The value accommodated in the latch 266 is the most significant partial product.

## (7) Step 6

The mantissa adder 269 adds the value retained in the latch 266 and the output of the shift 271 retained in the latch 273 by the selector 268. When the logical or of the overflow from the product generating adder 265 at the step 5 and the overflow from the mantissa adder 269 at the step 6 being taken at the logical or gate 270 are 1, namely, the product of the mantissa portion is 2 or more, the shifter 271 shifts the output from the mantissa adder 269 (at this time, 1 is buried in the most significant bit) by 1 bit in the least significant bit direction so as to accommodate the result in the latch 273. The exponent adder 254 adds the value of the latch 257 and the constant 1 the normalized correction value generating circuit 259 outputs by the selector 255 and the selector 256 so as to accommodate it again into the latch 257. When the value with the logical or being taken in the logical or gate 270 is 0, namely, the product of the mantissa portion is 1 or more, less than 2, the output from the mantissa adder 269 is accommodated as it is into the latch 273 without shifting as the normalization is not necessary to be effected. The exponent adder 254 outputs the value of the latch 257 as it is by the selector 255 and the selector 256 so as to accommodate it again into the latch 257. The sticky bit generating circuit 272 takes the logical or of 52 bits with the shift overflow from the least significant bit of 26 bits in the shifter 271 at the step 3 and the shift overflow from the least significant bit of 26 bits in the shifter 271 at the step 5 being combined in it. The sticky bit output is made 1 if a bit of 1 in value exists in the 52 bits, and the sticky bit output is made 0 if all the bits of 52 bits are 0 in value.

## (8) Step 7

The round addition value generating circuit 267 decides the requirement by the rounding mode, the value of the least significant bit which is the round bit of the value retained in the latch 273, the sign of the product the sign generating circuit 253 outputs (necessary when the round mode is a round toward plus mode and a round toward minus mode) and the value of the sticky bit the sticky bit generating circuit 272 outputs, outputs the round addition value E shown in Fig. 26 when the round adition is necesary, and ouputs 0 when the round addition is not necessary. By the selector 268, the mantissa 269 adds the round addition value the round addition value generating circuit 267 outputs by the selector 268, and the value the latch 273 retains. At this time, when the overflow is caused in the mantissa adder 269, namely, the mantissa is 2 or more by the rounding up, the shifter 271 shifts by 1 bit in the least significant bit direction the output from the mantissa adder 269 again for normalization (at this time, 1 is buried at the most significant bit). By the selector 255 and the selector 256, the exponent adder 254 adds the value of the latch 257 and the constant 1 the normalized correction value generating circuit 259. When the overflowing is not caused in the mantissa adder 269, namely, the mantissa is 1 or more, less than 2, the shifter 1 outputs the value, as it is, the output from the mantissa adder 269 without shifting, as it is not necessary to effect the normalization. By the selector 255 and the selector 256, the exponent adder 254 also outputs the value, as it is, of the latch 257. In any case, the output of the exponent adder 254 is accommodated into the product register exponent portion 274e, the 53 bits, except for the least significant bit of the output of the shifter 271, is accommodated in the product register mantissa portion 274f so as to complete the processing.

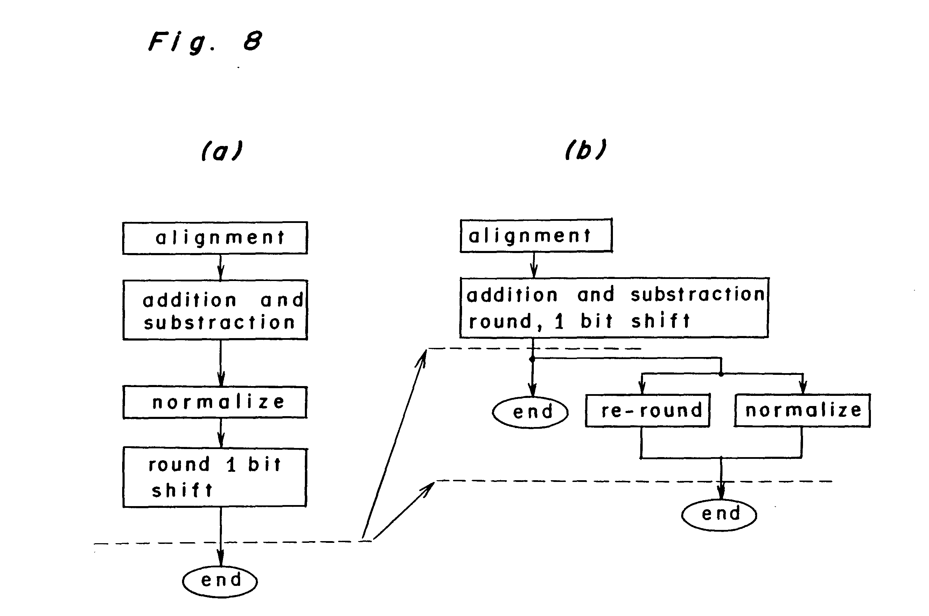

But in the conventional addition and subtraction apparatus of the floating point data, the position of the least significant bit (L) for adding the round addition value is fixed for the first time after the normalization shift by the barrel shifter 157, not fixed with respect to the input, output in the adder 154, thus normally resulting in the flowing of the processing of addition or subtraction, normalization, rounding. Therefore, the addition and subtraction of two mantissas and the addition of the round addition value are required to be respectively effected independently. At least four steps of processing steps in number including the alignment are required as shown in Fig. 8 (a). Also, as the addition, subtraction of the former are effected by the adder 154, and the addition of the latter is effected by the adder 160, two adders are required. A problem point of increasing the number of the hardwares is provided.

In the conventional multiplication apparatus of the floating point data, the addition of the sum and the carry from the multiplying unit 262, the addition for accumulating the partial products, and the addition of the round addition values are respectively effected independently, four steps are required in the number of the processing steps in the case of the single precision multiplication, and seven steps in the case of the double precision multiplication. Also, the addition of one former is effected with the product generating adder 265, and the addition of the two latters are effected by the mantissa adder 269, thus requiring two adders, with a problem that the hardwares are increased in number.

US-A-4,926,370 discloses a method and an apparatus for processing postnormalization and rounding in parallel in floating point arithmetic circuits. The fractional result of a floating point arithmetic operation is simultaneously passed to a normalized circuit and a round circuit, and the first two bit positions of the fractional result are examined. Normalization as well as rounding is effected as a parallel operation in the case of either the fractional result being 1 .X or the format being 0.0X, wherein X being any value, but in the case of the format being 0.1X this known method and apparatus does only the rounding after completing the normalization.

From US-A-4,839,846 an operation unit is known capable of performing round processing at a high speed in a floating point operation. A circuit for detecting an overflow on the condition of a signal representing all 1's in an output of a mantissa shifter and a signal representing round-up, a carry look-ahead circuit and a circuit for generating a round precision signal are provided. When the overflow takes place, the mantissa is produced as "1". The operation result is normalized and rounded, and if overflow takes place in rounding, the result is further normalized by shifting the result right by one bit.

From PROCEEDINGS OF THE 1989 IEEE INTERNATIONAL CONFERENCE ON COMPUTER DESIGN: VLSI IN COMPUTERS & PROCESSORS (ICCD'89), 2-4 OCTOBER 1989. 1989, IEEE NEW YORK pages 374-379 H. SIT ET AL. "An 80 MFLOPS Floating-point Engine in the Intel i860(TM) Processor" a floating-point adder is disclosed of a free-stage pipelined structure. In the first stage, the amount of shift number is calculated for the normalization shift of the subtraction result in the subtracting operation. This operation is a calculation of the number of precedent O of the subtraction result when subtraction between two values near to each other is operated. In the second stage, either a prenormalization based on the calculated shift amount or mantissa alignment as usual is executed and the round bits and sticky bits are calculated for addition. In the third stage, the mantissa subtract and rounding operations are simultaneously performed, where two adders are operated in parallel and one of the operation results is selected. In this operation it appears, although not clearly disclosed, that two round addition values having different bits allocated by 1 are prepared to execute the add/subtract operation. Thus the two types of this operation are executed with respect to two types of round addition values, and then the calculation result is selected by a bit having a weight of $2^1$.

## SUMMARY OF THE INVENTION

Accordingly, an essential object of the present invention is to provide a method and an apparatus for the addition and subtraction of floating point data which is capable of mantissa addition, subtraction and the round addition value addition simultaneously within the same adder, and is less in the number of the processing steps necessary to get the mantissa portion of the sum and difference in the floating point data rounded with the specified round mode and the round precision, and is less in hardware as compared with the addition and subtraction apparatus of the conventional floating point data.

In accomplishing these and other objects, the present invention provides for an addition and subtraction method of floating point data comprising the steps of effecting either simultaneously the addition of the first, second mantissas aligned to the same exponent, and the addition of the round addition value to be determined uniformly with the round precision, the round mode and the computation result sign when the operation is the real mantissa addition which is an addition of the same sign or a subtraction of the different sign in the computation of the floating point data, or effecting simultaneously the subtraction of the first, second mantissas aligned to the same exponent, and the addition of the round addition value uniformly determined by the round precision, round mode and the computing result sign when the operation is the real mantissa subtraction which is a subtraction of the same sign or an addition of the different sign in the floating point data, shifting the above described computing result by 1 bit to normalize it when the computing result is denormalized number after the addition, subtraction of the above described first, second mantissas and the round addition values, inspecting a plurality of bits including the least significant bit determined by the type of the computation showing the real mantissa addition or the real mantissa subtraction and the round precision from the shifted computing results before or after the above described normalization, so as to judge - based on the bit pattern of the inspected bits - whether or not the above described normalized computing result down to the above described least significant bit to be determined by the round precision conforms with respect to the real mantissa addition or the real mantissa subtraction of the first mantissa and the second mantissa rounded into the given precision, whether the carry into the upper from the inspected bits conform, and only the inspected bits do not conform, whether or not the carry into the upper position from the inspected bits, the bits upper from the inspected bits do not conform, either, to effect, in accordance with the above described judgment results, whether the processing is completed, one portion or all the portions of the inspected bits of the above described normalized computation result is corrected so as to complete the processing, or the above described round addition value is added again with respect to the above described normalized computing result to complete the processing,

In accomplishing the objects of the invention, a multiplying method of the floating point data is provided, comprising the steps of dividing between the sum and the carry, obtaining the product by multiplying the respective mantissa portions of the multiplicand of the floating point data and the multiplier, adding, computing the sum and the carry, after the multiplication, and the round addition value to be determined uniformly by the round precision, the round mode and the signs of the multiplicand and the multiplier, shifting, normalizing the operation by 1 bit when the operation results are the non-normalized numbers after the operation inspecting a plurality of bits including the least significant bits to be determined by the round precision from among the operation results normalized after the normalization so as to judge based on the bit pattern of the inspected bits whether or not up to the least significant bit fixed by the round precision from among the normalized operation results conforms with respect to the product of the mantissa of the multiplicand rounded to the given precision and the product of the mantissa of the multiplier, whether the carry to the upper from the inspected bit conforms, but the inspected bit only does not conform, whether the carry to the upper position from the inspected bit does not conform, the upper bit from the inspected bit does not, either, so as to effect whether or not the processing is completed in accordance with the judging results, whether or not one portion or all the portions of the bits inspected with respect to the above described normalized operation results are corrected to complete the processing, the round addition values are added again with respect to the normalized operation results to complete the processing.

In accomplishing the object of the invention, a multiplying apparatus of floating point data is provided comprising a multiplicand retaining means for retaining the mantissa portions of the multiplicand of the floating point type, a multiplier retaining means for retaining the mantissa portion of the multiplier of the floating point type, a mantissa multiplying means for outputting where at least one input bit width from two inputs is shorter than the length of the mantissa portion of the multiplicand and the multiplier so as to output the sum and the carry of the bit width at least twice as much as the input with respect to the input, a partial multiplicand selecting means for dividing the most significant bit of the mantissa portion of the multiplicand through the least significant bit retained in the multiplicand retaining means into the partial mantissa portion of the bit width of the multiplicand input of the plurality of mantissa multiplying means when the bit width of the multiplicand input of the mantissa multiplying means is shorter than the length of the mantissa portion of the multiplicand, a partial multiplier selecting means for dividing the most significant bit of the mantissa portion of the multiplier retained in the multiplier retaining means through the least significant bit into the partial mantissa portion of the bit width of the multiplier input of the plurality of mantissa multiplying means when the bit width of the multiplier input of the mantissa multiplying means is shorter than the length of the mantissa portion of the multiplier so as to select, output one for each of the processing steps from among them, a round addition value generating means for generating the round addition value determined uniformly by the round precision, the round mode and the signs of the two floating point data, a mantissa adding means for effecting simultaneously the addition of the three of the sum output, the carry output of the mantissa multiplying means and the round addition value from the round addition value generating means at the first step of the processing so as to generate the first partial product, simultaneously the addition of the three of the sum output of the mantissa multiplying means, the carry output and the partial product generated and shifted at the step just before the step so as to generate the new partial product, a shift means for shifting in the least significant bit direction by the number of the bits determined in the position of the partial mantissa portion of the multiplier and the multiplicand multiplied in the mantissa multiplying means the partial product obtained from the mantissa adding means at the first or intermediate step of the processing, shifting the operation result, normalizing them when the operation results to be obtained from the mantissa adding means are the disnormalized numbers at the last step, a partial product retaining means for retaining as the input in the mantissa adding means of the next step the output of the shift means at the first or intermediate step of the processing, a operation result inspecting means for inspecting the respective bits of the shift overflow in the shift means in the first or intermediate step of the processing and a plurality of bits including the least significant bits determined by the round precision of the outputs of the shift means in the final step of the processing so as to judge by judging means - based on the bit pattern of the inspected bits - whether or not down to the least significant bit to be determined by the round precision in the output of the shift means in the final step of the processing conforms with respect to the product of the mantissa of the multiplicand rounded into the given precision and the mantissa of the above described multiplier, whether or not the carry to the upper from the inspected bit conforms, but the inspected bit only does not conform, whether or not the carry to the upper from the inspected bit, the bit upper than inspected bits does not conform, either, a round correcting means for correcting one portion or all the portions of the bit the operation result inspecting means inspected with respect to the output of the shift means, in the partial multiplicand selecting means and the partial multiplier selecting means, the portions of the mantissa portions of the multiplicand and the multiplier are selected in order from the lower and all the combinations are selected, and are input into the mantissa multiplying means, the sum of three, the sum output to be obtained in order, the carry output and the round addition value from the round addition value generating means or the value retained by the partial product retaining means are obtained by the mantissa adding means, the result is shifted by the shifting means, and accommodated again in the partial product retaining means or the final computation result is normalized by the shifting means, thereafter the processing is completed when the operation result inspecting means has judged to conform with respect to the mantissa of the product rounded to the given precision as far as the least significant bit to be fixed by the round precision out of the output of the shifting means, the partial or all the corrections of the output of the shift means by the above described round correcting means so as to complete the processing when the operation results inspecting means has judged that the carrying to the upper from the inspected bit conforms, but the inspected bit only does not conform, the round addition values are added so as to complete the processing by the round adding value generating means and the mantissa addition means with respect to the output of the shift means.

Preferred embodiments of the invention are described and claimed in the subclaims.

BRIEF DESCRIPTION OF THE DRAWING

These and other objects and features of the present invention will become apparent from the following description taken in conjunction with the preferred embodiment thereof with reference to the accompanying drawings, in which;

Fig. 1 is a block diagram of an addition subtraction apparatus of floating point data in a first embodiment;

Fig. 2 is a block diagram of an addition subtraction apparatus of floating point data.

Fig. 3 is a control relation chart of a round correction repeating control circuit 109 at rounding to latest even mode of the addition, subtraction apparatus of the floating point data in the first and second embodiments;

Fig. 4, Fig. 5, Fig. 6 are control relation charts of the round correction repeating control circuit 109 in the directed rounding toward plus mode or the directed rounding toward minus mode of the addition, subtraction apparatus of the floating point data in the first and second embodiments;

Fig. 7 is a control relation chart of the carry control apparatus 115 of the addition, subtraction of the floating point data in the second embodiment;

Fig. 8 is a processing flow chart of the conventional addition, subtraction apparatus of the floating point data and the addition, subtraction apparatus of the floating point data in the first and second embodiments;

Fig. 9 is an input, output relation chart of the round value generating circuit 106 of the addition, subtracting apparatus of the floating point data in the first embodiment;

Fig. 10 is the sign and operation relation chart of operation of the adder and the method of deciding the sign of the computing result of the addition, subtraction apparatus of the floating point data in the first and the second embodiments;

Fig. 11 is an illustrating chart showing the existence, absence of the round addition of the conventional addition, subtraction apparatus of the floating point data and the addition, subtraction apparatus of the floating point data in the first and second embodiment;

Fig. 12 is a principle chart of the carry generation at the round addition time at the rounding to nearest mode, the positive directed rounding toward plus mode and directed rounding toward minus mode of the addition, subtraction apparatus of the floating point data in the first and second embodiments;

Fig. 13 is an embodiment view of the addition, subtraction which becomes the principle of the addition, subtraction apparatus of the floating point data in the first and second embodiments;

Fig. 14 is a block diagram of the multiplying apparatus of the floating point data in an embodiment of the present invention;

Fig. 15 is an inner block diagram of the multiplicand upper, lower selecting circuit 212 and the multiplier upper, lower selecting circuit 213 in the embodiment;

Fig. 16 is an operation illustrating view of the round addition value generating circuit 217 in the embodiment;

Fig. 17 is a control relation chart of the mantissa correction control circuit 224 in the embodiment;

Fig. 18 is an operation flow chart of the single precision multiplication in the same embodiment;

Fig. 19 is an embodiment view of the addition and shift at the single precision multiplication time in the embodiment;

Fig. 20 is an operation flow chart of the double precision multiplication in the same embodiment;

Fig. 21 is an embodiment view of the addition and the shift at the double precision multiplication time in the embodiment;

Fig. 22 is a block diagram of a division apparatus of the floating point data.

Fig. 23 is an operation flow chart of the division in the same embodiment;

Fig. 24 is a block diagram of the addition, subtraction apparatus of the conventional floating point data;

Fig. 25 is a block diagram of the conventional multiplying apparatus of the floating point data;

Fig. 26 is an operation illustrating view of the round addition value generating circuit 267 in the conventional multiplying apparatus;

Fig. 27 is an operation flow chart of the single precision multiplication in the conventional multiplying apparatus, and

Fig. 28 is an operation flow chart of the double precision multiplication in the conventional multiplying apparatus.

<u>DETAILED DESCRIPTION OF THE INVENTION</u>

Before the description of the present invention proceeds, it is to be noted that like parts are designated by like reference numerals throughout the accompanying drawings.

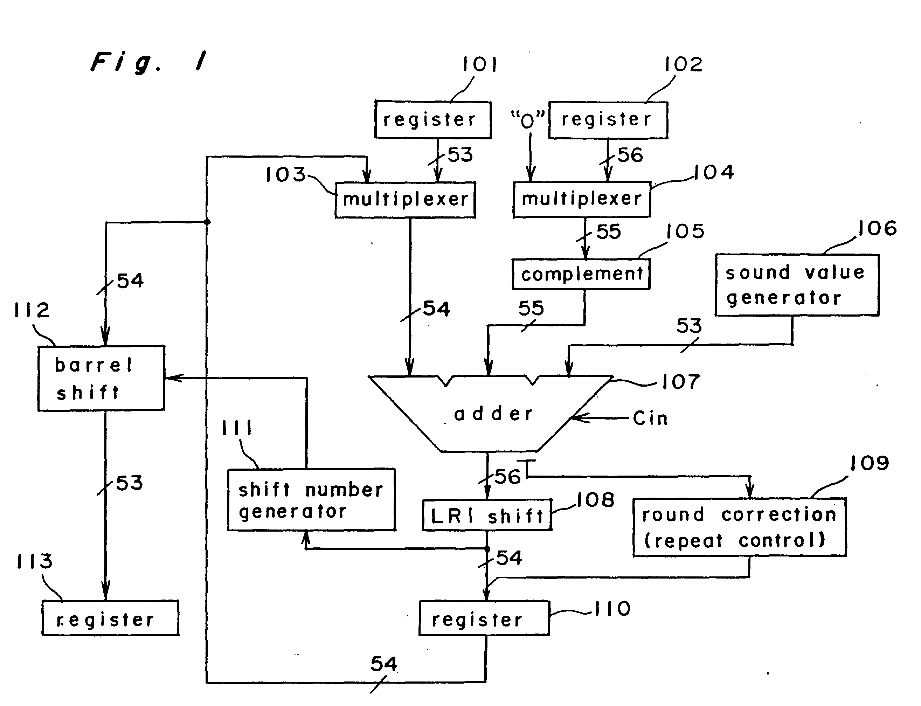

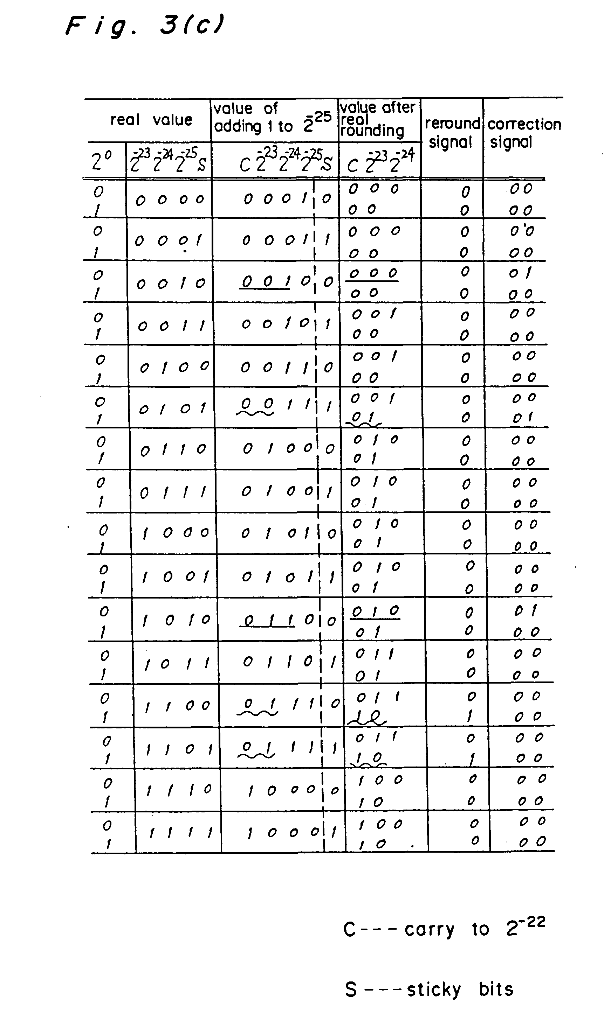

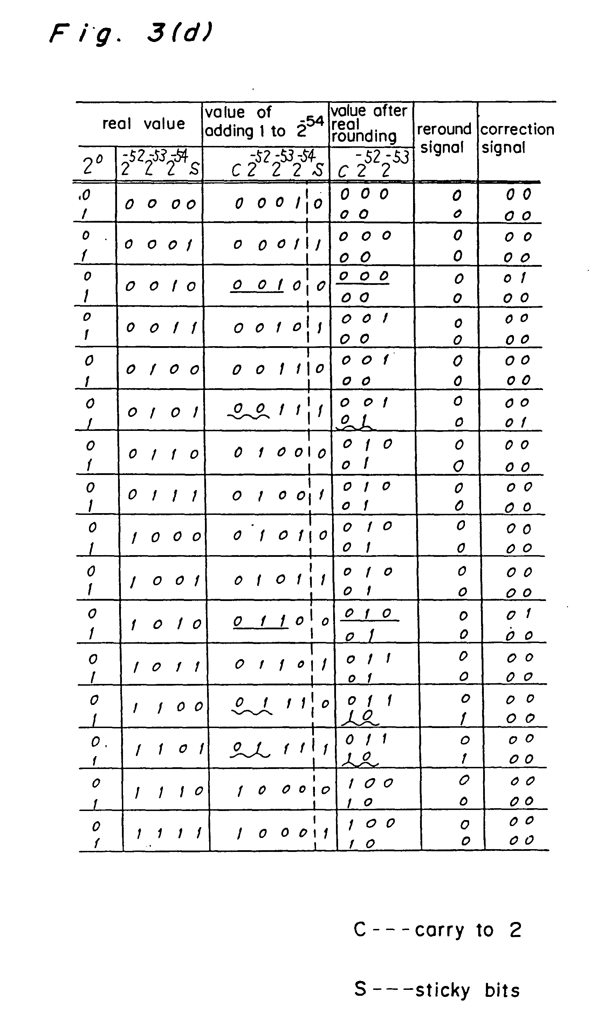

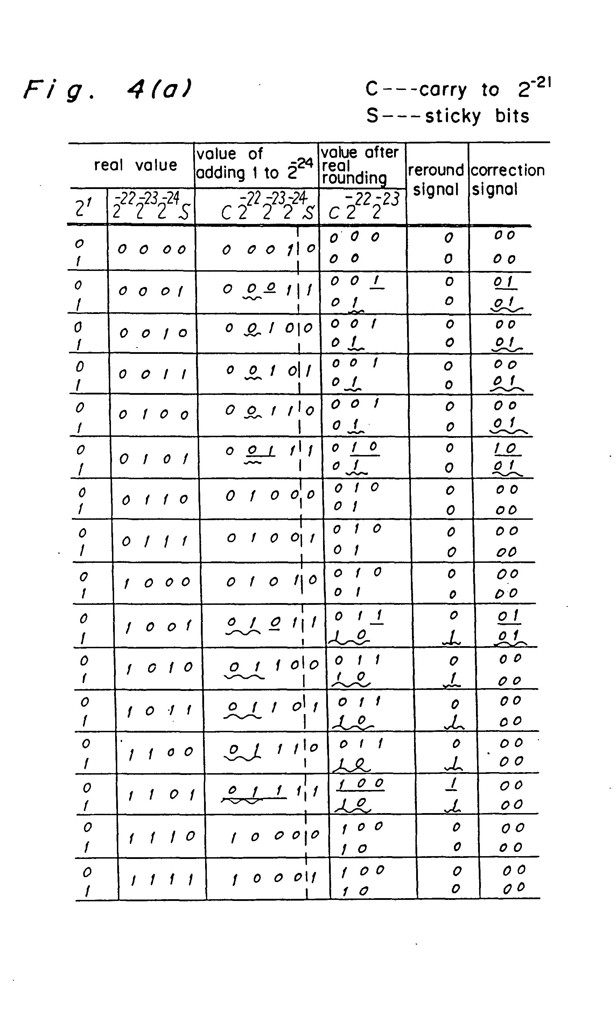

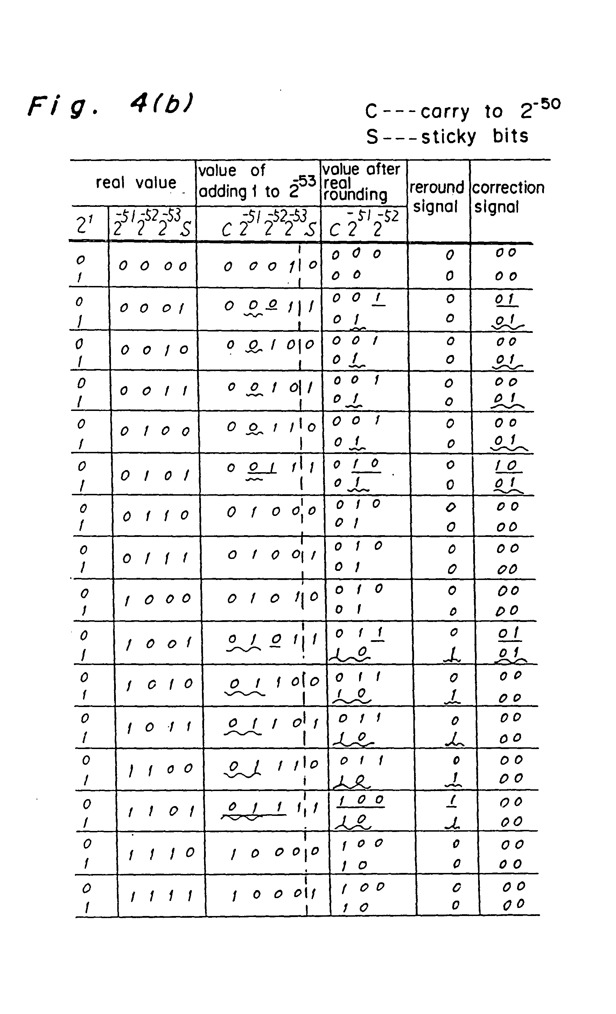

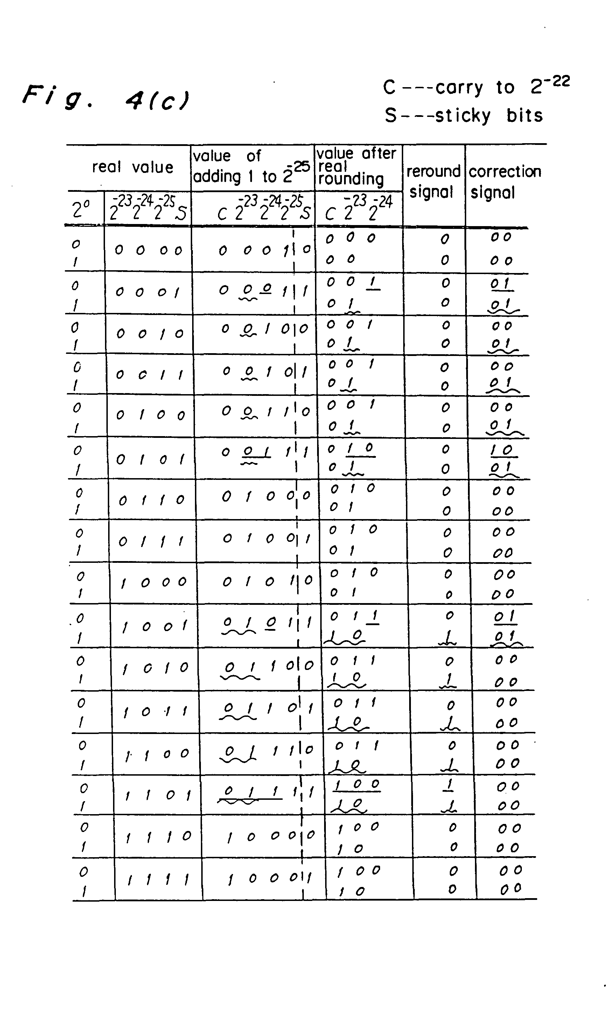

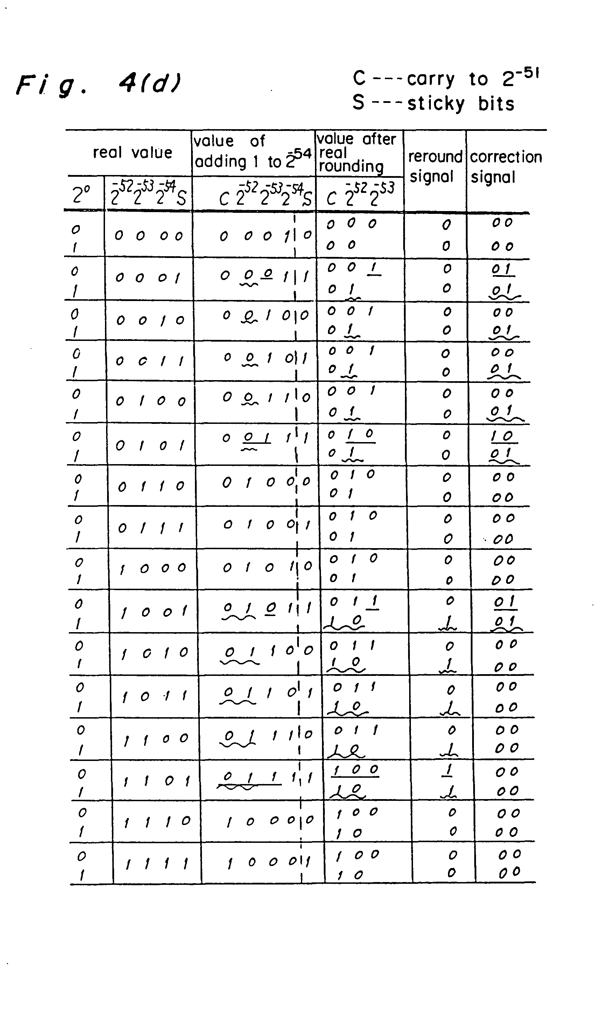

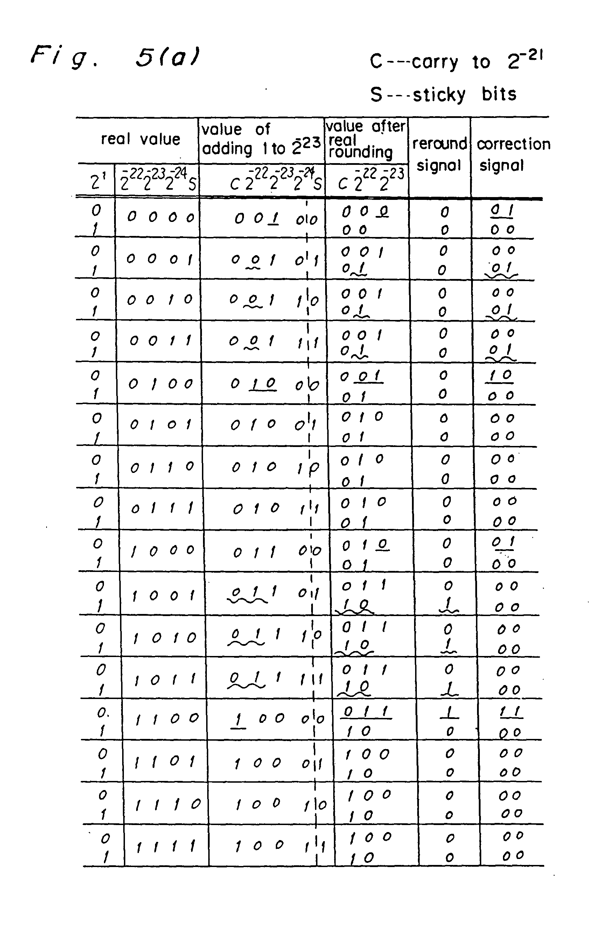

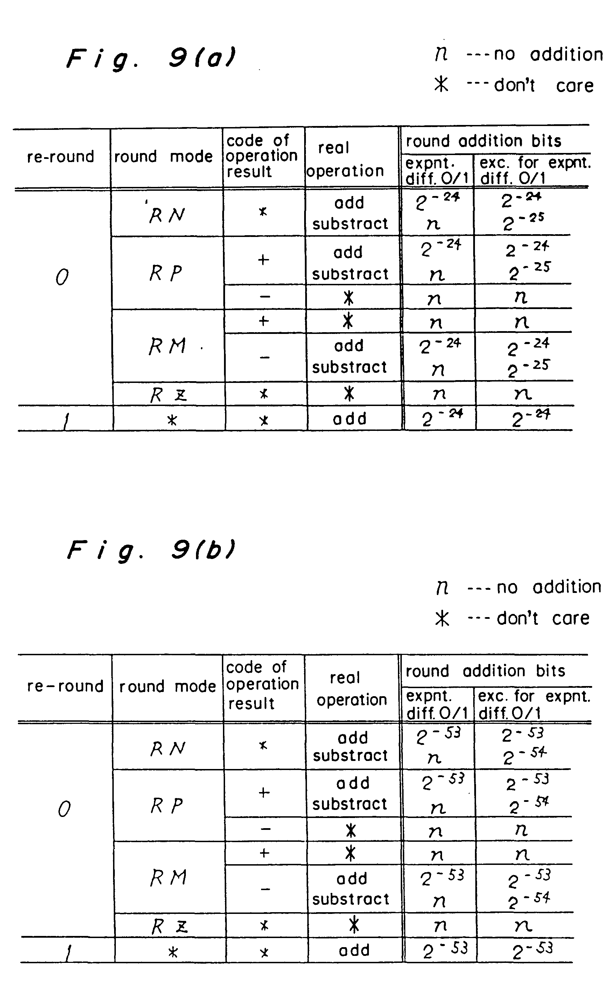

Fig. 1 shows a block diagram of the addition, subtraction apparatus of the floating point data in a first embodiment of the present invention. In Fig. 1, reference numeral 101 is a register for accommodating a mantissa which is not smaller in exponent out of two floating point data, reference numeral 102 is a register for accommodating the mantissa, smaller in the exponent, aligned to exponent not smaller from two floating point data, reference numeral 103 is a multiplexor for selecting the register 110 to be described later when the round correction repeating control circuit 109 to be described later has instructed the insertion of the new processing step and the register 101 at the normal computing time except for above, reference numeral 104 is a multiplexor for selecting the constant 0 when the round correction repeating control circuit 109 to be described later has instructed the insertion of the new processing step and the register 102 at the normal computing time except for above, reference numeral 105 is a complementer for taking 1's complement of the output of the multiplexor 104 at the subtracting time, reference numeral 106 is a round value generating circuit for deciding the position of the round addition in accordance with the exponent difference of the two floating point data, the operation type and the round mode so as to generate the data with the round added bit being 1 and the other bits being 0, reference numeral 107 is an adder which is adapted to simultaneously execute the temporary round and operation by the addition of the output of the multiplexor 103, the output of the complementer 105 and the output of the round value generating circuit 106 with the carry input (Cin) being 0 at the addition time, the carry input (Cin) being 1 at the subtraction operation time, reference numeral 108 is a LR1 shifter which shifts by 1 bit the output of the adder 107 in the least significant bit direction (hereinafter referred to as right) when the bit having the weight of $2^1$ of the output of the adder 107 is 1, shifts by 1 bit the output of the adder 107 in the most significant bit direction (hereinafter referred to as left) when the bit having the weight of $2^1$ and the bit having the weight of $2^0$ are both 0, and at the time except for them, outputs the output, as it is, of the adder 107, reference numeral 109 is a round correction repeating control circuit which judges whether or not the round effected by the adder 107 is correct and instructs the accommodation of the corrected value in the register 110 to be described later and the completion of the processing, when the correct round result may be obtained only by the correction of the least significant bit or the least significant bit and one upper bit, and instructs the insertion of the processing when the readdition of the round value is required to be effected so as to obtain the correct round results, reference numeral 110 is a register for accommodating the output of the LR1 shifter 108, reference numeral 111 is a shift number generating circuit for generating the shift number for normalizing the value retained in the register 110, reference numeral 112 is a barrel shifter which is adapted to effect an shifting operation by bit number the shift number generating circuit 111 shows with respect to the output of the register 110 for the normalization, reference numeral 113 is a register for accommodating the output of the barrel shifter 112. Fig. 3 is a control relation chart of the round correction repetitive control circuit 109 shown in Fig. 1 when the round mode is the rounding to nearest even mode. When the addition of the two floating point data of the same sign or the subtraction of two floating point data of the different sign (hereinafter referred to as mantissa addition) are effected, with the round precision being the single precision, the requirement of the bit correction of the output of the adder 107 and the requirement of the readdition of the round addition value are determined from the bits having the weights of $2^1$, $2^{-22}$, $2^{-23}$, $2^{-24}$ of outputs of the adder 107 and the sticky bit S which is the logical or of the bits of the bits having the weight of $2^{-25}$, or lower as shown in Fig. 3 (a). The requirement of the bit correction of the output of the adder 107 and the requirement of the readdition of the round addition value are determined from bits having the weights of $2^1$, $2^{-51}$. $2^{-52}$, $2^{-53}$ of the output of the adder 107 and the sticky bit S which is the logical OR of the bits, having the weight of $2^{-54}$, or lower as shown in Fig. 3 (b) when the mantissa addition is carried out and the round precision are the double precision. The requirement of the bit correction of the output of the adder 107 and the requirement of the readdition of the round addition value are determined from bits having the weights of $2^0$, $2^{-23}$, $2^{-24}$, $2^{-25}$ of the output of the adder 107, and the sticky bit S which is the logical OR of bits, having the weight of $2^{-26}$, or lower as shown in Fig. 3, (c) when the subtraction of two floating point data of the same sign or the addition of two floating point data of the different sign (hereinafter referred to as mantissa subtraction) are carried out, with the rounding precision being the single precision. The requirement of the bit correction of the output of the adder 107 and the requirement of the readdition of the round addition value are determined from bits having the weights of $2^0$, $2^{-52}$, $2^{-53}$, $2^{-54}$ of the adder 107 and the sticky bit S which is the logical or of the bits, having the weight of $2^{-55}$, or lower as shown in Fig. 3 (d) when the mantissa subtraction is executed, with the round precision being the double precision. Fig. 4 is a control relation chart of a round correction repetition control circuit 109 shown in Fig. 1 when the round mode is the directed rounding toward plus mode, with the sign of the computation result being positive. When the mantissa addition is executed, with the round precision being the single precision, the requirement of the bit correction of the output of the adder 107 and the requirement of the readdition of the round addition value are determined from the bits having the weights of $2^1$, $2^{-22}$, $2^{-23}$, $2^{-24}$ of output of the adder 107 and the sticky bit S which is the logical or of the bit of the bits, having the weight $2^{-25}$, or lower as shown in Fig. 4 (a). The requirement of the bit correction of the output of the adder 107 and the requirement of the readdition of the round addition value are determined from bits having the weights of $2^1$, $2^{-51}$, $2^{-52}$, $2^{-53}$ of the output of the adder 107 and the sticky bit S which is the logical or of the bits, having the weight of $2^{-54}$, or lower as shown in Fig. 4 (b) when the mantissa addition is carried out and the round precision is the double precision. The requirement of the bit correction of the output of the adder 107 and the requirement of the readdition of the round addition value are determined from bits having the weights of $2^0$, $2^{-23}$, $2^{-24}$, $2^{-25}$ of the output of the adder 107, and the sticky bit S which is the logical or of the bits, having the weight of $2^{-26}$, or lower as shown in Fig. 4, (c) when the mantissa subtraction) is executed, with the round precision being the single precision. The requirement of the bit correction of the output of the adder 107 and the requirement of the readdition of the round addition value are determined from bits having the weights of $2^0$, $2^{-52}$, $2^{-53}$, $2^{-54}$ of the output of the adder 107 and the sticky bit S which is the logical or of the bits, having the weight of $2^{-55}$, or lower as shown in Fig. 4 (d) when the mantissa subtraction is executed, with the round precision being the double precision. Fig. 9 is an input, output relation chart of a round value generating circuit 106 shown in Fig. 1, and determines the round addition value in accordance with the round mode, the sign of the computation result, the type of the operation, whether or not the step is round readdition. The round value generating circuit 106 generates the round addition value with the value of the weight bit the round addition bit shows being 1, with the others being 0 in accordance with Fig. 9 (a) when the round precision is the single precision, and Fig. 9 (b) when the round precision is the double precision.

The addition, subtraction apparatus of the floating point data in the present embodiment constructed as described hereinabove will be described in its principle. Here a case where the round precision is the single precision is shown by way of example, with the double precision being based on the same thinking way.

Assume that the mantissa portions of the augend, minuend and the addend, subtrahend are f1, f2 and the exponent portions of the augend, minuend and the addend, subtrahend are e1, e2 (wherein $e1 \leq e2$), and the mantissa portion A of the sum at the mantissa addition time is expressed by

$$A = f1 + 2^{-(e1-e2)}f2$$

When the range of the value of the normalized mantissa

$$2^0 \leq f1 \leq 2^1-2^{-23} \qquad 2^0 \leq f2 \leq 2^1-2^{-23}$$

is considered,

$$2^0 \leq A \leq 2^1-2^{-23}+2^1-2^{-23}=2^2-2^{-22}$$

$$2^0 \leq A < 2^1+2^0+2^{-1}+ .... + 2^{-22}$$

$$1. 0_{(2)} < A < 11. 1111 .... 11_{(2)}$$

The shift number necessary for the normalization after the mantissa addition becomes 1 bit to right even at the greatest. $_{(2)}$ shows the binary digit expression in numerical value. Also, the mantissa portion A of the difference at the mantissa subtraction time is shown by

$$A = f1 - 2^{-(e1-e2)}f2$$

Here by the value of e1 - e2,

(1) time of e1 - e2 = 0

$$0 \leq A \leq 2^1-2^{-23}=2^0+2^{-1} + .... +2^{-22} +2^{-23}$$

$$0 \leq A \leq 1.1111 ....11_{(2)}$$

The shift number necessary for the normalization after the mantissa subtraction becomes 0 bit at the minimum and 23 bits to left at the maximum.
(2) time of e1 - e2 = 1

$$2^0-2^{-1}\text{x} (2^1 - 2^{-23}) \leq A \leq 2^1-2^{-23}-2^{-1}\text{x}2^0.$$

$$0.000...001_{(2)} \leq A \leq 1.01111...111_{(2)}$$

The shift number necessary for the normalization after the mantissa subtraction becomes 0 bit at the minimum and 24 bits to left at maximum.
(3) time of e1 - e2 = 2

$$2^0 - 2^{-2} \text{x} (2^1-2^{-23}) \leq A \leq 2^1-2^{-23}-2^{-2}\text{x}2^0$$

$$0.100....001_{(2)} \leq A \leq 1.10111....111_{(2)}$$

The shift number necessary for normalization after the mantissa subtraction becomes 1 bit to left at maximum.

(4) time of e1 - e2 = 3

$$2^0 - 2^{-3} \times (2^1 - 2^{-23}) \leq A \leq 2^1 - 2^{-23} - 2^{-3} \times 2^0$$

$$0.110....001_{(2)} \leq A \leq 1.11011...111_{(2)}$$

The shift number necessary for normalization after the mantissa subtraction becomes 1 bit to left at maximum. Likewise, as at the time of e1 - e2≥4, the shift number necessary for normalization after the mantissa subtraction becomes 1 bit to left at maximum, at the e1 - e222 the shift number necessary for normalization after the mantissa subtraction becomes 1 bit to left even at maximum.

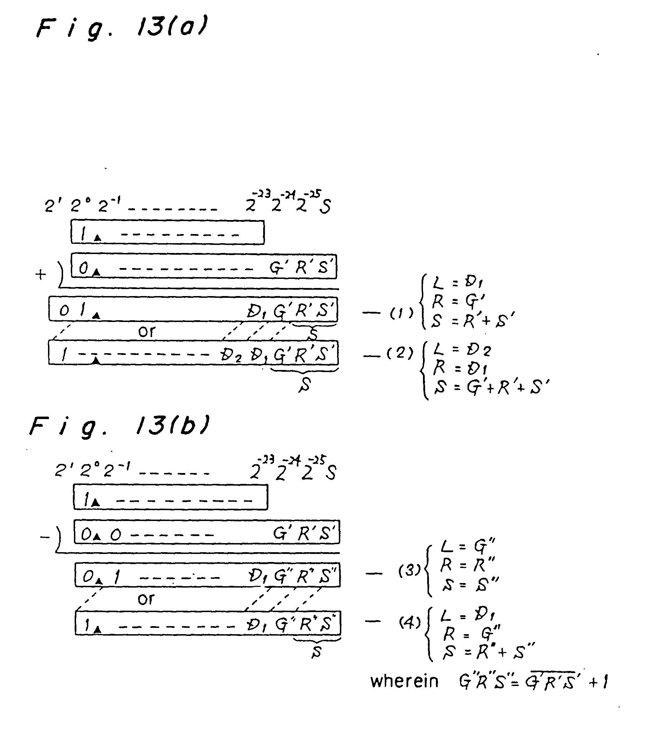

By the above described fact, at the time of mantissa addition or at the time of mantissa subtraction except for exponent differences 0, 1, the shift of 2 bits or more after the mantissa computation is not necessary. At the former time, the result in the bit having the weight of $2^{-22}$ or the bit having the weight of $2^{-23}$ before the normalization becomes the least significant bit (L). At the latter time, the result in the bit having the weight of $2^{-23}$ or the bit having the weight of $2^{-24}$ becomes the least significant bit (L). Accordingly, simultaneously with the addition, subtraction at the time of the mantissa addition or at the time of the mantissa subtraction except for the exponent difference 0, 1, the rounding is effected at the positions of these bits, and thereafter 1 bit normalized shift operation has only to be effected to right or to left. Only at the time of the mantissa subtraction of 0 or 1 in the exponent difference, the shift of 2 bit or more after the computation are necessary. At the time of the exponent difference 0, the alignment shift operation is not effected before the computation, so that the effective value is not provided lower than the least significant bit and the rounding is not necessary. At the time of the exponent difference 1, the alignment shift number before the computation is 1 bit, so that the effective value is provided only at 1 bit lower (round bit R) of the least significant bit. If the bit having the weight $2^0$ is 1, the shift for normalization is unnecessary, but the rounding only is required. If the bit having the weight of $2^0$ is 0, the round bit is moved into the least significant bit or the upper than it by the shift for the normalization, so that the rounding is not necessary after the normalization. Therefore, when the exponent difference is at 0 or 1, the mantissa subtraction, the shift for normalization or rounding has only to be effected at most after the computation. The position of the least significant bit (L) at the mantissa addition time is shown in Fig. 13 (a), the position of the least significant bit (L) at the mantissa subtraction time except for the exponent difference 0, 1 is shown in Fig. 13 (b).

A principle for realizing the rounding to nearest to even is shown hereinafter. In order to make the value be rounded to the nearest value, the existence of the addition to the least significant bit is determined by whether the bit to be added, namely, the bit (round bit R) smaller by 1 of the least significant bit (L) is 1 or 0. When the round bit is 0, the data before being rounded and the data after being rounded are the same. When the round bit is 1, 1 is to be added to the least significant bit. The round addition is automatically realized by the addition of 1 to the round bit, because the carry from the round bit works as the value added to the least significant bit. As the bits smaller than the round bit are not judged in this method, the rounding operation may be effected to the larger one by the rounding addition even when the round bit is 1 and the bits smaller than it are 0, namely the value is tie. But the ANSI/IEEE Standard for Binary Floating-Point Arithmetic P754 stipulates, the tie value to be rounded to the even number. As shown in the column of RN of Fig. 11, even if the round bit is 1 when the sticky bit showing the portion smaller than the round bit is 0, which is a tie value, the value is rounded so that least significant bit may be normally even in number. More concretely, when the least significant bit is 1, the rounding addition is effected. When the least significant bit is 0, the round addition is not effected.

Here, the noteworthy fact is the carry propagation to the least significant bit when the rounding addition has been effected to the round bit. When the round bit is 1, the round bit becomes 0 by the rounding addition and the carry generated by the rounding addition is added to the least significant bit. When the least significant bit is 1, the carry is propagated to the upper bit as shown in Fig. 12 (a). When the least significant bit is 0, the carry is not propagated, thus resulting in 1 in the least significant bit as shown in Fig. 12 (b). When the round bit and the sticky bit are both 0 after the addition has been effected unconditionally upon the round bit the tie value which is 1 in the round bit and 0 in the sticky bit may be exactly rounded to the even number by the correction of the least significant bit to 0. Namely, if the position of the round bit is determined before the operation, the rounding and the computation may be executed at the same time.

1 is temporarily added to the bit having the weight $2^{-24}$ at the mantissa addition time and 1 is temporarily added to the bit having the weight of the $2^{-25}$ at the subtraction time except for 0, 1 in the exponent difference and the operation is effected. Thereafter, the real round bit is determined by the bits having the weight of $2^1$ and $2^0$ of the operation result so as to realize the round by the correction of the round results temporarily effected. By the bits having the weights of $2^{-22}$, $2^{-23}$, $2^{-24}$ of the result temporarily round added, and 1 bit which is the logical or of bits smaller than them at the mantissa addition time, the bits having the weights of $2^{-23}$, $2^{-24}$, $2^{-25}$ of the result temporarily round added, and 1 bit which is the logical or of bits smaller than them at the mantissa subtraction, the following are judged,

a the case the correct result is obtained
b the case the correct result is obtained by the correction of the bit having the weight of $2^{-22}$ or $2^{-23}$
c the case the correct result is not obtained only in the correction of the bit having the weight of $2^{-22}$ or $2^{-23}$ In the case of b, the bit is corrected. In the case of c, the same rounding is added again, the correct computing result is obtained.

The adding, subtraction apparatus of the floating point data in the present embodiment composed as described hereinabove will be described hereinafter in its operation. The description is divided in the sequence of the rounding to nearest even mode, the directed rounding toward plus mode and the directed rounding toward minus mode, the directed rounding toward zero mode. Further, the round precision is divided in the single precision and the double precision in each of the modes.

1. Rounding to Nearest Even Mode

1-1 when the augend, minuend and the addend, subtrahend are the single precision format, and the sum or the difference is rounded into single precision

(1) Before Processing Step Start

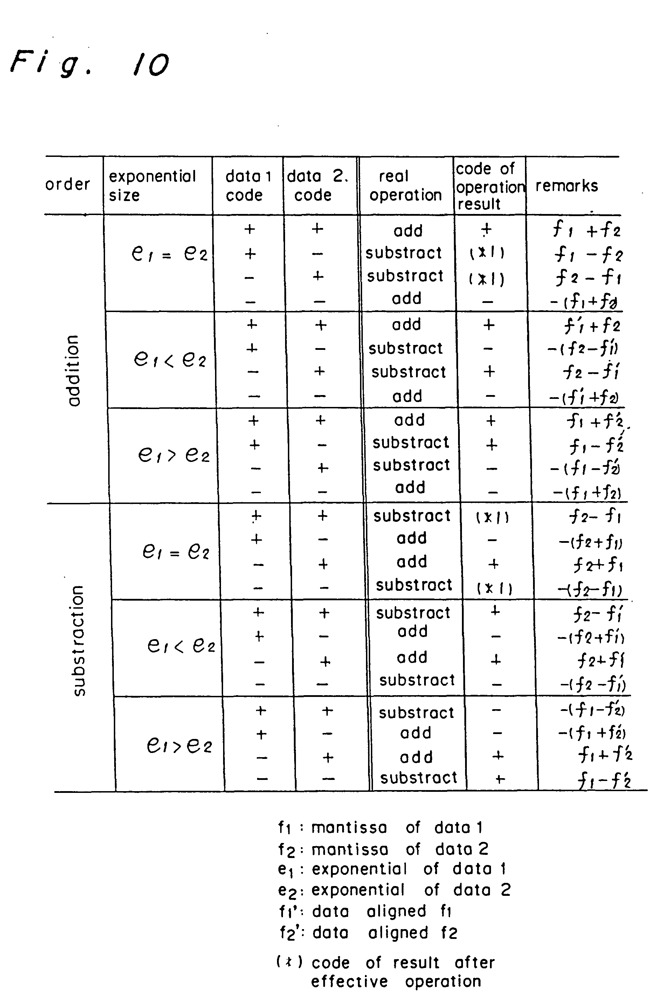

In accordance with the exponents and the signs of two floating point data and whether the instruction is the addition or the subtraction, the type of the operation of the mantissa addition or the mantissa subtraction and the sign of the computation result are determined as shown in the sign and operation relation chart of Fig. 10. The mantissa which is not smaller in exponent from the augend, minuend and the addend, subtrahend is accommodated in the register 101. The mantissa which is smaller in exponent from the augend, minuend and the addend, subtrahend is aligned to the exponent which is not small, is accommodated in the register 102. The bits which are spilt at the alignment are accommodated in the register 102 together as the round bit (R) having the weight of the $2^{-24}$ at a bit which is lower by 1 bit of the least significant bit (L) and the sticky bit (S) which is the logical or of the bits, having the weight of $2^{-25}$, or lower.

(2) Step 1

. Mantissa addition time

The output of the register 101 is selected by the multiplexor 103, and the output of the register 102 is selected by the multiplexor 104. In the round value generating circuit 106, the data with the bit having the weight of $2^{-24}$ being 1, the other bits being made 0 are generated. The complementer 105 outputs the multiplexor 104 output as it is, and the adder 107 executes (register 1) + (register 2) + (round addition value) with the Cin being made 0. When the bit having the weight of $2^1$ of the output of the adder 107 is 1, the LR1 shifter 108 effects 1 bit shift to the right. In accordance with the instruction of the round correction repetitive control circuit 109, by the bits having the weight of $2^{-25}$ of the output of the adder 107 and the S bit, the output of the LR1 shifter 108 is accommodated in the register 110 with the bit having the weight of the $2^{-23}$ inverted when the correction signal shown in Fig. 3 (a) is 01, and without correction when the correction signal is 00. When the rerounding signal of the round correction repetitive control circuit 109 is 1, the insertion of the new step for executing the readdition of the round value is instructed. But when the rerounding signal is 0, this step completes the computing operation with the rounding operation being effected in accordance with the round precision.

· Mantissa subtraction time except for the exponent difference 0, 1

The output of the register 101 is selected by the multiplexor 103, and the output of the register 102 is selected by the multiplexor 104. In the round value generating circuit 106, the data with the bit having the weight of $2^{-25}$ being 1, the other bits being made 0 are generated. The complementer 105 inverts the output of the multiplexor 104 to input them into the adder 107, and the adder 107 executes (register 1) - (register 2) + (round addition value) with the Cin being made 1. When the bit having the weight of $2^0$ of the output of the adder 107 is 0, the LR1 shifter 108 effects 1 bit shift to the left. 1 bit (S) which is the logical or of bits, having the weight of $2^{-26}$ of the output of the adder 107, or lower, is generated. In accordance with the instruction of the round correction repetitive control circuit 109 by the bits having the weights of the $2^0$, $2^{-23}$, $2^{-24}$, $2^{-25}$ of the output of the adder 107 and the S bit, the output of the LR1 shifter 108 is accommodated in the register 110 with the bit having the weight of the $2^{-23}$ inverted when the correction signal shown in Fig. 3(c) is 01 without correction when the correction signal is 00. When the correction signal is 00, the output of the LR1 shifter 108 is accommodated as it is into the register 110. When the rerounding signal of the round correction repetitive control circuit 109 is 1, the insertion of the new step for executing the readdition of the round value is instructed. But when the rerounding signal is 0, this step completes the computing operation with the rounding operation being effected in accordance with the round precision.

· Mantissa subtraction time with the exponent difference 0, 1

The output of the register 101 is selected by the multiplexor 103, and the output of the register 102 is selected by the multiplexor 104. In the round value generating circuit 106, the data with all the bits being made 0 are generated. The complementer 105 inverts the output of the multiplexor 104 so as to input them to the adder 107, and the adder 107 executes (register 1) - (register 2) with the Cin being made 1. When the bit having the weight of $2^0$ of the output of the adder 107 is 0, the LR1 shifter 108, effects 1 bit shift to the left. In the round correction competitive control circuit 109, the insertion of the step insertion for rounding is instructed when the three bits having the weights of the $2^0$, $2^{-23}$, $2^{-24}$ of the output of the adder 107 are 1 respectively. In the shift number generating circuit 111, the shift number necessary for normalizing the output of the LR1 shifter 108 is generated. The insertion of the step for normalization is instructed when the shift number is not 0. When the insertion of the step for rounding and the insertion of the step for normalization are not caused respectively, the computation is completed by this step.

(3) Insertion Step (only when the insertion of the step is instructed)

. Mantissa addition time

The output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-24}$ generated by the round value generating circuit 106 of the step 1, being 1 , the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

· Mantissa subtraction time except for exponent difference 0, 1

The output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-25}$ generated by the round value generating circuit 106 of the step 1, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

· Mantissa subtraction time with the exponent difference 0, 1

When the insertion of the step for the normalization has been instructed by the shift number generating circuit 111, the barrel shifter 112 inputs the register 110, shifts to left by the shift number generated by the shift number generating circuit 111 so as to accommodate in the register 113 for completing the processing.

When the insertion of the step for rounding has been instructed by the round correction repetitive control circuit 109, the output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-23}$ generated by the round value generating circuit 106, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

1-2 When the augend, minuend and the addend, subtrahend are the double precision format, and the sum or the difference is rounded into double precision

(1) Before Processing Step Start

In accordance with the exponents and other signs of the two floating point data and whether the instruction is addition or subtraction, the type of the operation of the mantissa addition or the mantissa subtraction and the sign of the computation result are determined as shown in the sign and operation relation chart of Fig. 10. The mantissa which is not smaller in exponent from the augend, minuend and the addend, subtrahend is accommodated in the register 101. The mantissa which is smaller in exponent from the augend, minuend and the addend, subtrahend is aligned to the exponent which is not small, is accommodated in the register 102. The bits which are spilt at the alignment are accommodated in the register 102 together as the round bit (R) having the weight of the $2^{-53}$ at a bit which is lower by 1 bit of the least significant bit (L) and the sticky bit (S) which is the logical or of the bits, having the weight of $2^{-54}$, or lower.

(2) Step 1

· Mantissa addition time

The output of the register 101 is selected by the multiplexor 103, and the output of the register 102 is selected by the multiplexor 104. In the round value generating circuit 106, the data with the bit having the weight of $2^{-53}$ being 1, the other bits being made 0 are generated. The complementer 105 the outputs the multiplexor 104 output as it is, and the adder 107 executes (register 1) + (register 2) + (round addition value) with the Cin being made 0. When the bit having the weight of $2^1$ of the output of the adder 107 is 1, the LR1 shifter 108 effects 1 bit shift to the right. 1 bit (S) which is the logical or of bits, having the weight of $2^{-54}$ of the output of the adder 107 is generated. In accordance with the instruction of the round correction repetitive control circuit 109 by the bits having the weights of $2^1$, $2^{-51}$, $2^{-52}$, $2^{-53}$ of the outputs of the adder 107 and the S bit, the output of the LR1 shifter 108 is accommodated in the register 100 with the bit having the weight of the $2^{-52}$ inverted when the correction signal shown in Fig. 3(b) is 01, without correction when the correction signal is 00. When the rerounding signal of the round correction repetitive control circuit 109 is 1, the insertion of the new step for executing the readdition of the round value is instructed. But when the rerounding signal is 0, this step completes the computing operation with the rounding operation being effected in accordance with the round precision.

· Mantissa subtraction time except for the exponent difference 0, 1

The output of the register 101 is selected by the multiplexor 103, and the output of the register 102 is selected by the multiplexor 104. In the round value generating circuit 106, the data with the bit having the weight of $2^{-54}$ being 1, the other bits being made 0 are generated. The complementer 105 inverts the output of the multiplexor 104 to input them into adder 107, and executes the (register 1) - (register 2) + (round addition value) with the Cin being made 1. When the bit having the weight of $2^0$ of the output of the adder 107 is 0, the LR1 shifter 108 effects 1 bit shift to the left. 1 bit (S) which is the logical or of bits, having the weight of $2^{-55}$ of the output of the adder 107, or lower, is generated. In accordance with the instruction of the round correction repetitive control circuit 109, by the bits having the weights of $2^0$, $2^{-52}$, $2^{-53}$, $2^{-54}$ of the outputs of the adder 107 and the S bit, the output of the LR1 shifter 108 is accommodated in the register 110 with the bit having the weight of the $2^{-52}$ inverted when the correction signal shown in Fig. 3 (d) is 01 without correction when the correction signal is 00. When the rerounding signal of the round correction repetitive control circuit 109 is 1, the insertion of the new step for executing the readdition of the round value is instructed. But when the reroundig signal is 0, this step completes the computing operation with the rounding operation being effected in accordance with the round precision.

· Mantissa subtraction time with the exponent difference 0, 1

The output of the register 101 is selected by the multiplexor 103, and the output of the register 102 is selected by the multiplexor 104. In the round value generating circuit 106, the data with all the bits being made 0 are generated. The complementer 105 inverts the output of the multiplexor 104 so as to input them to the adder 107 and executes the (register 1) - (register 2) with the Cin being made 1. When the bit having the weight of $2^0$ of the output of the adder 107 is 0, the LR1 shifter 108 effects 1 bit shift to the left. In the round correction competitive control circuit 109, the insertion of the step for the rounding is instructed when the three bits having the weights of the $2^0$, $2^{-52}$, $2^{-53}$ of the output of the adder 107 are 1 respectively. In the shift number generating circuit 111, the shift number necessary for normalizing the output of the LR1 shifter 108 is generated. The insertion of the step for normalization is instructed when the shift number is not 0. When the insertion of the step for the rounding and the insertion of the step for normalization are not caused respectively, the computation is completed by this step.

(3) Insertion Step (only when the insertion of the step is instructed)

· Mantissa addition time

The output of the register 110 is selected by the multiplexor 103, the constant 0 is selected by the multiplexor 104. The output of the multiplexor 103, the output of the complementer 105 with the output of the multiplexor 104 being outputted as it is, the data with the bit, having the weight of $2^{-53}$ generated by the round value generating circuit 106 of the step 1, being 1, the other bits being 0 are added by the adder 107 is 1. When the bit having the weight of $2^1$ of the output of the adder 107, the LR1 shifter 108 effects 1 bit shift to right. When the bit having the weight of $2^1$ is 0, the value as it is is accommodated in the register 110 so as to complete the processing.

· Mantissa subtraction time except for exponent difference 0, 1

The output of the register 110 is selected by the multiplexor 103, the constant 0 is selected by the multiplexor 104. The output of the multiplexor 103, the output of the complementer 105 with the output of the multiplexor 104 being outputted as it is, the data with the bit, having the weight of $2^{-54}$ generated by the round value generating circuit 106 of the step 1 being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

· Mantissa subtraction time with the exponent difference 0, 1

When the insertion of the step for the normalization has been instructed by the shift number generating circuit 111, the barrel shifter 112 inputs the register 110, shifts to left by the shift number generated by the shift number generating circuit 111 so as to accommodate in the register 113 for completing the processing.

When the insertion of the step for rounding has been instructed by the round correction repetitive control circuit 109, the output of the register 110 is selected by the multiplexor 103, the constant 0 is selected by the multiplexor 104. The output of the multiplexor 103, the output of the complementer 105 with the output of the multiplexor 104 being outputted as it is, the data with the bit, having the weight of $2^{-52}$ generated by the round value generating circuit 106, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

2 Directed Rounding Toward Plus Mode And Directed Rounding Toward Minus Mode

2-1 when the augend, minuend and the addend, subtrahend are the single precision format, and the sum and the difference is rounded into single precision

(1) Before Processing Step Start

In accordance with the exponents and the signs of two floating point data and whether the instruction is addition or subtraction, the type of the operation of the mantissa addition or the mantissa subtraction and the signs of the computation result are determined as shown in the sign and operation relation chart of Fig. 10. When the sign of the computation result is negative in the directed rounding toward plus mode mode or the sign of the computation result is positive in the directed rounding toward minus mode, the operation is effected in accordance with the operation of the directed rounding toward zero mode to be described later. When the sign of the computation result is positive in the directed rounding toward plus mode when the sign of the computation result is negative in the directed rounding toward minus mode, the operation is effected as follows. The mantissa which is not smaller in exponent from the augend, minuend and the addend, subtrahend is accommodated in the register 101. The mantissa which is smaller in exponent from the augend, minuend and the addend, subtrahend, is aligned to the exponent that is not smaller, is accommodated in the register 102. The bits which are spilt at the alignment are together accommodated in the register 102 as the round bit (R) having the weight of $2^{-24}$ at a bit which is lower by 1 bit of the least significant bit (L), and as the sticky bit (S) which is the logical or of the bits, having the weight of $2^{-25}$, or lower.

(2) Step 1

· Mantissa addition time

The output of the register 101 is selected by the multiplexor 103, and the output of the register 102 is selected by the multiplexor 104. In the round value generating circuit 106, the data with the bit having the weight of $2^{-24}$ being 1, the others bit being made 0 are generated. The complementer 105 outputs the multiplexor 104 output as it is, and the adder 107 executes (register 1) + (register 2) + (round addition value) with the Cin being made 0. When the bit having the weight of $2^1$ of the output of the adder 107 is 1, the LR1 shifter 108 effects 1 bit shift to the right. 1 bit (S) which is the logical or of bits, having the weight of $2^{-25}$ of the output of the adder 107, or lower, is generated. In accordance with the instruction of correction repetitive control circuit 109 by the bits having the weights of the $2^1$, $2^{-22}$, $2^{-23}$, $2^{-24}$ of the output of the adder 107 and the S bit, the output of the LR1 shifter 108 is accommodated in the register 110 with the the bit having the weight of the $2^{-23}$ inverted when the correction signal shown in Fig. 4(a) is 01 with the bits having the weight $2^{-22}$, $2^{-23}$ of the output of the LR1 shifter 108 is inverted when correction signal is 10, and without correction when the correction signal is 00. When the rerounding signal of the round correction repetitive control circuit 109 is 1, the insertion of the new step for executing the readdition of the round value is instructed. But when the rerounding signal is 0, this step completes the computing operation with the rounding operation being effected in accordance with the round precision.

· Mantissa subtraction time except for the exponent difference 0, 1

The output of the register 101 is selected by the multiplexor 103, and the output of the register 102 is selected by the multiplexor 104. In the round value generating circuit 106, the data with the bit having the weight of $2^{-25}$ being 1, the other bits being made 0 are generated. The complementer 105 inverts the output of the multiplexor 104 so as to input them to the adder 107 and the adder 107 executes (register 1) - (register 2) + (round addition value) with the Cin being made 1. When the bit having the weight of $2^0$ of the output of the adder 107 is 0, the LR1 shifter 108 effects 1 bit shift to the left. 1 bit (S) which is the logical or of bits, having the weight of $2^{-26}$ of the output of the adder 107, or lower, is generated. In accordance with instruction of the round correction repetitive control circuit 109, by the bits having the weights of $2^0$, $2^{-23}$, $2^{-24}$, $2^{-25}$ of the output of the adder 107 and the S bit, the output of the LR1 shifter 108 is accommodated in the register 110 with the bit having the weight of the $2^{-23}$ inverted when the correction signal shown in Fig. 4 (c) is 01, the bits having the weights of $2^{-22}$ and $2^{-23}$ of the output of the LR1 shifter 108 inverted when the correction signal is 10 and without correction when the correction signal is 00. When the rerounding signal of the round correction repetitive control circuit 109 is 1, the insertion of the new step for executing the readdition of the round value is instructed. But when the rerounding signal is 0, this step completes the computing operation with the rounding operation being effected in accordance with the round precision.

. Mantissa subtraction time with the exponent difference 0, 1

The output of the register 101 is selected by the multiplexor 103, and the output of the register 102 is selected by the multiplexor 104. In the round value generating circuit 106, the data with all the bits being made 0 are generated. The complementer 105 inverts the output of the multiplexor 104 so as to input them to the adder 107, and the adder 107 executes (register 1) - (register 2) with the Cin being made 1. When the bit having the weight of $2^0$ of the output of the adder 107 is 0, the LR1 shifter 108 effects 1 bit shift to the left. In the round correction competitive control circuit 109, the insertion of the step insertion for rounding is instructed when the two bits having the weights of the $2^0$, $2^{-24}$ of the output of the adder 107 are 1 respectively. In the shift number generating circuit 111, the shift number necessary for normalizing the output of the LR1 shifter 108 is generated. The insertion of the step for normalization is instructed when the shift number is not 0. When the insertion of the step for rounding and the insertion of the step for normalization are not caused respectively, the computation is completed by this step.

(3) Insertion Step (only when the insertion of the step is instructed)

. Mantissa addition time

The output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-24}$ generated by the round value generating circuit 106 of the step 1, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

· Mantissa subtraction time except for exponent difference 0, 1

The output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-25}$ generated by the round value generating circuit 106 of the step 1, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

· Mantissa subtraction time with the exponent difference 0, 1

When the insertion of the step for the normalization has been instructed by the shift number generating circuit 111, the barrel shifter 112 inputs the register 110, shifts to left by the shift number generated by the shift number generating circuit 111 so as to accommodate in the register 113 for completing the processing.
When the insertion of the step for rounding has been instructed by the round correction repetitive control circuit 109, the output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-23}$ generated by the round value generating circuit 106, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

2-2 when the augend, minuend and the addend, subtrahend are the double precision format, and the sum or the difference is rounded into double precision

(1) Before Processing Step Start

In accordance with the exponents and the signs of two floating point data and whether the instruction is addition or subtraction, the type of the operation of the mantissa addition or the mantissa subtraction, and the sign of the computation result are determined as shown in the sign and operation relation chart of Fig. 10. When the sign of the computation result is negative in the directed rounding toward plus mode or the sign of the computation result is positive in the directed rounding toward minus mode the operation is effected in accordance with the operation of the directed rounding toward zero mode to be described later. When the sign of the computation result is positive in the directed rounding toward plus mode when the sign of the computation results is negative in the directed rounding toward minus mode the operation is effected as follows. The mantissa which is not smaller in exponent from the augend, minuend and the addend, subtrahend is accommodated in the register 101. The mantissa which is smaller in exponent from the augend, minuend and the addend, subtrahend, and is aligned to the exponent that is not smaller, is accommodated in the register 102. The bits which are spilit at the alignment setting time are together accommodated in the register 102 as the round bit (R) having the weight of $2^{-53}$ at a bit which is lower by 1 bit of the least significant bit (L), and as the sticky bit (S) which is the logical or of the bits, having the weight of $2^{-54}$, or lower.

(2) Step 1

· Mantissa addition time

The output of the register 101 is selected by the multiplexor 103, and the output of the register 102 is selected by the multiplexor 104. In the round value generating circuit 106, the data with the bit having the weight of $2^{-53}$ being 1, the other bits being made 0 are generated. The complementer 105 outputs the multiplexor 104 output as it is, and the adder 107 executes (register 1) + (register 2) + (round addition value) with the Cin being made 0. When the bit having the weight of $2^1$ of the output of the adder 107 is 1, the LR1 shifter 108 effects 1 bit shift to the right 1. 1 bit (S) which is the logical or of bits having the weight of $2^{-54}$ of the output of the adder 107, or lower is generated. In accordance with the instruction of the round correction repetitive control circuit 109 by the bits having the weights of the $2^1$, $2^{-51}$, $2^{-52}$, $2^{-53}$ of the output of the adder 107 and the S bit, the output of the LR1 shifter 108 is accomodated in the register 110 with the bit having the weight of the $2^{-52}$ inverted when the correction signal shown in Fig. 4 (b) is 01, with the bits having the weight $2^{-51}$, $2^{-52}$ of the output of the LR1 shifter 108 invrted when the correction signal is 01 and without correction when the correction signal is 00. When the rerounding signal of the round correction repetitive control circuit 109 is 1, the insertion of the new step for executing the readdition of the round value is instructed. But when the reround signal is 0, this step completes the computing operation with the rounding operation being effected in accordance with the round precision.

. Mantissa subtraction time except for the difference 0, 1

The output of the register 101 is selected by the multiplexor 103, and the output of the register 102 is selected by the multiplexor 104. In the round value generating circuit 106, the data with the bit having the weight of $2^{-54}$ being 1, the other bits being made 0 are generated. The complementer 105 inverts the output of the multiplexor 104 so as to input them to the adder 107 and the adder 107 executes (register 1) - (register 2) + (round addition value) with the Cin being made 1. When the bit having the weight of $2^0$ of the output of the adder 107 is 0, the LR1 shifter 108 effects 1 bit shift to the left. 1 bit (S) which is the logical or of bits having the weight of $2^{-55}$ of the output of the adder 107, or lower, is generated. In accordance with instruction of the round correction repetitive control circuit 109 by the bits having the weights of the $2^0$, $2^{-52}$, $2^{-53}$, $2^{-54}$ of the output of the adder 107 and the S bit, the output of the LR1 shifter 108 is accommodated in the register 110 with the bit having the weight of the $2^{-52}$ inverted when the correction signal shown in Fig. 4 (d) is 01, with the bits having the weights of $2^{-51}$ and $2^{-52}$ of the output of the LR1 shifter 108 inverted when the correction signal is 01, and without correction when the the correction signal is 00. When the rerounding signal of the round correction repetitive control circuit 109 is 1, the insertion of the new step for executing the readdition of the round value is instructed. But when the reround signal is 0, this step completes the computing operation with the rounding operation being effected in accordance with the round precision.

· Mantissa subtraction time with the exponent difference 0, 1

The output of the register 101 is selected by the multiplexor 103, and the output of the register 102 is selected by the multiplexor 104. In the round value generating circuit 106, the data with all the bits being made 0 are generated. The complementer 105 inverts the output of the multiplexor 104 so as to input them to the adder 107, and the adder 107 executes (register 1) - (register 2) with the Cin being made 1. When the bit having the weight of $2^0$ of the output of the adder 107 is 0, the LR1 shifter 108 effects 1 bit shift to the left. In the round correction competitive control circuit 109, the insertion of the step for the rounding is instructed when the two bits having the weights of the $2^0$, $2^{-53}$ of the output of the adder 107 are 1 respectively. In the shift number generating circuit 111, the shift number necessary for normalizing the output of the LR1 shifter 108 is generated. The insertion of the step for normalization is instructed when the shift number is not 0. When the insertion of the step for the rounding and the insertion of the step for normalization are not caused respectively, the computation is completed by this step.

(3) Insertion Step (only when the insertion of the step is instructed)

· Mantissa addition time

The output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-53}$ generated by the round value generating circuit 106 of the step 1, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

· Mantissa subtraction time except for exponent difference 0, 1

The output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-54}$ generated by the round value generating circuit 106 of the step 1, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

. Mantissa subtraction time with the exponent difference 0, 1

When the insertion of the step for the normalization has been instructed by the shift number generating circuit 111, the barrel shifter 112 inputs the register 110, shifts to left by the shift number generated by the shift number generating circuit 111 so as to accommodate in the register 113 for completing the processing.
When the insertion of the step for rounding has been instructed by the round correction repetitive control circuit 109, the output of the register 110 is selected by the multiplexor 103, the constant 0 is selected by the multiplexor 104. The output of the multiplexor 103, the output of the complementer 105 with the output of the multiplexor 104 being output as it is, the data with the bit, having the weight of $2^{-52}$ generated by the round value generating circuit 106, being 1, the other bits being 0 are added by the adder 107. When the bit having the weight of $2^1$ of the output of the adder 107 is 1, the LR1 shifter 108 effects 1 bit shift to right. When the bit having the weight of $2^1$ is 0, the value as it is is accommodated in the register 110 so as to complete the processing.

3 Zero Direction Round Mode

(The following processing is common when the augend, minuend and the addend, subtrahend are the single precision format, and the sum or the difference is rounded into single precision and when the augend, minuend and the addend, subtrahend are the double precision format, and the sum or the difference is rounded into double precision)

(1) Before Processing Step Start

In accordance with the exponents and the signs of two floating point data and the whether instruction is addition or subtraction, the type of the operation of the mantissa addition or the mantissa subtraction and the sign of the computation result are determined as shown in the sign and operation relation chart of Fig. 10. The mantissa which is not smaller in exponent from the augend, minuend and the addend, subtrahend is accommodated in the register 101. The mantissa which is smaller in exponent from the augend, minuend and the addend, subtrahend, is aligned to the exponent which is not smaller, is accommodated in the register 102.

(2) Step 1

· Mantissa addition time

The output of the register 101 is selected by the multiplexor 103, and the output of the register 102 is selected by the multiplexor 104. In the round value generating circuit 106, the data with all the bits being made 0 are generated. The complementer 105 outputs the multiplexor 104 output as it is so as to input them to the adder 107, and the adder 107 executes (register 1) + (register 2) with the Cin being made 0. When the bit having the weight of $2^1$ of the output of the adder 107 is 1, the LR1 shifter 108,effects 1 bit shift to the right so as to complete the computing operation.

· Mantissa subtraction time except for exponent differences 0, 1

The output of the register 101 is selected by the multiplexor 103, and the output of the register 102 is selected by the multiplexor 104. In the round value generating circuit 106, all the bits being made 0 are generated. The complementer 105 inverts the output of the multiplexor 104 to input them to the adder 107, and the adder 107 executes (register 1) - (register 2) with the Cin being made 1. When the bit having the weight of $2^0$ of the output of the adder 107 is 0, the LR1 shifter 108 effects 1 bit shift to the left so as to complete the computing operation.

. Mantissa subtraction time with the exponent difference 0, 1

The output of the register 101 is selected by the multiplexor 103, and the output of the register 102 is selected by the multiplexor 104. In the round value generating circuit 106, the data with all the bits being made 0 are generated. The complementer 105 inverts the output of the multiplexor 104 so as to input them to the adder 107, and the adder 107 executes (register 1) - (register 2) with the Cin being made 1. When the bit having the weight of $2^0$ of the output of the adder 107 is 0, the LR1 shifter 108 effects 1 bit shift to the left. In the shift number generating circuit 111, the shift number necessary for normalizing the output of the LR1 shifter 108 is generated. The insertion of the step for normalization is instructed when the shift number is not 0. When the insertion of the step for normalization is not caused, the computation is completed by this step.

(3) Insertion Step (only when the insertion of the step is instructed)

· Only at mantissa subtraction time with the exponent difference 0, 1

The barrel shifter 112 inputs the register 110 to shift to the left by the shift number generated by the shift number generating circuit 111 for accommodating it so as to complete the processing.

According to the present embodiment, at the mantissa addition time or the mantissa subtraction time except for the exponent differences 0, 1, the sum of the three of two floating point data mantissas and the round addition value or the sum of the two former difference and the latter are effected at the same time by the adder 107. The processing may be completed in most case by the normalizing of the result by the LR1 shifter 108. Even when the correction of the output of the LR1 shift 108 by the instruction of the round correction competitive control circuit 109 is necessary, the completing operation may be effected without increase in the processing step number. The completing operation may be effected by the insertion, by 1 step, of the processing only when the addition of the round addition value by the adder 107 is required again. The probability necessary in the insertion of 1 step is extremely small, and it is two thirty-seconds at the rounding to nearest even mode three thirty-seconds at the time of the directed rounding toward plus mode or the directed rounding toward minus mode, and 0 at the time of the directed rounding toward zero mode (when the bit pattern of the mantissa is assumed to be uniformly distributed). As the result, in most cases, (thirty thirty-seconds at the time of the rounding to nearest even mode twenty nine thirty-seconds at the time of the directed rounding toward plus mode or the directed rounding toward minus mode, 1 at the time of the directed rounding zero mode), the processing step number necessary for the addition, subtraction becomes as small as 2. Even at the time of the mantissa subtraction time of the exponent differences 0, 1, by the subtraction of the mantissas of two floating point data and the addition of the round addition values are effected at the same time by the adder 107. And by the normalization of the result by the LR1 shifter 108. The processing may be completed in most of the cases, only when the shift of 2 bits or more for normalization by the barrel shifter 112 or the processing can be completed by the insertion of 1 step, the addition of the round addition value is necessary by the adder 107, the number of the processing steps necessary in most of the cases becomes as small as 2. These processing flows are shown in Fig. 8 (b). Even in the either case, as the addition, subtraction of the mantissas and the addition of the round addition value are executed by the single adder 107, the necessary hardwares are less as compared with the conventional addition, subtraction apparatus of the floating point data.

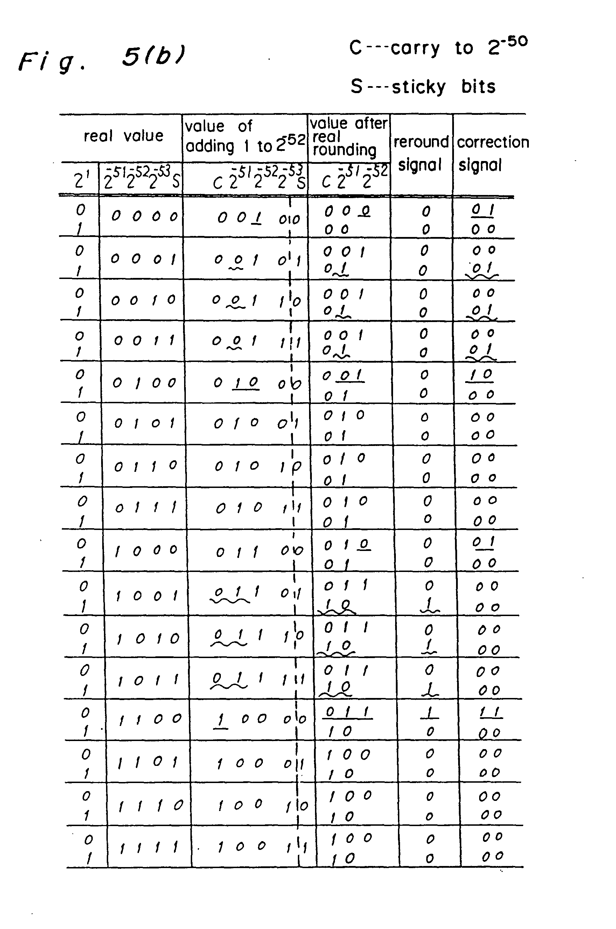

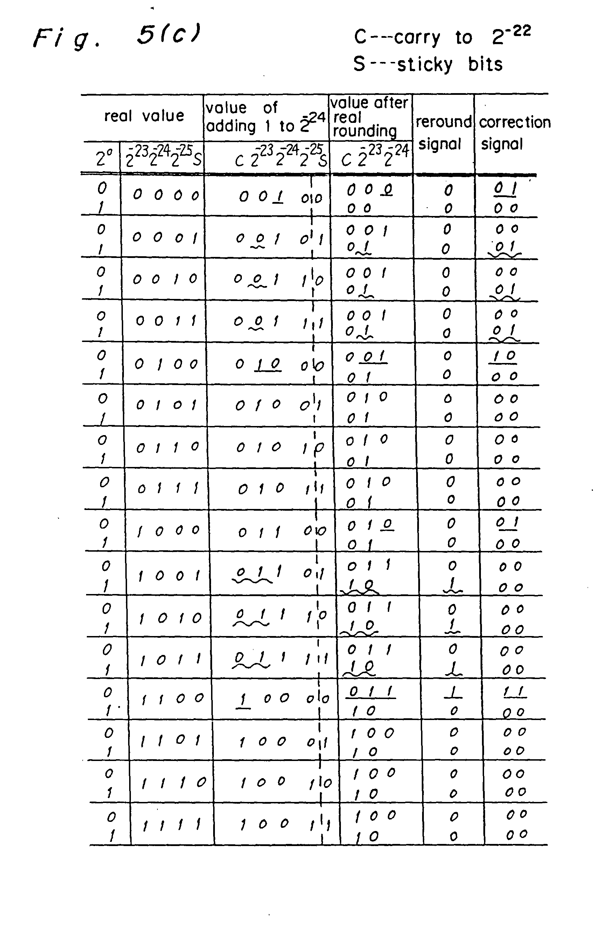

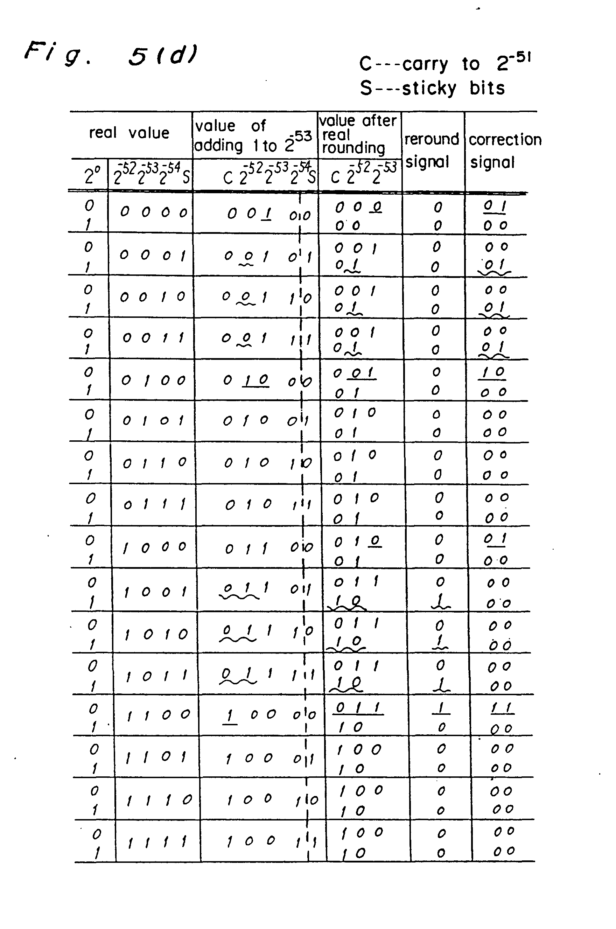

Although in the present embodiment at the directed rounding toward plus mode or at the directed rounding toward minus mode, in accordance with the respective cases of the mantissa addition with single precision rounding, the mantissa subtraction of 0 or 1 in exponent difference with single precision rounding, the mantissa addition with double precision rounding, the mantissa subtraction of 0 or 1 in exponent difference with double precision rounding, the data are generated with the bits having the weights of $2^{-24}$, $2^{-25}$, $2^{-53}$, $2^{-54}$ in the round value generating circuit 106 being 1, the other bits being 0, the output of the LR1 shifter 108 is accommodated in the register 110 with the bits having the wights of $2^{-23}$, $2^{-23}$, $2^{-52}$, $2^{-52}$ inverted when the correcting signal is 01, and with the bits having the weights of $2^{-22}$ and $2^{-23}$, $2^{-22}$ and $2^{-23}$, $2^{-51}$ and $2^{-52}$, $2^{-51}$ and $2^{-52}$ inverted when the correction signal is 10 in accordance with the control relation charts of the Fig. 4 (a), (b), (c), (d) by the round correction repetitive control circuit 109, and the insertion of the new step for again adding the round addition value generated by the round value generating circuit 106 is instructed, when the rerounding signal of the round correction repetitive control circuit 109 is 1, the data can be generated with the bits ahving the weights of $2^{-23}$, $2^{-24}$, $2^{-52}$, $2^{-53}$ in the round value generating circuit 106 being 1, the other bits being 0, the output of the LR1 shifter 108 is accommodated in the register 110 with the bits having the weight of $2^{-23}$, $2^{-23}$, $2^{-52}$, $2^{-52}$ inverted when the correction signal is 01, and with the bits having the weight of $2^{-22}$ and $2^{-23}$, $2^{-22}$ and $2^{-23}$, $2^{-51}$ and $2^{-52}$, $2^{-51}$ and $2^{-52}$ inverted when the correction signal is 10 in accordance with the control relation charts of Fig. 5 (a), (c), (b), (d) by the round correction repetitive control circuit 109, the insertion of the new step for adding again the round addition value generated by the round value generating circuit 106 can be instructed, when the reround signal of the round correction repetitive control circuit 109 is 1 and the correction signal is 00, and the insertion of the new step for subtracting from the value for retaining in the register 110 the round addition value generated by the round value generating circuit 106 can be instructed when the reround signal is 1 and the correction signal is 11. In this manner, the probability necessary in the insertion of 1 step is reduced as low as two thirty-seconds, thus improving the computing speed.

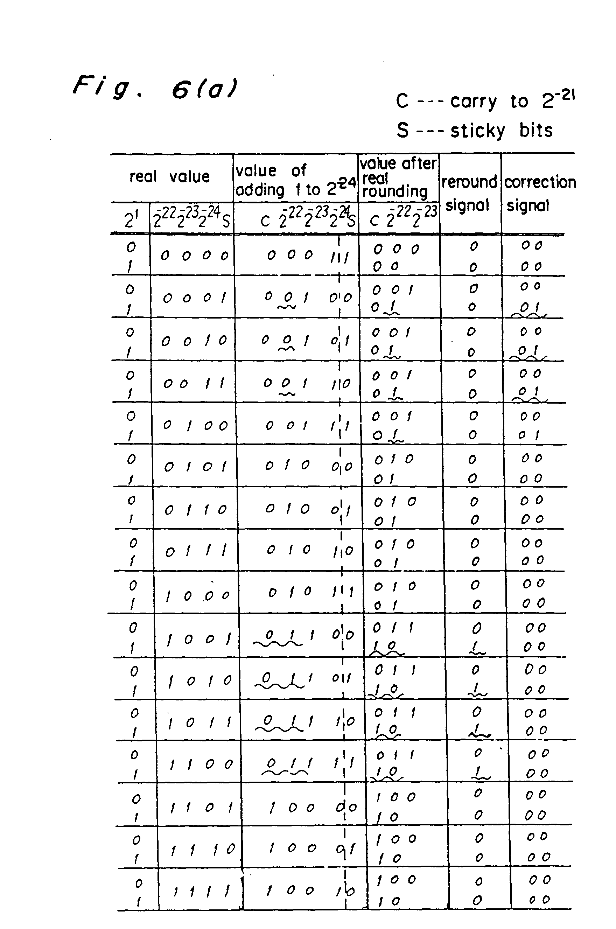

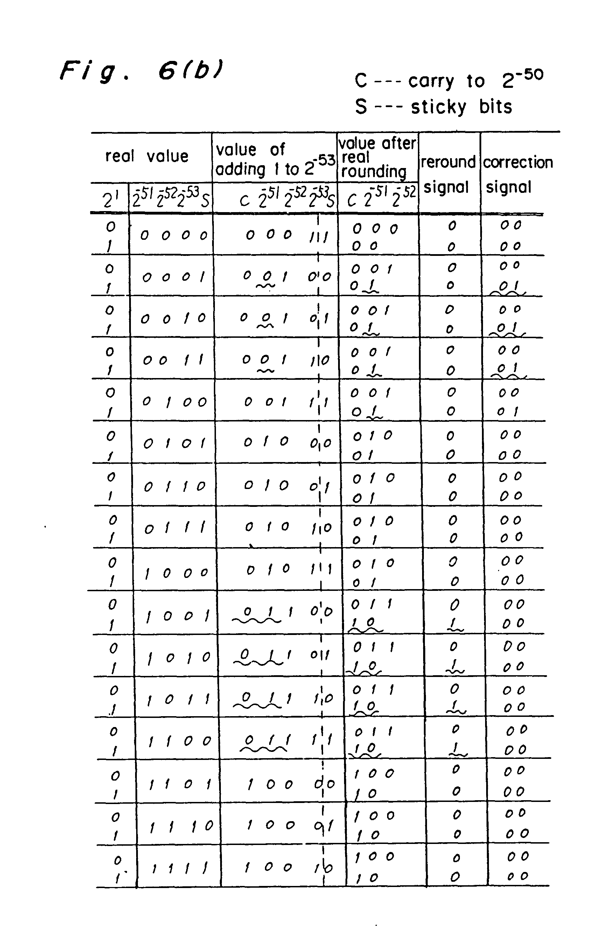

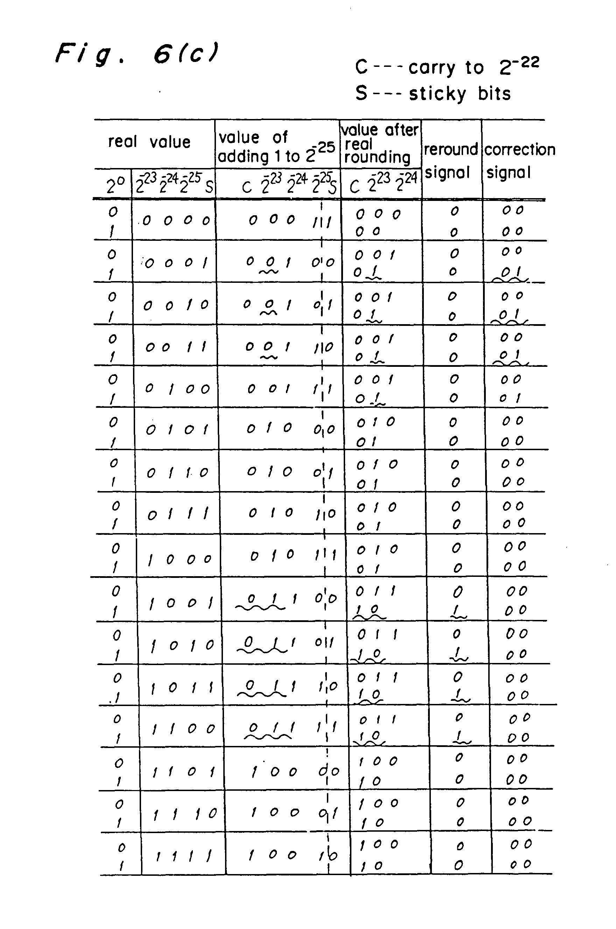

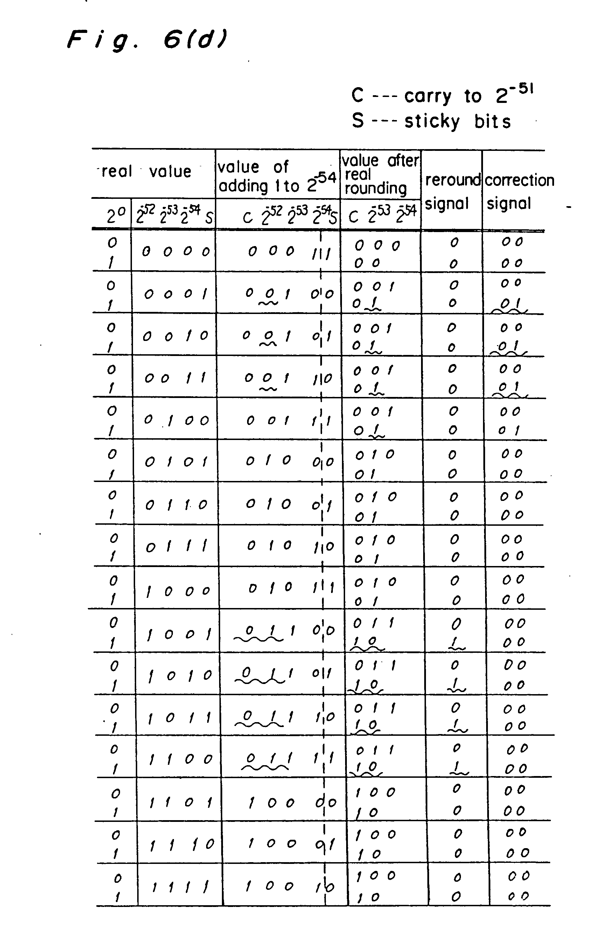

Although in the present embodiment at the directed rounding toward plus mode or at the directed rounding toward minus mode in accordance with the respective cases of the mantissa addition with single precision rounding, the mantissa subtraction of 0 or 1 in exponent difference with single precision rounding, the mantissa addition with double precision rounding, the mantissa subtraction of 0 or 1 in exponent difference with double precision rounding, the data are generated with the bits having the weights of $2^{-24}$, $2^{-25}$, $2^{-53}$, $2^{-54}$ in the round value generating circuit 106 being 1, the other bits being 0, the round correction repetitive control circuit 109 instructs the insertion of the step of the correction of the bits or the readdition of the round addition value in accordance with the correcting signal and the reround signal shown in the control relation charts of the Fig. 4 (a), (c), (b), (d). The data can be generated in the round value generaing circuit 106 with bits having $2^{-24}$ and its all the lower weights, $2^{-25}$ and its all the lower weights, $2^{-53}$ and its all the lower weights, $2^{-54}$ and its all the lower weights being 1, the other bits being 0. The round correction repetitive control circuit 109 can instruct the insertion of the step of the correction of the bits or the readdition of the round addition value in accordance with the correction signal and the reround signal shown in the control relation charts of the Fig. 6 (a), (c), (b), (d). In this manner, the probability necessary in the insertion of the 1 step is made as low as two thirty-seconds, thus improving the computing speed. In the the directed rounding toward plus mode or in the directed rounding toward minus mode, it is noticeable that the addition of 1 for rounding into the least significant bit (L) becomes necessary when the round bit (R) or the sticky bit (S) is 1. By the use of the carry generated by the addition of the data with the round bit and its all the lower bits being made 1 in bit position, the round addition into the least significant bit may be effected. A case where the round addition is not caused with the round bit and the sticky bit being both zero is shown in Fig. 12 (c). A case where the addition of 1 for rounding is caused except for above is shown in Fig. 12 (d), (e), (f).

In the present embodiment, both the precision of the format and the round precision of the augend, minuend and the addend, subtrahend are provided by way of single precision or double precision. Even in a case where the precision of the format and the round precision of the augend, minuend and the addend, subtrahend are different, the round addition value to be generated by the round value generating circuit 106 is the data with the round bit corresponding to the round precision being 1, the input bit number of the adder 107 is set to the maximum bit number of the data handling so that the round corresponding to the round precision may be realized without dependence upon the precision of the format of the augend, minuend and the addend, subtrahend.

Although in the present embodiment, in accordance with the respective cases of the mantissa addition with the single precision rounding, the mantissa subtraction of 0 or 1 in exponent difference with single precision rounding, the mantissa addition with double precision sounding, the mantissa subtraction of 0 or 1 in exponent difference with double precision rounding, the round correction repetitive control circuit 109 inspects the bits having the weights of $2^1$, $2^{-22}$, $2^{-23}$, $2^{-24}$, the bits having the weights of $2^0$, $2^{-23}$, $2^{-24}$, $2^{-25}$, the bits having the weights of $2^1$, $2^{-51}$, $2^{-52}$, $2^{-53}$, the bits having the weights of $2^0$, $2^{-52}$, $2^{-53}$, $2^{-54}$ of the output of the adder 107 and S bit so as to instruction the correction of the bits having the weights of $2^{-22}$ and $2^{-23}$, $2^{-22}$ and $2^{-23}$, 2-51 and $2^{-52}$, $2^{-51}$ and $2^{-52}$, the inspected bit and the corrected bit can be increased in the most significant bit direction. The probability necessary in the insertion of 1 step is halved for each 1 bit addition of the inspected bit and the corrected bit, thus improving the computing speed.

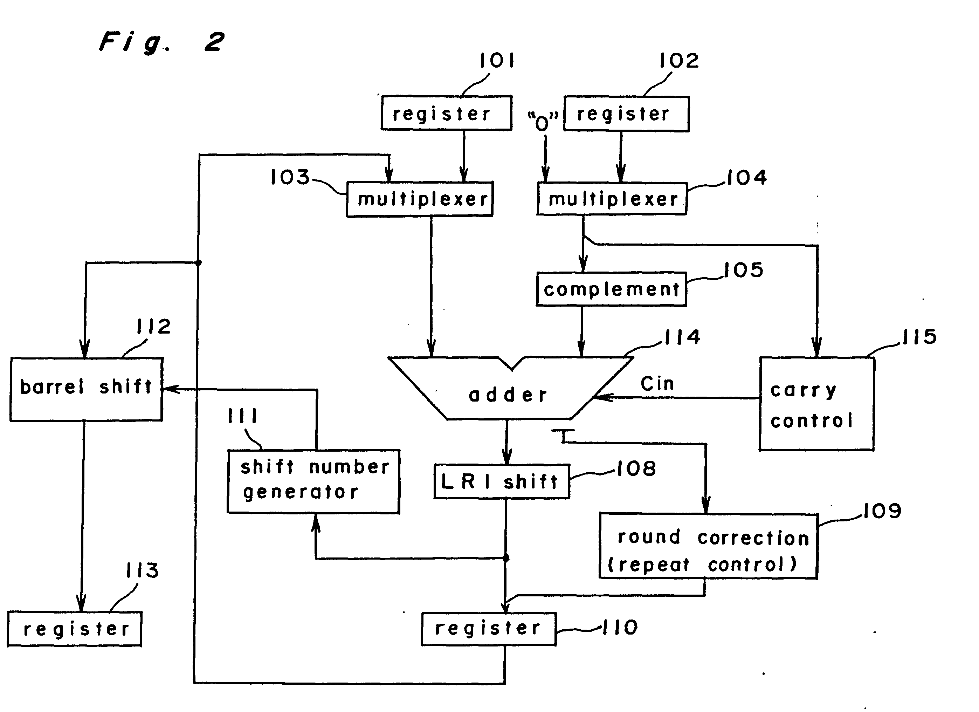

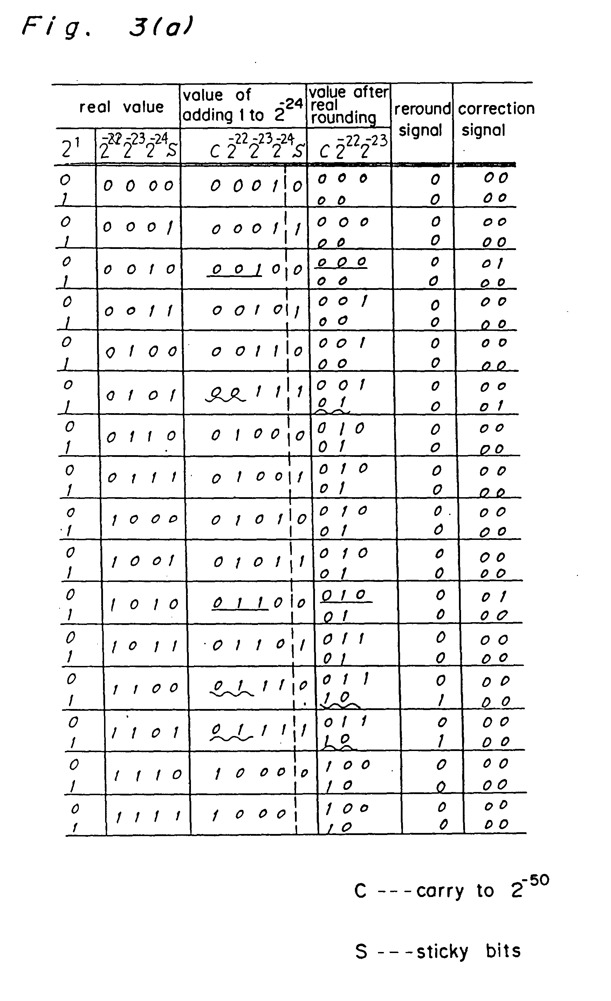

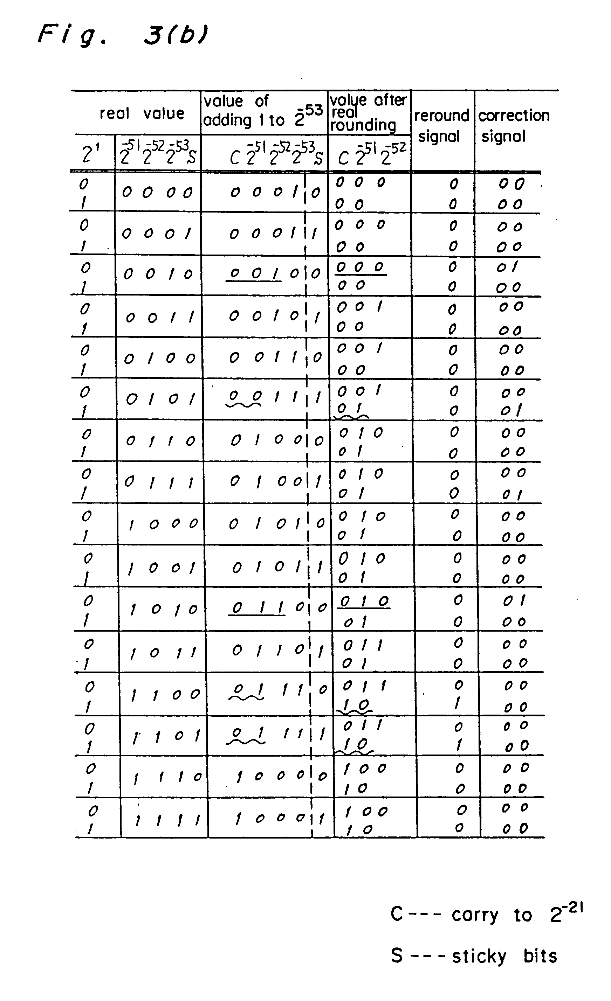

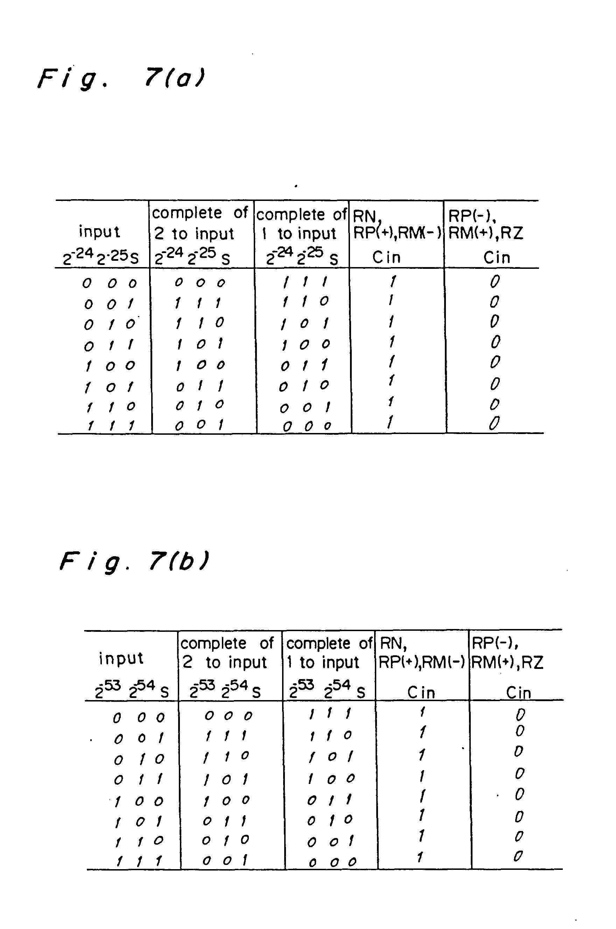

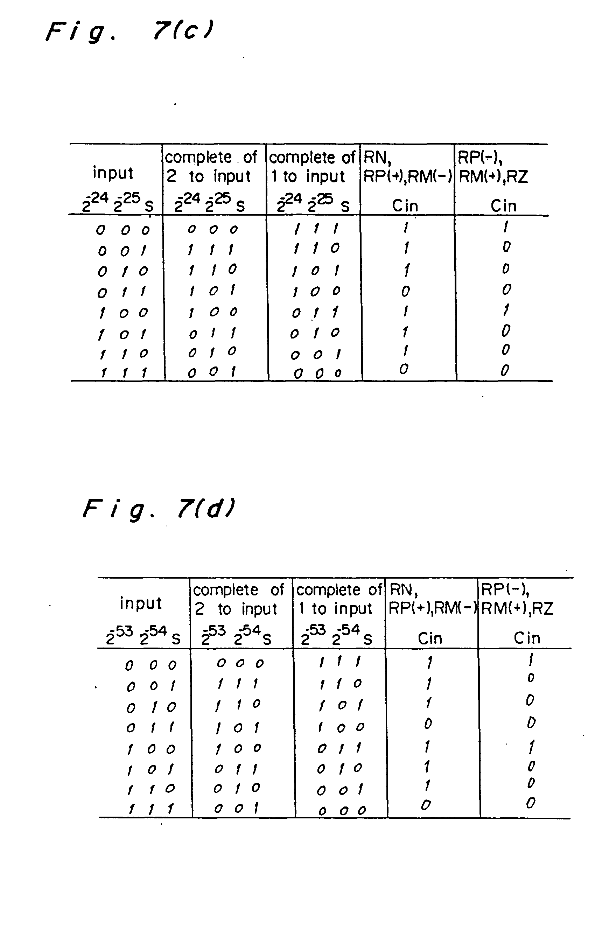

Fig. 2 shows a block diagram of the addition, subtraction apparatus of the floating point data in the second embodiment. It is to be noted that like parts in Fig. 2 are designated by like reference numerals in Fig. 1. In Fig. 2, reference numeral 114 is an adder of two inputs with the bit having the weight of $2^{-24}$ with the single precision as carry input (Cin), and the bit having the weight of $2^{-53}$ with the double precision as carry input (Cin), reference numeral 115 is a carry control apparatus for designing the carry input (Cin) of the adder 114. Fig. 7 is a control relation chart of the carry control apparatus 115, where the carry input (Cin) shown in Fig. 7 (a) when the mantissa addition is executed and the round precision is the single precision, in Fig. 7 (b) when the mantissa addition is executed, and the round precision is the double precision, in Fig. 7 (c) when the mantissa subtraction is executed, and the round precision is the single precision, in Fig. 2 (d) when the mantissa subtraction is executed and the round precision is the double precision is input into the adder 114.

The addition, subtraction apparatus of the floating point data in the present embodiment constructed as hereinabove will be described hereinafter in its operation. Instead of effecting the addition, subtraction of the mantissa of two floating point data and the addition of the round addition value generated by the round value generating circuit 106, by the adder 107 of three inputs in the first embodiment shown in Fig. 1, the present embodiment is adapted to operate the carry input (Cin) of the adder 114 of two inputs by the carry control apparatus 115 so as to effect the addition, subtraction of the mantissa and the addition of the round addition values. Only the operation of the addition, subtraction of the mantissas and the addition of the round addition value will be described hereinafter, with the other operations being the same as in the first embodiment.

· Mantissa addition time

At the rounding to nearest even mode, or when the sign of the computing result is positive in the directed rounding toward minus mode, or the sign of the computation result is negative in the directed rounding toward minus mode, the carry input (Cin) is made irrelevant, into 1, to the input data as shown in the columns of RN,RP (+),RM(-) of Fig. 7 (a), (b) so that $2^{-24}$, $2^{-53}$ are added as addition values in accordance with the round precision being the single precision or the double precision.
When the sign of the computation result is negative in the directed rounding toward plus mode or the sign of the computation result is positive in the directed rounding toward minus mode or at the directed rounding toward zero mode, the round addition values are not required to be added. Thus, the carry input (Cin) is made irrelevant, into 0, to the input data as shown in the columns of RP(-),RM(+), RZ of Fig. 7 (a), (b).

. Mantissa subtraction time except for exponent difference 0, 1

At the rounding to nearest even mode or when the sign of the computation result is positive in the directed rounding toward plus mode, or when the sign of the computation result is negative in the directed rounding toward minus mode, $2^{-25}$, $2^{-54}$ are required to be added as the round addition values in accordance with the round precision being the single precision or the double precision and 1 for the 2's complement is required to be added to the position of the sticky bit (S). So as to realize these additions, when at least one of the bit of $2^{-25}$ of the data (aligned and complemented by 1) to be added, and the sticky bit (S) is 1, or when at least one of the bit of $2^{-54}$ and the sticky bit (S) is 1, the carry input (Cin) into $2^{-24}$, $2^{-53}$ is made 1. When both the bit of $2^{-25}$ of the data to be added and the sticky bit (S) are 0, or when both the bit of $2^{-54}$ and the sticky bit (S) are 0, the carry input (Cin) into $2^{-24}$, $2^{-53}$ is made 0. Accordingly, the carry input (Cin) depended upon the input data as shown in the columns of RN, RP(+),RM(-) of Fig. 7 (c), (d) is generated.
When the sign of the computation result is negative in the directed rounding toward plus mode or the signs of the computation result is positive in the directed rounding toward minus mode or at the directed rounding toward zero mode, in accordance with the roung precision being the single precision or the double precision, 1 for 2's complement is required to be added to the position of the sticky bit (S). So as to realize this addition, when at least one of the bit of $2^{-25}$ of the data (aligned and complemented by 1) to be added and the sticky bit (S) is 1, or when at least one of the bit of $2^{-54}$ and the sticky bit (S) is 0, the carry input (Cin) into $2^{-24}$, $2^{-53}$ is made 0. When both the bit of $2^{-25}$ of the data to be added and the sticky bit (S) are 1, or when both the bit of $2^{-54}$ and the sticky bit (S) are 1, the carry input (Cin) into $2^{-24}$, $2^{-53}$ is made 1 for realization thereof. Accordingly, the carry input (Cin) depended upon the input data as shown in the columns of RP(-),RM(+),RZ of Fig. 7 (c), (d) is generated.

. Mantissa subtraction time with the exponent difference 0, 1

The round is not executed simultaneously with the subtraction of the mantissas. But in accordance with the single precision or the double precision in the round precision, 1 for 2's complement is required to be added to the position of the sticky bit (S). So as to realize this addition, when at least one of the bit of $2^{-25}$ of the data (aligned and complemented by 1) to be added and the sticky bit (S) is 0, or when at least one of the bit of $2^{-54}$ and the sticky bit (S) is 0, the carry input (Cin) into $2^{-24}$, $2^{-53}$ is made 0. When both the bit of $2^{-25}$ of the data to be added and the sticky bit (S) are 1, or when both the bit of $2^{-54}$ and the sticky bit (S) are 1, the carry input (Cin) into $2^{-24}$, $2^{-53}$ is made 1. Accordingly, the carry input (Cin) depended upon the input data as shown in the columns of RP(-),RM(+),RZ of Fig. 7 (c), (d) are generated.
Even in the above described either case, the rounding to be effected with the step being inserted may be realized with the carry input (Cin) being 1 so as to effect the addition with $2^{-24}$, $2^{-53}$ as the round addition values in accordance with the single precision or the double precision in the round precision.
Even by the present embodiment, at the mantissa addition time or the mantissa subtraction time except for the exponent differences 0, 1, the sum of the three of two floating point data mantissas and the round addition value or the sum of two former difference and the latter are effected at the same time by the adder 114. As the result, in most of the cases (thirty thirty-seconds at the rounding to nearest even mode, twenty nine thirty-seconds at the directed rounding toward plus mode or the directed rounding toward minus mode, 1 at directed rounding toward zero mode), the processing step number necessary for the addition, subtraction becomes as small as 2. Even at the time of the mantissa subtraction time of the exponent differences 0, 1, the subtraction of the mantissas of two floating point data and the addition of the round addition value are effected at the same time by the adder 114, so that the number of the processing steps necessary in most of the cases becomes as small as 2. Even in the either case, as the addition, subtraction of the mantissas and the addition of the round addition values are executed by the single adder 114, the necessary hardwares are less as compared with the conventional addition, subtraction apparatus of the floating point data. The adder 114, which is composed of two inputs, becomes much less in hardware than in the fist embodiment.

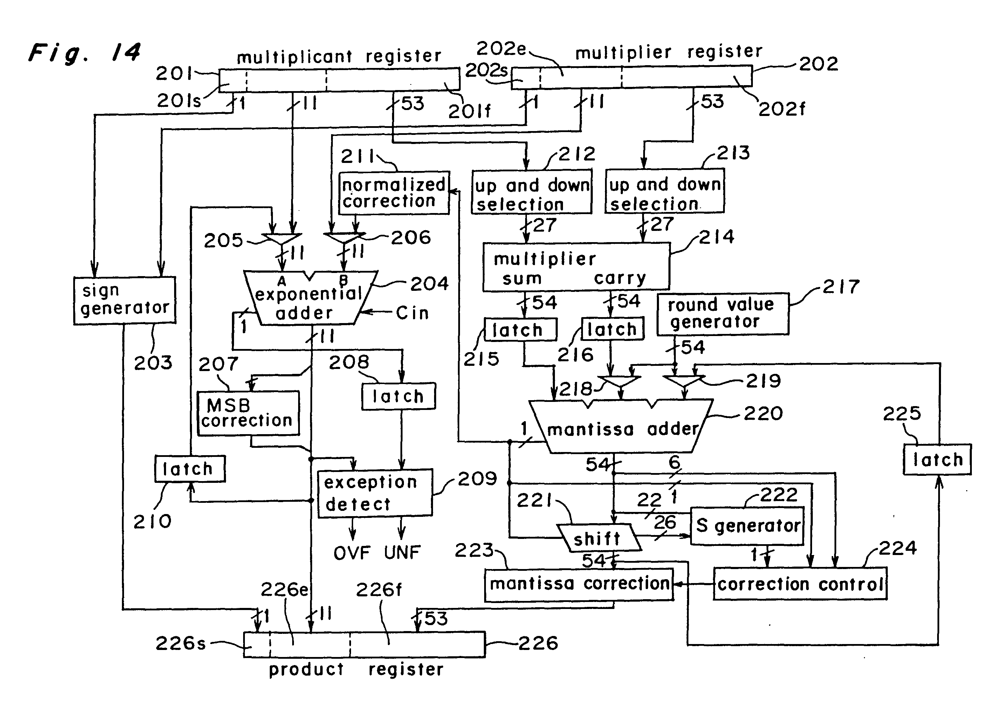

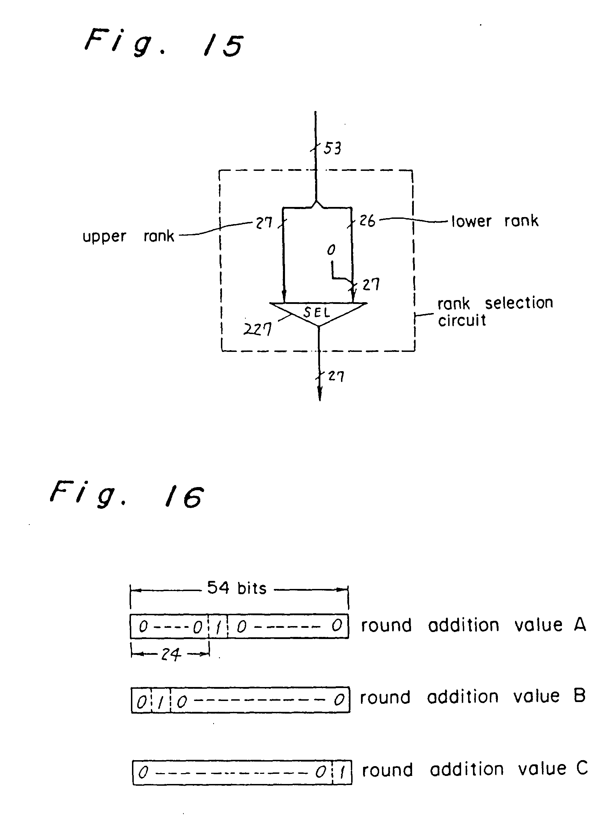

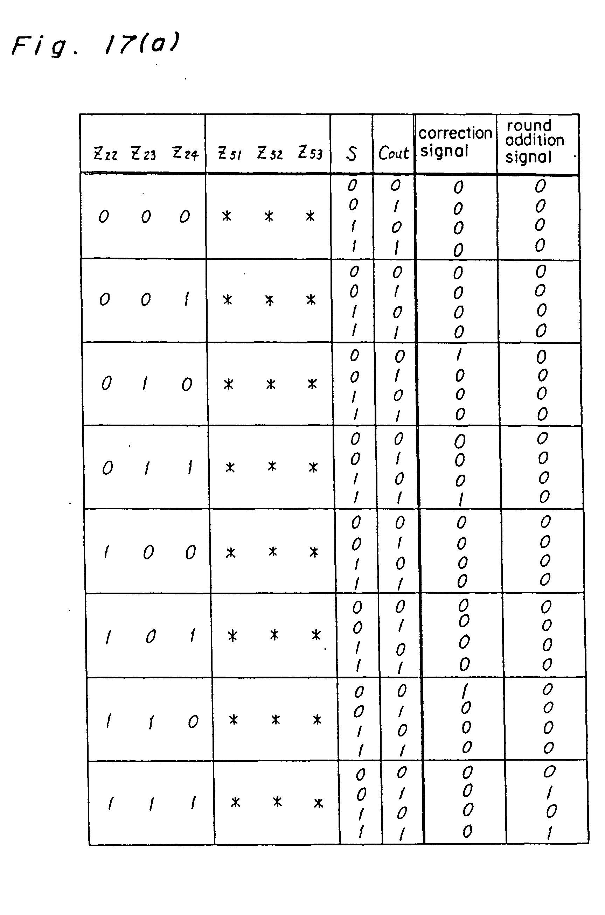

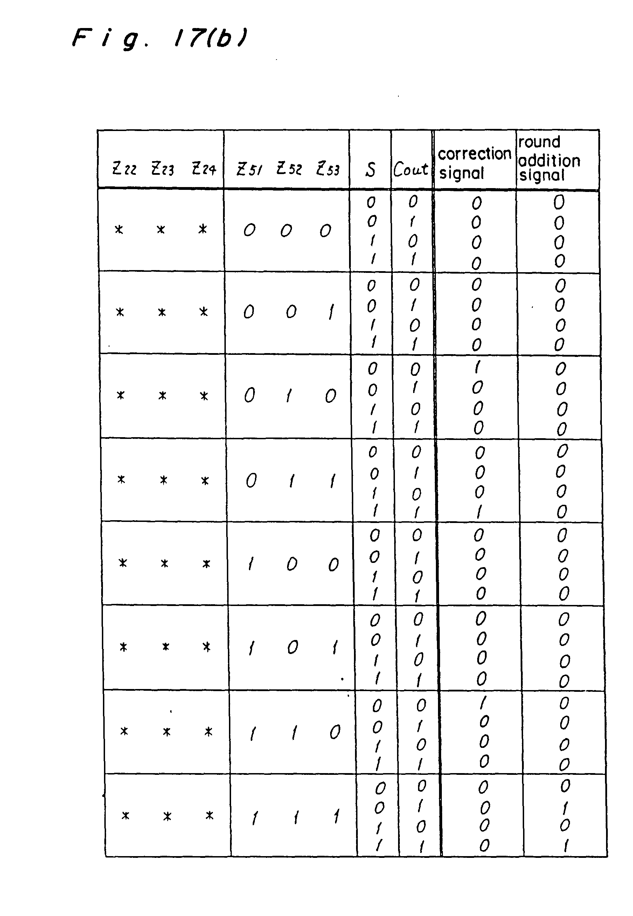

Fig. 14 shows a block diagram of a multiplying apparatus of floating point data in the third embodiment of the present invention. In referring now to Fig. 14, reference numeral 201 is a multiplicand register for retaining the multiplicand, consisting of a sign portion 201s of 1 bit, an exponent portion 201e of 11 bits and a mantissa portion 201f of 53 bits. Reference numeral 202 is a multiplier register for retaining the multiplier, consisting of a sign portion 202s of 1 bit, an exponent portion 202e of 11 bits and a mantissa portion 202f of 53 bits. The most significant bit of the multiplicand register mantissa portion 201f and the multiplier register mantissa portion 202f is so-called "hidden bit" each having the weight of $2^0$ when it is 1 at the normalized number, with the multiplicand register 201 and the multiplier register 202 being both in conformity with the double precision format except for this bit. Reference numeral 203 is a sign generating circuit for reading the signs of the multiplicand and the multiplier from the multiplicand register sign portion 201s and the multiplier register sign portion 202s so as to generate the sign of the product, reference numeral 204 is an exponent adder of 11 bits for reading the exponents of the multiplicand and the multiplier from the multiplicand register exponent portion 201e and the multiplier register exponent portion 202e so as to compute the exponent of the product, effects the addition of the A input, the B input and the carry input of 1 bit Cin. Reference numeral 205 and reference numeral 206 are respectively selectors of 11 bits for selecting the two inputs of the exponent adder 204, reference numeral 207 is the most significant bit corecting circuit of inverting the msot significant bit of the ouput of the exponent adder 204, referece numral 208 is a latch of 1 bit for retaining the overflow from the most significant bit at the addition in the exponent adder 204, reference numeral 209 is an exception detecting circuit for detecting the overflow and the underflow of the product with respect to the computation precision detected from the output of the exponent adder 204 and the value of the latch 208, reference numeral 210 is a latch of 11 bits for retaining the output of the exponent adder 204 inverted in the most significant bit by the most significant bit correcting circuit 207 so as to input them into the exponent adder 204 again through the selector 205, reference numeral 211 is a normalized correction value generating circuit for generating the constant for increasing the exponent by 1 through the normalization of the 1 bit shift of the mantissa of the product, reference numeral 212 is a multiplicand upper, lower selecting circuit for reading the multiplicand register mantissa portion 201f so as to select, output the upper 27 bits or the lower 27 bits (the most significant bit at this time is assumed to be 0), reference numeral 213 a multiplier upper, lower selecting circuit for reading the multiplier register mantissa portion 202f so as to select, output the upper 27 bits or the lower 27 bits (the most significant bit at this time is 0), reference numeral 214 is a multiplying unit for multiplying the output of the the multiplicand upper, lower selecting circuit 212 of 27 bits by the output of the multiplier upper, lower selecting circuit 213 of 27 bits so as to respectively output the sum and the carry of the 54 bits, reference numerals 215, 216 are respectively a latch of 54 bits for retaining the sum output and the carry output of the multiplying unit 214, reference numeral 217 is a round addition value generating circuit for generating the constant when the addition is effected so as to round the mantissa of the product in single precision or double precision, reference numeral 218 is a selector of 54 bits for selecting the value of the latch 216 and the output of the round addition value generating circuit 217, reference numeral 219 is a selector of 54 bits for selecting the output of the round addition value generating circuit 217 and the value to be retained in the latch 225 to be described later, reference numeral 220 is a mantissa adder of 54 bits for adding the value retained at the latch 215 and the output of the selector 218, and the output of the selector 219, reference numeral 221 is a shifter of 54 bits for shifting by 0 bit or 1 bit or 26 bits the output of the mantissa adder 220 in the least significant bit direction, reference numeral 222 is a sticky bit generating circuit for inputting 22 bits which is 26th bit through 47th bit from the most significant bit of the output of the mantissa adder 220 and the shift overflow from the least significant bit of 26 bits in the shifter 221 so as to generate the sticky bit in accordance with the round precision whether the single precision or the double precision, reference numeral 223 is a mantissa correcting circuit for inverting, outputting if necessary the 24th bit from the most significant bit of the output of the shifter 221 when the round precision is the single precision, and the 53rd when the round precision is the double precision, reference numeral 224 is a mantissa correction control circuit with 6 bits of the 23rd bit through the 25th bit, from the most significant bit, of the 3rd bit through the least significant bit, from the least significant bit, of the output of the mantissa adder 220, a 1 bit of the overflow from the most significant bit at the addition in the mantissa adder 220, the sticky bit 1 bit the sticky bit generating circuit 222 outputs so as to control the inversion of the bit to be effected by the mantissa correction circuit 223 and the addition of the round addition values in the mantissa adder 220 in accordance with the round precision, whether the single precision or the double precision reference numeral 225 is a latch of 54 bits for retaining the output of the shifter 221, reference numeral 226 is a product register for retaining the product, consisting of a sign portion 226s of 1 bit, an exponent portion 226e of 11 bits and a mantissa portion 226f of 53 bits. The most significant bit of the product register mantissa portion 226 is a so-called "hidden bit" having the weight of $2^0$, is 1 at the time of the normalized number, and the product register 226 except for this bit is in conformity with the double precision format. Fig. 15 is a inner block diagram of the multiplicand upper, lower selecting circuit 212 and the the multiplier upper, lower selecting circuit 213 shown in Fig. 14. Reference numeral 227 is a selector for selecting the upper 27 bits or 27 bits with 0 being expanded at the most significant bit to the lower 26 bits of the input of 53 bits. Fig. 16 is an operation illustrating chart showing the constants the round addition value generating circuit 217 generates shown in Fig. 14, wherein a round addition value A with the 25th bit only from the most significant bit being 1, the others being 0, a round addition value B with only 2nd bit from the most significant bit being 1, the others being 0, a round addition value C with only the least significant bit being 1, the others being 0 are generated. Fig. 17 is a control relation chart of the mantissa correction control circuit 224 shown in Fig. 14, where when the round precision is the single precision, as shown in Fig. 17 (a), the requirement of the bit inversion of the mantissa and the requirement of the readdition of the round addition value are determined from the bits of the 23rd bit through the 25th bit ($Z_{22}$, $Z_{23}$, $Z_{24}$) from the most significant bit of the output of the mantissa adder 220, the sticky bit (S) the sticks bit generating circuit 222 outputs and the overflow (Cout) in the mantissa adder 220. Also, when the round precision is the double precision, as shown in Fig. 17 (b), the requirement of the bit inversion of the mantissa and the requirement of the readdition of the round addition value are determined from the bits of the 3rd bit through the least significant bit ($Z_{51}$, $Z_{52}$, $Z_{53}$) from the least significant bit of the output of the mantissa adder 220, the sticky bit (S) the sticky bit generating circuit 222 outputs and the overflow (Cout) in the mantissa adder 220.

The multiplying apparatus of the floating point data in the present embodiment composed as described hereinabove will be described hereinafter in its operation. Here the round modes is provided by way of the rounding to nearest even mode.

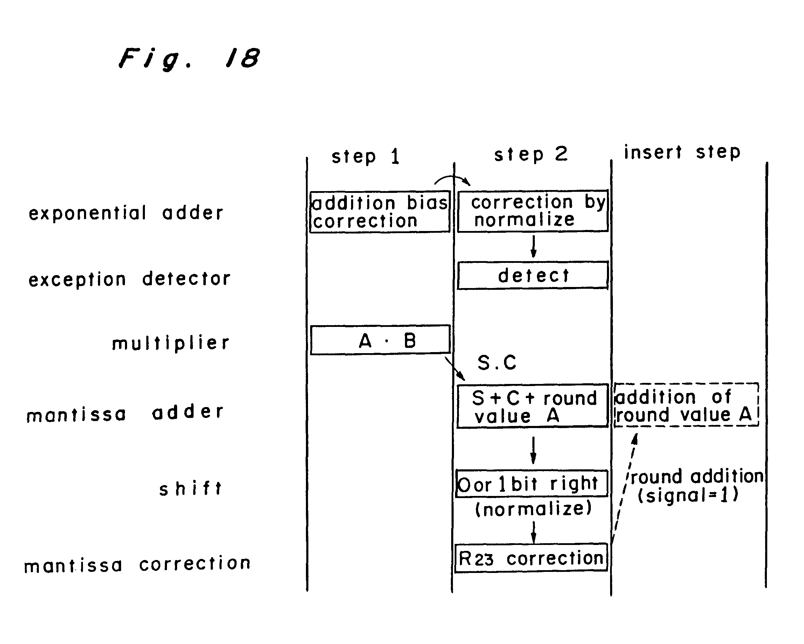

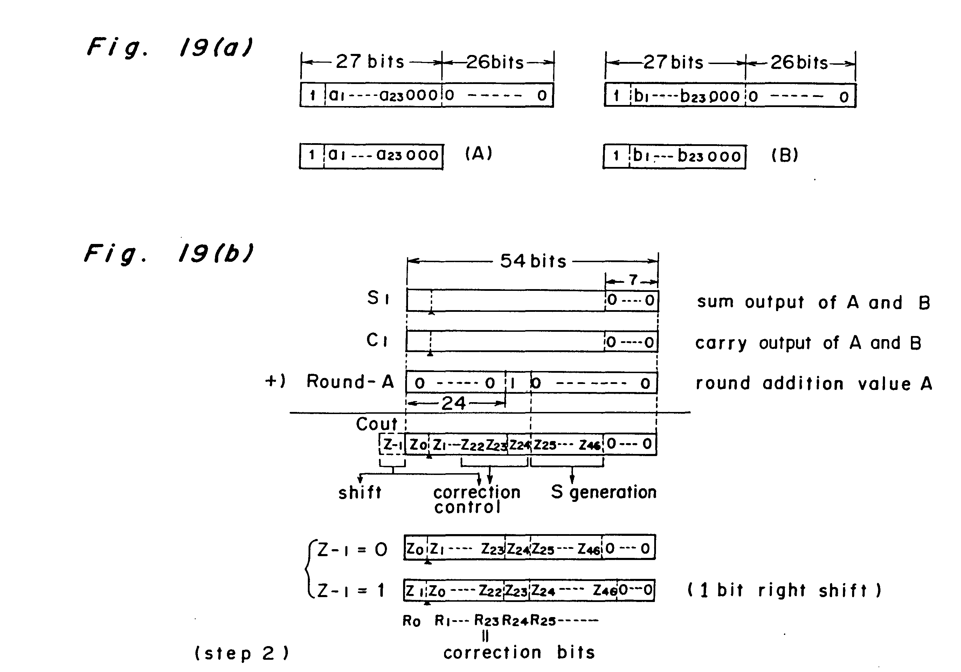

A case where the multiplicand and the multiplier are the single precision format, and the product is rounded into the single precision will be described with an operation flow chart of the single precision multiplication shown in Fig. 18 and the embodiment diagram of the addition and shift in the single precision multiplication shown in Fig. 19. Fig. 18 shows operations for each of the processing steps of the exponent adder 204, the exception detecting circuit 209, the multiplying unit 214, the mantissa adder 220, the shifter 221, the mantissa correction circuit 223. Fig. 19 shows the embodiment of the detailed operation in the mantissa adder 220 and the shifter 221 from among them.

(1) Before Processing Step Start

The multiplicand and the multiplier at the single precision are expanded into the double precision and are respectively accommodated in the multiplicand register 201 and the multiplier register 202. At this time, the multiplicand register exponent portion 201e and the multiplier register exponent portion 202e are both converted into the biased expression of the above precision (real exponent value = value of exponent portion - $1023_{(10)}$), with 0 being filled in the lower 29 bits of the multiplican register mantissa portion 201f and the multiplier register mantissa portion 202f.

(2) Step 1

The exponent of the multiplicand retained in the multiplicand register exponent portion 201e by the selector 205 is inputted into the A input of the exponent adder 204, the exponent of the mulptiplier retained in the multiplier register exponent portion 202e by the selector 206 is input into the B input of the exponent adder 204 so as to effect the addition in the exponent adder 204 with the carry input Cin being provided as 1. The most significant bit of the addition result is inverted by the most significant bit correcting circuit 207. The addition result with the most significant bit being inverted is accommodated in the latch 210. The fact that the value to be retained in the latch 210 is the exponent of the product correctly biased can be proved as follows.

(Proof start)

In ANSI/IEEE Standard for Binary Floating-Point Arithmetic P754, the bias value of the double precision is assumed as follows ($\bar{X}$ is the inversion of X.).

$$bias = 011\ 1111\ 1111\ _{(2)}$$

It may be transformed

$$em = (e1-bias) + (e2 - bias) + bias$$

$$= e1 + e2 - bias$$

$$= e1 + e2 + \bar{bias} + 1$$

$$= (e1 + e2 + 1) + \bar{bias}$$

$$= (e1 + e2 + 1) + 100\ 0000\ 0000_{(2)}$$

wherein

e1: biased exponent portion of the multiplicand (11 bits)

e2: biased exponent portion of multiplier (11 bits)

em: biased exponent portion of product (11 bits)

The addition of 1 of the third term can be realized with the carry input Cin being made 1. The addition of 100 0000 0000$_{(2)}$ of the forth term can be realized by the inversion of the most significant bit.

(Proof end)

The latch 208 retains the overflow in the exponent adder 204 at this time. The multiplicand upper, lower selecting circuit 212 reads, outputs the upper 27 bits of the multiplicand register mantissa portion 201f (the value A shown in Fig. 19 (a), with all the effective bits of the mantissa portion of the multiplicand being included in it, the lower 3 bits being 0). The multiplier upper, lower selecting circuit 213 reads, outputs the upper 27 bits of the multiplier register mantissa portion 202f (the value B shown in Fig. 19 (a), with all the effective bits of the mantissa portion of the multiplier being included in it, the lower 3 bits being 0). The multiplying unit 214 executes the multiplication in accordance with the inputs from the multiplicand upper, lower selecting circuit 212 and the multiplier upper, lower selecting circuit 213 so as to respectively accommodate the sum output and the carry output in the latch 215 and the latch 216. At the same time, in the sign generating circuit 203, the signs of the multiplicand and the multiplier are read from the multiplicand register sign portion 201s and the multiplier register sign portion 202s so as to take the exclusive or of both and generate the sign of the product for accommodating it in the product register sign portion 226s.

(3) Step 2

The mantissa adder 220 adds the sum output (lower 7 bits are 0) of the multiplying unit 214 retained in the latch 215, the carry output (lower 7 bits are 0) of the multiplying unit 214 retained in the latch 216 by the selector 218, and the round addition value A the round addition value generating circuit 217 generates by the selector 219. By the presence, absence of the unit overflow ($Z_{-1}$) from the mantissa adder 220 at this time, one of the following is executed.

. When the overflow exists from the mantissa adder 220, namely, when the product of the mantissa portion is 2 or more

The shifter 221 shifts by 1 bit (at this time, 1 is filled in the most significant bit), in the least significant bit direction, the output from the mantissa adder 220 for normalization. The exponent adder 204 adds the value of the latch 210, the constant 1 the normalized correction value generating circuit 211 outputs by the selector 205 and the selector 206 so as to accommodate the result into the product register exponent portion 226e.

· When the overflow from the mantissa adder 220 does not exit, namely, when the product of the mantissa portion is 1 or more and less than 2

The shifter 221 outputs as it is without shifting the output from the mantissa adder 220 as the normalization is not necessary. The exponent adder 204 outputs the value of latch 210 as it is by the selector 205 and the selector 206 so as to accommodate it into the product register exponent portion 226e.

The value of the latch 208 is not allowed to change. The exception detecting circuit 209 detects in accordance with the following logic the overflow (OVF) and the underflow (UNF) of the product at the single precision by the output (which is assumed to be E) of the exponent adder 204.

$$\text{if } E \geq 128_{(10)} \text{ then OVF} = 1 \text{ else OVF} = 0$$

$$\text{if } E \leq 996_{(10)} \text{ then UNF} = 1 \text{ else UNF} = 0$$

The sticky bit generating circuit 222 takes the logical or of 22 bits of the 26th bit through the 47th bit ($Z_{25}$, ..., $Z_{46}$) from the most significant bit of the output of the mantissa adder 220 so as to make the sticky bit output (S) 1 if a bit of 1 in value exists no more than 1 in 22 bits, and to make the sticky bit output (S) 0 if all the bits of 22 bits are 0 in value. The mantissa correction control circuit 224 controls the mantissa correcting circuit 223 in accordance with the bits of 23rd bit through the 25th bit ($Z_{22}$, $Z_{23}$, $Z_{24}$) from the most significant bit of the output of the mantissa adder 220, the sticky bit (S) the sticky bit generating circuit 222 outputs and the overflow (Cout= $Z_{-1}$) in the mantissa adder. The mantissa correcting circuit 223 inverts the 24th bit ($R_{23}$) from the most significant of the output of the shifter 221 if the column of the correction signal of Fig. 17 (a) is 1. If the column is 0, the circuit effects to output it without being inverted. At the same time, if the column of the round adding signal of Fig. 17 (a) is 0, the output is accommodated in the product register mantissa portion 226f, with the lower 29 bits of 53 bits of the output of the mantissa correcting circuit 223 except for the most significant bit being masked in 0, so as to complete the processing. If the column of the round addition signal is 1, the output of the mantissa correction circuit 223 is accommodated in the latch 225, and thereafter, the following insertion step is executed.

(3) Insertion Step (only when the column of the round addition signal is 1)

The mantissa adder 220 adds the round addition value A the round addition value generating circuit 217 generates by the selector 218 and the value the latch 225 retains by the selector 219. At this time, the overflow from the mantissa adder 220 is not caused. The shifter 221 outputs the output of the mantissa adder 220 as it is without being shifted, and the mantissa correction circuit 223 also outputs the output of shifter 221 as it is without being bit inverted. Thereafter, the output is accommodated in the product register mantissa portion 226f, with the lower 29 bits of the 53 bits of the output of the mantissa correcting circuit 223 except for the most significant bit, being masked in 0 so as to complete the processing.

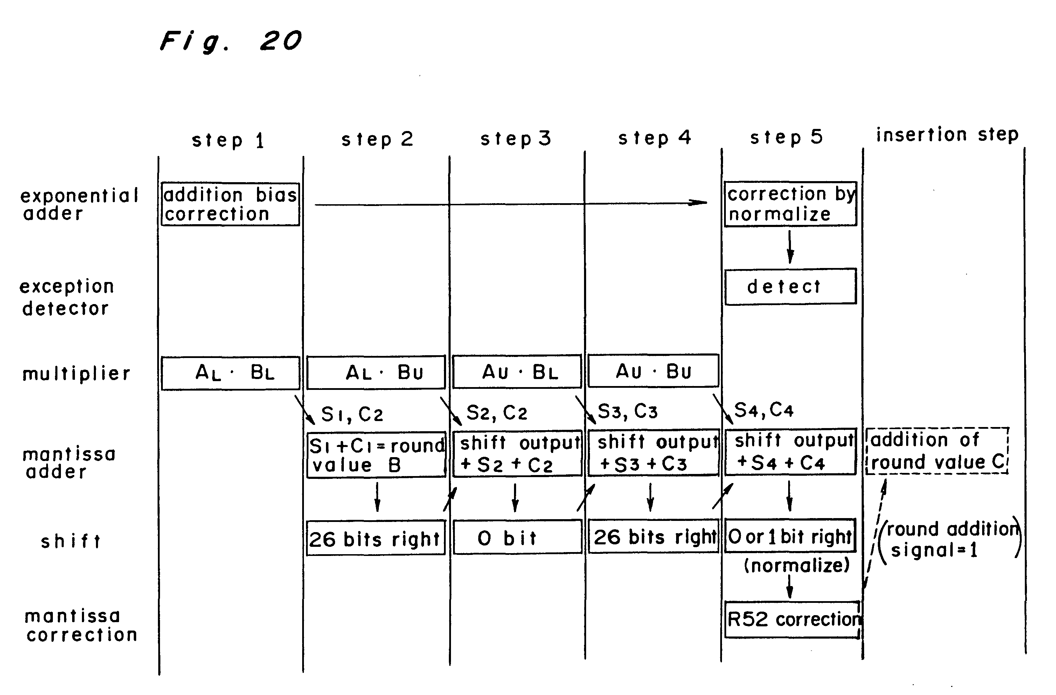

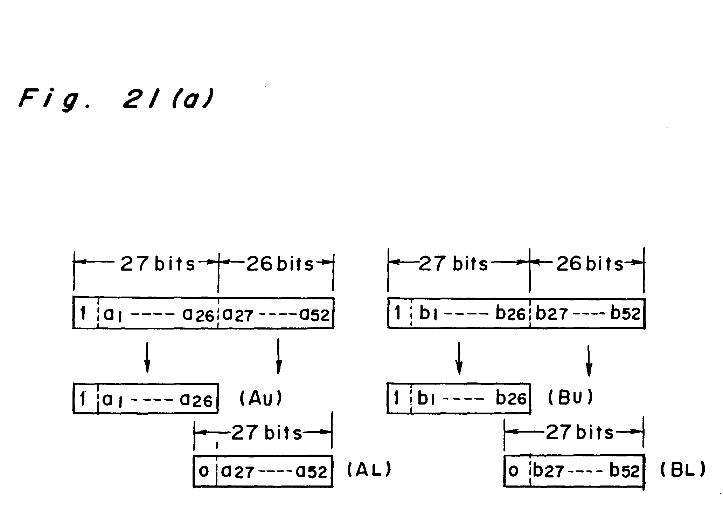

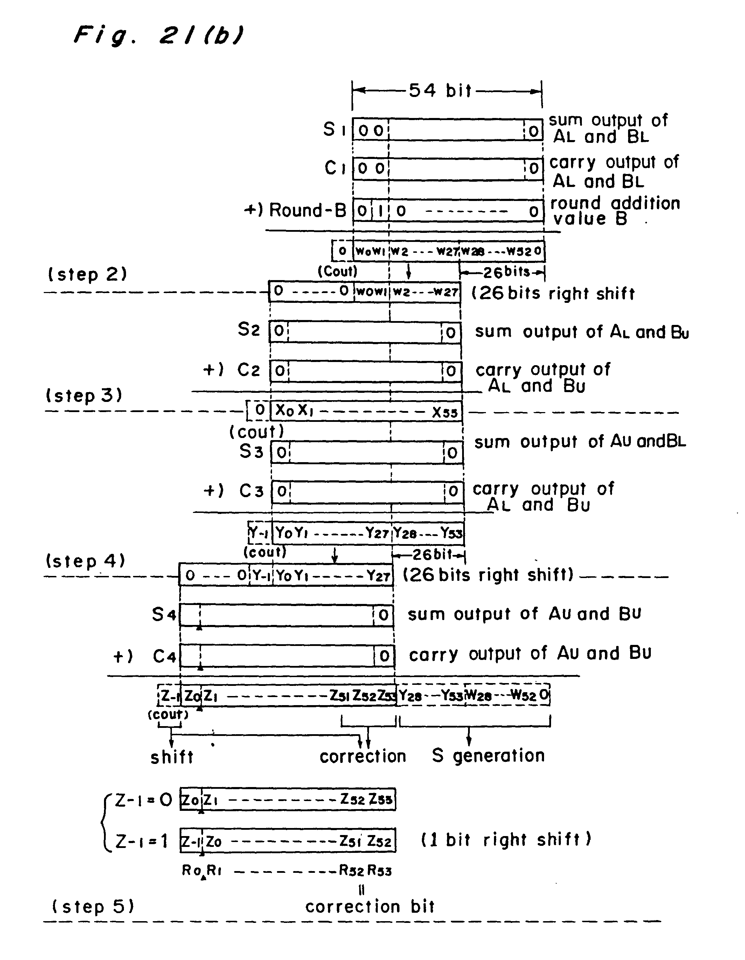

Then, a case, where the multiplicand and the multiplier are the double precision format, and the product is rounded into the double precision, will be described with an operation flow chart of the double precision multiplication shown in Fig. 20 and the embodiment diagram of the addition and shift in the double precision multiplication shown in Fig. 21. Fig. 20 shows operations for each of the processing steps of the exponent adder 204, the exception detecting circuit 209, the multiplying unit 214, the mantissa adder 220, the shifter 221, the mantissa correction circuit 223. Fig. 21 shows the embodiment of the detailed operation in the mantissa adder 220 and the shifter 221 from among them.

(1) Before Processing Step Start

The multiplicand and the multiplier at the double precision are respectively accommodated in the multiplicand register 201 and the multiplier register 202. At this time, the multiplicand register exponent portion 201e and the multiplier register exponent portion 202e are both converted into the biased expression (real exponent value = value of exponent portion - $1023_{(10)}$) of the double precision.

(2) Step 1

The exponent of the multiplicand retained in the multiplicard register exponent portion 201e by the selector 205 is inputted into the A input of the exponent adder 204, the exponent of the mulptiplier retained in the multiplier register exponent 202e by the selector 206 is input into the B input of the exponent adder 204 so as to effect the addition in the exponent adder 204 with the carry input Cin being provided as 1. The most significant bit of the addition result is inverted by the most significant bit correcting circuit 207. The addition result with the most significant bit being inverted is accommodated in the latch 210. The fact that the value to be retained in the latch 210 is the exponent of the product correctly biased is proved in the description of the single precision multiplication. The latch 208 retains the overflow in the exponent adder 204 at this time. The multiplicand upper, lower selecting circuit 212 reads, outputs the lower 27 bits of the multiplicand register mantissa portion 201f (the value AL shown in Fig. 21 (a), the most significant bit being 0). The multiplier upper, lower selecting circuit 213 reads, outputs the lower 27 bits of the multiplier register mantissa portion 202f (the value BL shown in Fig. 21 (a), the most significant bit being 0). The multiplying unit 214 executes the multiplication in accordance with the inputs from the multiplicand upper, lower selecting circuit 212 and the multiplier upper, lower selecting circuit 213 so as to respectively accommodate the sum output and the carry output in the latch 215 and the latch 216. At the same time, in the sign generating circuit 203, the signs of the multiplicand and the multiplier are read from the multiplicand register sign portion 201s and the multiplier register sign portion 202s so as to take the exclusive or of both and generate the sign of the product for accommodating it in the product register sign portion 226s.

(3) Step 2

The mantissa adder 220 adds the sum output (upper 2 bits and the least significant bit are 0) of the multiplying unit 214 retained in the latch 215, the carry output (upper 2 bits and the least significant bit are 0) of the multiplying unit 214 retained in the latch 216 by the selector 218, and the round addition value B the round addition value generating circuit 217 generates by the selector 219. The overflow from the mantissa adder 220 at this time is not caused. The shifter 221 shifts the output of the mantissa adder 220 ($W_0$, ..., $W_{52}$, 0) by 26 bits in the least significant bit direction (at this time 0 is filled in the upper) so that the result (0, ..., 0, $W_0$, ..., $W_{27}$) are accommodated in the latch 225. The value accommodated in the latch 225 is the least significant partial product. At the same time, the multiplicand upper, lower selecting circuit 212 reads, outputs the lower 27 bits of the multiplicand register mantissa portion 201f (the value AL shown in Fig. 21 (a), the most significant bit is 0), the multiplier upper, lower selecting circuit 213 reads, outputs the upper 27 bits of the multiplier register mantissa portion 202f (the value BU shown in Fig. 21 (a)). The multiplying unit 214 executes the multiplication in accordance with the inputs from the multiplicand upper, lower selecting circuit 212 and the multiplier upper, lower selecting circuit 213 so as to respectively accommodate the sum output and the carry output in the latch 215 and the latch 216.

(4) Step 3

The mantissa adder 220 adds the sum output (the most significant bit and the least significant bit are 0) of the multiplying unit 214 retained in the latch 215, the carry output (the most significant bit and the least significant bit are 0) of the multiplying unit 214 retained in the latch 216 by the selector 218, and the output of the shifter 221 (upper 26 bits are 0) retained at the latch 225 by the selector 219. The overflow from the mantissa adder 220 is not caused at this time. The shifter 221 outputs the output of the mantissa adder 220 ($X_0$, ..., $X_{53}$), as it is without shifting so as to accommodate it in the latch 225. The value accommodated in the latch 225 is accumulated as far as the first intermediate partial product. At the same time, the multiplicand upper, lower selecting circuit 212 reads, outputs the upper 27 bits of the multiplicand register mantissa portion 201f (the value AU shown in Fig. 21 (a)), the multiplier upper, lower selecting circuit 213 reads, outputs the lower 27 bits of the multiplier register mantissa portion 202f (the value BL shown in Fig. 21 (a), the most significant bit is 0). The multiplying unit 214 executes the multiplication in accordance with the inputs from the multiplicand upper, lower selecting circuit 212 and the multiplier upper, lower selecting circuit 213 so as to respectively accommodate the sum output and the carry output in the latch 215 and the latch 216.

(5) Step 4

The mantissa adder 220 adds the sum output (the most significant bit and the least significant bit are 0) of the multiplying unit 214 retained in the latch 215, the carry output (the most significant bit and the least significant bit are 0) of the multiplying unit 214 retained in the latch 216 by the selector 218, and the output of the shifter 221 retained at the latch 225 by the selector 219. The shifter 221 shifts the data of 55 bits ($Y_{-1}$, $Y_0$, ..., $Y_{53}$) consisted of the output of 54 bits ($Y_0$, ..., $Y_{53}$) with the overflow of 1 bit ($Y_{-1}$) from the mantissa adder 220 being added onto the most significant bit side by 26 bits in the least significant bit direction (at this time, 0 is buried in the upper). The output of the mantissa adder 220, so that the result (0, ..., 0, $Y_{-1}$, $Y_0'$ ..., $Y_{27}$) are accommodated in the latch 225. The values accommodated in the latch 225 is accumulated so far as the second intermediate partial product. At the same time, the multiplicand upper, lower selecting circuit 212 reads, outputs the upper 27 bits of the multiplicand register mantissa portion 201f (the value AU shown in Fig. 21 (a)), the multiplier upper, lower selecting circuit 213 reads, outputs the upper 27 bits of the multiplier register mantissa portion 202f (the value BU shown in Fig. 21 (a)). The multiplying unit 214 executes the multiplication in accordance with the inputs from the multiplicand upper, lower selecting circuit 212 and the multiplier upper, lower selecting circuit 213 so as to respectively accommodate the sum output and the carry output in the latch 215 and the latch 216.

(6) Step 5

The mantissa adder 220 adds the sum output (the least significant bit is 0) of the multiplying unit 214 retained in the latch 215, the carry output (the least significant bit is 0) of the multiplying unit 214 retained in the latch 216 by the selector 218, the output of the shifter 221 (the upper 25 bits are 0) retained at the latch 225 by the selector 219. By the presence, absence of the overflow ($Z_{-1}$) from the mantissa adder 220 at this time, one of the following is executed.

. When the overflow exists from the mantissa adder 220, namely, when the product of the mantissa portion is 2 or more

The shifter 221 shifts by 1 bit (at this time, 1 is filled in the most significant bit), in the least significant bit direction, the output from the mantissa adder 220 for normalization. The exponent adder 204 adds the value of the latch 210, the constant 1 the normalized correction value generating circuit 211 outputs by the selector 205 and the selector 206 so as to accommodate the result into the product register exponent portion 226e.

· When the overflow from the mantissa adder 220 does not exit, namely, when the product of the mantissa portion is 1 or more and less then 2

The shifter 221 outputs as it is without shifting the output from the mantissa adder 220 as the normalization is not necessary. The exponent adder 204 outputs the value of latch 210 as it is by the selector 205 and the selector 206 so as to accommodate it into the product register exponent portion 226e.

The value of the latch 208 is not allowed to change. The exception detecting circuit 209 detects in accordance with the following logic fomula the overflow (OVF) and the underflow (UNF) of the product at the double precision by the output (which is assumed to be $E_0$, ..., $E_{10}$) of the exponent adder 204 and the value of the latch 8 (which is assumed to be Ce).

$$OVF = Ce \cdot {}^-E_0 + E_0 \cdot E_1 \cdots\cdot E_{10}$$

$$UNF = {}^-Ce \cdot E_0 + {}^-(E_0 + E_1 + ... + E_{10})$$

wherein ${}^-X$ shows the inversion of X.

The sticky bit generating circuit 222 takes the logical or of 52 bits with the shift overflow ($W_{28}$, ..., $W_{52}$, 0) from the least significant bit of 26 bits in the shifter 221 at the step 2, and the shift overflow ($Y_{28}$, ..., $Y_{53}$) from the least significant bit of 26 bits in the shifter 221 at the step 4 being combined so as to make the sticky bit output (S) 1 if a bit of 1 in value exists no more than 1 in 52 bits, and to make the sticky bit output (S) 0 if all the bits of 52 bits are 0 in value. The mantissa correction control circuit 224 controls the mantissa correcting circuit 223 in accordance with the bits of the 3rd bit through the least significant bits ($Z_{51}$, $Z_{52}$, $Z_{53}$) from the least significant bit of the output of the mantissa adder 220, the sticky bit (S) the sticky bit generating circuit 222 outputs and the overflow (Cout= $z_{-1}$) in the mantissa adder 220. The mantissa correcting circuit 223 inverts the 2nd bit ($R_{52}$) from the least significant of the output of the shifter 221 if the column of the correction signal of Fig. 17 (b) is 1. If the column is 0, the circuit effects to output it without being inverted. At the same time, if the column of the round adding signal of Fig. 17 (b) is 0, 53 bits of the output of the mantissa correcting circuit 223 except for the least significant bit is accommodated in the product register mantissa protion 226f so as to complete the processing. If the column of the round addition signal is 1, the output of the mantissa correction circuit 223 is accommodated in the latch 225, and thereafter, the following insertion step is executed.

(6) Insertion Step ( only when the column of the round addition signal is 1)

The mantissa adder 220 adds the round addition value C the round addition value generating circuit 217 generates by the selector 218 and the value the latch 225 retains by the selector 219. At this time, the overflwo from the mantissa adder 220 is not caused. The shifter 221 outputs the output of the mantissa adder 220 as it is without being shifted, and the mantissa correction circuit 223 also outputs the ouput of shifter 22 as it is without being bit inverted. Thereafter, the 53 bits of the output of the mantissa correcting circuit 223 except for the least significant bit is accommodated in the product register mantissa portion 226f so as to complete the processing.

According to the present embodiment as described hereinabove, the subtraction of the bias value is realized by the addition with the carry input Cin being made 1 in the exponent adder 204 being made 1, and the inversion of the most significant bit by the most significant bit correcting circuit 7, and the biased exponent portion of the product of the floating point format applied as in the multiplicand and the multiplier may be obtained with the single processing step, so that a step of correcting the bias of the exponent portion is not required. Also, the most significant bit correcting circuit 207 may be realized briefly by the exclusive or gate of 1 bit and the other special hardwares for bias correction are not required, thus reducing the hardware.

According to the present embodiment, in the mantissa portion, the addition of the round addition values or the addition for accumulating the partial products and the addition of the sum output and the carry output from the multiplying unit 214 are effected at the same time by the mantissa adder 220. After the normalization of the result by the shifter 221, the processing may be completed in most cases. Even when the correction in the mantissa correcting circuit 223 is necessary, the processing may be completed without the increase in the processing step number. Only when the addition of the round addition values by the mantissa adder 220 is made necessary again, the processing may be completed by the insertion of 1 step. The probability necessary in the insertion of the 1 step is as extremely small as two thirty-seconds (when it is assumed that the bit pattern of the mantissa is evenly distributed). As the result, in most case (thirty thirty-seconds in provability), the processing step number necessary in the single precision multiplication becomes as small as 2, the processing step number necessary in the double precision multiplication becomes as small as 5. Since the addition of the sum and the carry, the addition of the round addition value or the addition for accumulating the partial products are effected by the single mantissa adder 220, the necessary hardwares are less as compared with the conventional multiplying apparatus of the floating point data.

Although the present embodiment provides the example of realizing the rounding to nearest even mode, the directed rounding toward plus mode, the directed rounding toward minus mode and the directed rounding toward zero mode may be also coped with easily by change in the control of the round addition value generating circuit 217 and the mantissa correction control circuit 224. The operation on the round at these modes is similar to that of the first embodiment, and the inversion of the bit of the mantissa computation result and the control of the insertion of the processing step are effected in accordance with the control relation charts of Fig. 4, Fig. 5 and Fig. 6.

In the present embodiment, although a case where the multiplicand and the multiplier both are the single precision format, and the product is rounded into the single precision, and a case where the multiplicand and the multiplier both are, the double precision format, and the product is rounded into the double precision have been described, the product rounded into the given precision may be obtained by the corresponding of the generation logic of the sticky bit in the sticky bit generating circuit 222 into all the effective bits lower than the round bit even in any combination of the precision of multiplicand and multiplier or any round precision of the product.

In the present embodiment, although in accordance with the single precision, the double precision in the round precision, the mantissa correction control circuit 224 inspects the bits of 23rd bit through the 25th bit from the most significant bit of the output of the mantissa adder 220 or the bits of the 3rd bit through the least significant bit from the least significant bit and the overflow of 1 bit from the most significant bit at the addition time in the mantissa adder 220 and the sticky bit of 1 bit the sticky bit generating circuit 222 outputs, and the mantissa correction circuit 223 inverts the 24th bit or the 53rd bit from the most significant bit of the output of the shifter 221, the inspected bit and the inverted bit may be increased in the most significant bit direction. The probability necessary in the insertion of 1 step is halved for each increase in one bit of the inspected bit and the inverted bit, thus improving the computation speed.

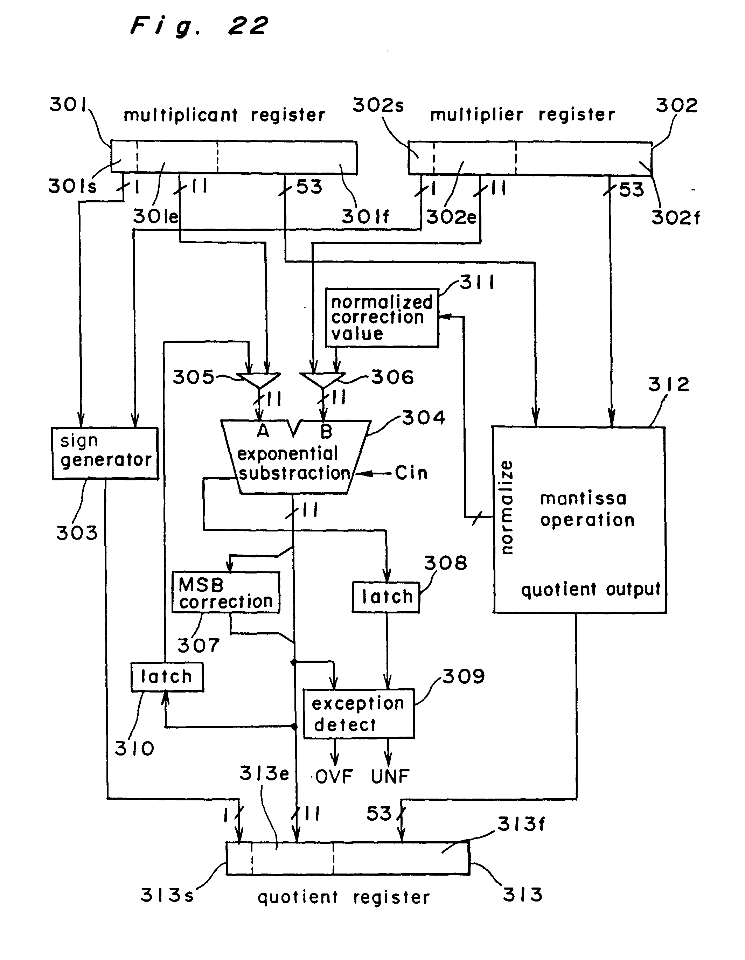

Fig. 22 shows a block diagram of the division apparatus of floating point data. In Fig. 22, reference numeral 301 is a dividend register for retaining the dividend, consisting of 1 bit of sign portion 301s, an exponent portion 301e of 11 bits, and 53 bits of mantissa portion 301f. Reference numeral 302 is a divisor register for retaining the divisor, consisting of a sign portion 302s of 1 bit, an exponent portion 302e of 11 bits and a mantissa portion 302f of 53 bits. The most significant bit of the dividend register mantissa portion 301f and the divisor mantissa portion 302f is so-called "hidden bit" each having the weight of $2^0$, being 1 at the time of the normalized number, the dividend register 301 and the divisor register 302 are both in conformity with the double precision format except for this bit. Reference numeral 303 is a sign generating circuit for reading the signs of the dividend and the divisor from the dividend register sign portion 301s and the divisor register sign portion 302s so as to generate the sign of the quotient, reference numeral 304 is an exponent subtractor of 11 bits for reading the exponents of the dividend and the divisor from the dividend register exponent portion 301e and the divisor register exponent portion 302e so as to compute the exponent of the quotient, the addition of the A input, the B input with 1's complement being taken, and the Cin as the carry input of 1 bit is effected. Reference numerals 305 and reference numeral 306 are respectively selectors of 11 bits for selecting the two inputs of the exponent subtractor 304, reference numeral 307 is a most significant bit correcting circuit for inverting the most signficant bit of the output of the exponent subtractor 304, reference numeral 308 is a latch of 1 bit for retaining the overflow from the most significant bit at the addition time in the subtractor adder 304, reference numeral 309 is an exception detecting circuit for detecting the overflow and the underflow of the quotient with respect to the computation precision detected from the value of the output of the exponent subtractor 304 and the value of the latch 308, reference numeral 310 is a latch of 11 bits for retaining the output of the exponent subtractor 304 inverted in the most significant bit by the most significant bit correcting circuit 307 so as to input them into the exponent subtractor 304 again through the selector 305, reference numeral 311 is a normalized correction value generating circuit for generating the constant for reducing the exponent by 1 through the normalization of the 1 bit shift of the mantissa of the quotient, reference numeral 312 is a well known art of mantissa computing unit for reading the dividend register mantissa portion 301f and the divisor register mantissa portion 302f so as to obtain the mantissa of the quotient, a signal whether or not it is required to be normalized, reference numeral 313 is a quotient register for retaining the quotient, consisting of a sign portion 313s of 1 bit, an exponent portion 313e of 11 bits and a mantissa portion 313f of 53 bits. The most significant bit of the quotient register mantissa portion 313f is a so-called "hidden bit" having the weight of $2^0$, is 1 at the time of the normalized number, and the quotient register 313 except for this bit is in conformity with the double precision format.

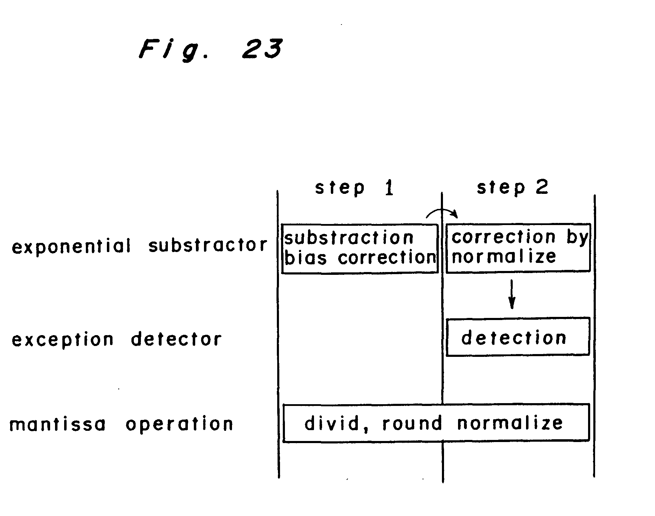

The division apparatus of the floating point data in the present embodiment composed as described hereinabove will be described in its operation hereinafter with the use of the operation flow chart of the division shown in Fig. 23. Fig. 23 shows the operations for each of the processing steps of the exponent subtractor 304, the exception detecting circuit 309, the mantissa computing unit 312.

(1) Before Processing Step Start

When the dividend and the divisor are the single precision format, they are expanded at the double precision format and are respectively accommodated in the dividend register 301 and the divisor register 302. When the dividend and the divisor are the double precision format, they are accommodated as they are into the dividend register 301 and the divisor register 302. In any case, the dividend register exponent portion 301e and the divisor register exponent portion 302e are both converted into the biased expression of the double precision (real exponent value = value of exponent portion - $1023_{(10)}$).

(2) Step 1

The exponent of the dividend retained in the dividend register exponent portion 301e is input into the A input of the exponent subtracter 304 by the selector 305, the exponent of the divisor retained in the divisor register exponent 302e is input into the B input of the exponent subtracter 304 by the selector 306 so as to effect the addition of $A + {}^-B + Cin$ in the exponent subtracter 304 with the carry input Cin being provided as 0 ($^-B$ is 1's complement of B. At Cin = 0, this addition is equivalent to A - B - 1). The most significant bit of the addition result is inverted by the most significant bit correcting circuit 307. The addition result with the most significant bit being inverted is accommodated in the latch 310. The fact that the value to be retained in the latch 310 is the exponent of the quotient correctly biased can be proved as follows.

(Proof start)

In ANSI/IEEE Standard for Binary Floating-Point Arithmetic P754, the bias value of the double precision is assumed as follows ($^-X$ is the inversion of X).

$$\text{bias} = 011\ 1111\ 1111_{(2)}$$

It may be transformed

$$ed = (e1\text{-}bias) - (e2 - bias) + bias$$

$$= e1 - e2 + bias$$

$$= e1 + {}^-e2 + 1 + bias$$

$$= (e1 + {}^-e2) + (bias + 1)$$

$$= (e1 + {}^-e2) + 100\ 0000\ 0000_{(2)}$$

wherein

e1: biased exponent portion of the dividend (11 bits)
e2: biased exponent portion of divisor (11 bits)
em: biased exponent portion of quotient (11 bits)

The addition of $100\ 0000\ 0000_{(2)}$ of the third term can be realized with the inversion of the most significant bit.

(Proof end)

The latch 308 retains the overflow in the exponent subtractor 304 at this time. The mantissa computing unit 312 reads the mantissas of the dividend and the divisor from the dividend register mantissa portion 301f and the divisor register mantissa portion 302f so as to start the division. At the same time, in the sign generating circuit 203, the signs of the dividend and the divisor are read from the divided register sign portion 301s and the divisor register sign portion 302s so as to take the exclusive or of both and generate the sign of the quotient for accommodating it in the quotient register sign portion 313s.

(3) Step 2

The mantissa computing unit 312 generates the mantissa portion of the quotient and effects the round. When the mantissa portion of the generated quotient is a denormalized number, namely, the value is 0.5 or more and less than 1, the mantissa computing unit 312 shifts the mantissa portion of the quotient generated by 1 bit in the most significant bit direction so as to normalize it, and the exponent subtracter 304 subtracts the constant 1 the normalized correction value generating circuit 311 outputs from the value of the latch 310 by the selector 305 and the selector 306. When the mantissa portion of the quotient generated is a normalized number, namely, when the value is 1 or more and less than 2, the mantissa computing unit 312 outputs the mantissa portion of the quotient generated as it is, and also, the exponent subtracter 304 also outputs the value of the latch 310, as it is, by the selector 305. Even in any case, the mantissa computing unit 312 accommodates the result with the lower 29 bits of the 53 bits of the result except for the least significant bit being masked in 0 when the round precision and the result of 53 bits except for the least significant bit when the round precision is in the double precision in the quotient register mantissa portion 313f. The exponent subtracter 304 accommodates the result into the quotient exponent portion 313e. The value of the latch 308 is not allowed to change. The exception detecting circuit 309 detects in accordance with the following logic the overflow (OVF) and the underflow (UNF) of the quotient by the output (which is assumed to be E) of the exponent adder 304 when the round precision is the single precision.

$$\text{if } E \geq 128_{(10)} \text{ then OVF} = 1 \text{ else OVF} = 0$$

$$\text{if } E \leq 996_{(10)} \text{ then UNF} = 1 \text{ else UNF} = 0$$

When the round precision is the double precision, in accordance with the following logic formula, the overflow (OVF) and the underflow (UNF) of the quotient are detected by the output (which is assumed to be $E_0, ..., E_{10}$) of the exponent subtracter 304 and the value of the latch 308 (which is assumed to be Ce).

$$\text{OVF} = \text{Ce} \cdot {}^{-}E_0 + E_0 \cdot E_1 \cdots E_{10}$$

$$\text{UNF} = {}^{-}\text{Ce} \cdot E_0 + (E_0 + E_1 + ... + E_{10})$$

wherein ${}^{-}X$ shows the inversion of X.

According to the present embodiment as described hereinabove, the addition of the bias value is realized with the subtraction of the (exponent of dividend) - (exponent of divisor) - 1 by the exponent subtracter 304 with the carry input Cin being made 0, and the inversion of the most significant bit with the most significant bit correcting circuit 307, and the biased exponent portion of the quotient of the floating point format applied as in the dividend and the divisor may be obtained with the single processing step, so that a step of correcting the bias of the exponent portion is not required. Also, the most significant bit correcting circuit 307 may be realized briefly by the exclusive or gate of 1 bit and the other special hardwares for bias correction are not required, thus reducing the hardwares.

As described hereinabove, the processing step number necessary to obtain the mantissa portion of the sum, difference and the product of the floating point data rounded with the specified round mode and the round precision may be reduced. Also, as compared with the conventional computing apparatus of the floating point data, less hardwares may be realized, with larger effects in the practical use.

The processing step number necessary to obtain the exponent portion of the product and quotient of the bias corrected floating point data may be reduced. Also, as compared with the conventional computing apparatus of the floating point data, less hardwares may be realized, with larger effects in the practical use.

**Claims**

1. An addition and subtraction method of floating point data comprising the steps of effecting either simultaneously the addition of the first, second mantissas aligned to the same exponent, and the addition of the round addition value to be determined uniformly with the round precision, the round mode and the computation result sign when the operation is the real mantissa addition which is an addition of the same sign or a subtraction of the different sign in the computation of the floating point data, or effecting simultaneously the subtraction of the first, second mantissas aligned to the same exponent, and the addition of the round addition value uniformly determined by the round precision, round mode and the computing result sign when the operation is the real mantissa subtraction which is a subtraction of the same sign or an addition of the different sign in the floating point data, shifting the above described computing result by 1 bit to normalize it when the computing result is denormalized number after the addition, subtraction of the above described first, second mantissas and the round addition values, inspecting a plurality of bits including the least significant bit determined by the type of the computation showing the real mantissa addition or the real mantissa subtraction and the round precision from the shifted computing results before or after the above described normalization, so as to judge - based on the bit pattern of the inspected bits - whether or not the above described normalized computing result down to the above described least significant bit to be determined by the round precision conforms with respect to the real mantissa addition or the real mantissa subtraction of the first mantissa and the second mantissa rounded into the given precision, whether the carry into the upper from the inspected bits conform, and only the inspected bits do not conform, whether or not the carry into the upper position from the inspected bits, the bits upper from the inspected bits do not conform, either, to effect, in accordance with the above described judgment results, whether the processing is completed, one portion or all the portions of the inspected bits of the above described normalized computation result is corrected so as to complete the processing, or the above described round addition value is added again with respect to the above described normalized computing result to complete the processing.

2. A method of addition, subtraction of floating point data as defined in claim 1, comprising the step of effecting an addition, subtraction of the first, second mantissas and the round addition values, an normalization of 1 bit shift, and an inspection at one processing step, further effecting the corrections of the partial or all the inspected bits within the above described processing step when the carry into the upper from the inspected bits conforms, and only the inspected bits do not conform, the readdition of the above described round addition value with respect to the above described normalized computing result is effected with the new processing step being inserted after the above described processing step completion when the carry into the upper from the inspected bits do not conform in.

3. A method of addition, subtraction of floating point data as defined in claim 1, comprising the step of effecting an addition of the round addition value at the real mantissa addition, as a numerical value with the bit having the weight of the -24 power of 2 being 1, the other bits being 0, when the round mode is the rounding to nearest ever mode in the single precision which has the fraction of twenty-three binary digits, when the sign of the computation result is positive in the directed rounding toward plus mode in the said single precision or when the sign of the computation result is negative in the directed rounding toward minus mode in the said single precision, as a numerical value with the bit having the weight of -53 power of 2 being 1, the other bits being 0 when the round mode is rounding to nearest even mode in the double precision which has the fraction of fifty-two binary digits, when the sign of the computation result is positive in the directed rounding toward plus mode in the above described double precision or when the sign of computation result is negative in the directed rounding toward minus mode in the above described double precision, as a numerical value with all the bits being 0 at the time except for the above description.

4. A method of addition, subtraction of floating point data as defined in claim 1, comprising the step of effecting an addition of the round addition value at the real mantissa addition, as a numerical value with the bit having the weight of the -23 power of 2 being 1, the other bits being 0, when the round mode is in the single precision which has the fraction of twenty-three binary digits, when the sign of the computation result is positive in the directed rounding toward plus mode in the said single precision or when the sign of the computation result is negative in the directed rounding toward minus mode in the said single precision, as a numerical value with the bit having the weight of -52 power of 2 being 1, the other bits being 0 mode when the round mode is in the double precision which has the fraction of fifty-two binary digits, when the sign of the computation result is positive in the directed rounding toward plus mode in the above described double precision or when the sign of computation result is negative in the directed rounding toward minus mode in the above described double precision, as a numerical value with all the bits being 0 at the time except for the above description.

5. A method of addition, subtraction of floating point data as defined in claim 1, comprising the step of effecting an addition of the round addition value at the real mantissa addition, as a numerical value with the bit having the weight of the -24 power of 2 being 1 and the bit having the weight smaller than it being 1, the other bits being 0, when the round mode is in the single precision which has the fraction of twenty-three binary digits, when the sign of the computation result is positive in the directed rounding toward plus mode in the said single precision or when the sign of the computation result is negative in the directed rounding toward minus mode in the said single precision, as a numerical value with the bit having the weight of -53 power of 2 being 1 and the bit having the weight smaller than it being 1, the other bits being 0 when the round mode is in the double precision which has the fraction of fifty-two binary digits, when the sign of the computation result is positive in the directed rounding toward plus mode in the above described double precision or when the sign of computation result is negative in the directed rounding toward minus mode in the above described double precision, as a numerical value with all the bits being 0 at the time except for the above description.

6. A method of addition, subtraction of floating point data as defined in claim 1, comprising the step of effecting an addition of the round addition value at the real mantissa subtraction, as a numerical value with the bit having the weight of -25 power of 2 being 1, the other bits being 0 when the round mode is the rounding to nearest even mode in the single precision which has the fraction of twenty-three binary digits, when the sign of the computation result is positive in the directed rounding toward plus mode in the said single precision or when the sign of the computation result is negative in the directed rounding toward minus mode in the said single precision, as a numerical value with the bit having the weight of -54 power of 2 being 1, the other bits being 0 when the round mode is the rounding to nearest ever mode in the double precision which has the fraction of fifty-two binary digits, when the sign of the computation result is positive in the directed rounding toward plus mode in the said double precision or when the sign of the computation result is negative in the directed rounding toward minus mode in the said double precision, as a numerical value with all the bits being 0 at the time except for the above description.

7. A method of addition, subtraction of floating point data as defined in claim 1, comprising the step of effecting an addition of the round addition value at the real mantissa subtraction, as a numerical value with the bit having the weight of -24 power of 2 being 1, the other bits being 0 when the round mode is in the single precision which has the fraction of twenty-three binary digits, when the sign of the computation result is positive in the directed rounding toward plus mode in the said single precision or when the sign of the computation result is negative in the directed rounding toward minus mode in the said single precision, as a numerical value with the bit having the weight of -53 power of 2 being 1, the other bits being 0 when the round mode is in the double precision which has the fraction of fifty-two binary digits, when the sign of the computation result is positive in the directed rounding toward plus mode in the said double precision or when the sign of the computation result is negative in the directed rounding toward minus mode in the said double precision, as a numerical value with all the bits being 0 at the time except for the above description.

8. A method of addition, subtraction of floating point data as defined in claim 1, comprising the step of effecting an addition of the round addition value at the real mantissa subtraction, as a numerical value with the bit having the weight of -25 power of 2 being 1 and the bit having the weight smaller than it being 1, the other bits being 0 when the round mode is in the single precision which has the fraction of twenty-three binary digits, when the sign of the computation result is positive in the directed rounding toward plus mode in the said single precision or when the sign of the computation result is negative in the directed rounding toward minus mode in the said single precision, as a numerical value with the bit having the weight of -54 power of 2 being 1 and the bit having the weight smaller than it being 1, the other bits being 0 when the round mode is in the double precision which has the fraction of fifty-two binary digits, when the sign of the computation result is positive in the directed rounding toward plus mode in the said double precision or when the sign of the computation result is negative in the directed rounding toward minus mode in the said double precision, as a numerical value with all the bits being 0 at the time except for the above description.

9. A method of addition, subtraction of floating point data as defined in claim 1, comprising the steps of effecting an inspection of the normalized computation results after the normalization, where the inspected bits are three bits having the weights of -22 power of 2, -23 power of 2 and -24 power of 2, and one bit which is the logical or of bits having the weight smaller than them when the operation of the floating point data is the real mantissa addition, and the round precision is the single precision which has the fraction of twenty-three binary digits, three bits having the weights of -51 power of 2, -52 power of 2 and -53 power of 2, and one bit which is the logical or of bits having the weight smaller than them when the operation of the floating point data is the real mantissa addition, and the round precision is the double precision which has the fraction of fifty-second binary degits, the three bits having the weights of -23 power of 2, -24 power of 2 and -25 power of 2, and one bit which is the logical or of bits having the weight smaller than them at the real mantissa subfraction, and at the said single precision, the three bits having the weights of -52 power of 2, -53 power of 2 and -54 power of 2, and one bit which is the logical or of bits having the weight smaller than them at the real mantissa subfraction, and at the said double precision.

10. A method of addition, subtraction of floating point data as defined in claim 1, comprising the step of effecting a correction where the corrected bits are a bit having the weight of -23 power of 2 or bits having the weights of -22 power of 2 and -23 power of 2 in the single precision which has the fraction of twenty-third binary digits, a bit having the weight of -52 power of 2 or bits having the weights of -51 power of 2 and -52 power of 2 in the double precision which has the fraction of fifty-second binary digits.

11. A multiplying method of the floating point data comprising the steps of dividing between the sum and the carry, obtaining the product by multiplying the respective mantissa portions of the multiplicand of the floating point data and the multiplier, adding, computing the sum and the carry, after the multiplication, and the round addition value to be determined uniformly by the round precision, the round mode and the signs of the multiplicand and the multiplier, shifting, normalizing the operation by 1 bit when the operation results are the non-normalized numbers after the operation inspecting a plurality of bits including the least significant bits to be determined by the round precision from among the operation results normalized after the normalization so as to judge based on the bit pattern of the inspected bits whether or not up to the least significant bit fixed by the round precision from among the normalized operation results conforms with respect to the product of the mantissa of the multiplicand rounded to the given precision and the product of the mantissa of the multiplier, whether the carry to the upper from the inspected bit conforms, but the inspected bit only does not conform, whether the carry to the upper position from the inspected bit does not conform, the upper bit from the inspected bit does not, either, so as to effect whether or not the processing is completed in accordance with the judging results, whether or not one portion or all the portions of the bits inspected with respect to the above described normalized operation results are corrected to complete the processing, the round addition values are added again with respect to the normalized operation results to complete the processing.

12. A method of multiplying floating point data as defined in claim 11, comprising the steps of effecting the addition of the sum, the carry, the round addition value, the normalization of 1 bit shift and the inspection in one processing step, further effecting the correction of the partial portion or all the portions of the inspected bit within the processing step when the carrying into the upper from the inspection bit is conformed to, and the inspected bit only is not conformed with the results of the inspection, effecting the readdition of the round addition value with respect to the normalized operation results through the insertion of the new processing step after the processing step completion with the carrying into the upper from the inspection bit with the results of the inspection results is not conformed to.

13. A method of multiplying floating point data as defined in claim 11, comprising the steps of having the round addition value as a numeral value with a bit having the weight of -24 power of 2 being 1, the other bit being 0 in the single precision having the twenty-three places of the decimals binary in the round precision and in the latest even rounding toward plus mode when the signs of the operation results are positive in the directed round mode with the single precision or when the signs of the operation results are negative in the directed round mode with the single precision sign, a numerical value with a bit having the weight of -53 power of 2 being 1, the other bit being 0 in the double precision having down to fifty-two places of the decimal binary in the round precision, and in the latest even rounding toward plus mode when the signs of the operation results are positive in the directed round mode in the double precision or when the output signs are negative in the directed round mode in the double precision, all the bits are 0 in numerical value at the time except for the above description.

14. A method of multiplying floating point data as defined in claim 11, comprising the steps of having the round addition value as a numeral value with a bit having the weight of -23 power of 2 being 1, the other bit being 0 in the single precision having the twenty-three places of the decimals binary in the round precision when the signs of the operation results are positive in the directed rounding toward plus mode when the signs of the operation results are negative in the directed round mode in the single precision, a numerical value with a bit having the weight of -52 power of two being 1, the other bit being 0 in the double precision having down to fifty-two places of the decimal binary in the round precision, when the signs of the operation results are positive in the directed rounding toward plus mode when the output signs are negative in the directed round mode in the double precision, all the bits are 0 in numerical value at the time except for the above description.

15. A method of multiplying floating point data as defined in claim 11, comprising the steps of having the round addition value as a numeral value with a bit having the weight of -24 power of 2, a bit having the weight smaller than it being 1, the other bit being 0 in the single precision having the twenty-three places of the decimals binary in the round precision when the signs of the operation results is positive in the directed rounding toward minus mode or when the signs of the operation results are negative in the directed round mode in the single precision, a numerical value with a bit having the weight of -53 power of 2, a bit having the weight smaller than it being 1, the other bit being 0 in the double precision having down to fifty-two places of the decimal binary in the round precision, when the signs of the operation results are positive in the directed round mode in the double precision or when the output signs are negative in the directed round mode in the double precision, all the bits are 0 in numerical value at the time except for the above description.

16. A method of multiplying floating point data as defined in claim 11, comprising the steps of having an inspection bit of the normalized operation results after the normalization as 3 bits having the weights of -22 power of two, -23 power of 2 and -24 power of 2, and a 1 bit which has took the logical or of each bit having the weight smaller than it at the single precision having down to twenty-three places of decimals binary in the round precision, 3 bits having the weights of -51 power of 2, -52 power of 2 and -53 power of 2, and a 1 bit which has took the logical or of each bit having the weight smaller than it and the round precision is at the double precision having down to fifty-second places of decimals binary in the round precision.

17. A method of multiplying floating point data as defined in claim 11, comprising the steps of having a correcting bit in accordance with the judgment results as a bit having the weight of -23 power of 2 or a bit having the weights of -22 power of 2 and -23 power of 2 in the single precision having down to twenty-three places of decimals binary in the round precision, a bit having the weight of -52 power of 2 or a bit having the weights of -51 power of 2 and -52 power of 2 in the double precision having down to fifty-two places of decimals binary in the round precision.

18. A multiplying apparatus of floating point data comprising a multiplicand retaining means (201) for retaining the mantissa portions of the multiplicand of the floating point type, a multiplier retaining means (202) for retaining the mantissa portion of the multiplier of the floating point type, a mantissa multiplying means (214) for outputting where at least one input bit width from two inputs is shorter than the length of the mantissa portion of the multiplicand and the multiplier so as to output the sum and the carry of the bit width at least twice as much as the input with respect to the input, a partial multiplicand selecting means (212) for dividing the most significant bit of the mantissa portion of the multiplicand through the least significant bit retained in the multiplicand retaining means (201) into the partial mantissa portion of the bit width of the multiplicand input of the plurality of mantissa multiplying means (214) when the bit width of the multiplicand input of the mantissa multiplying means is shorter than the length of the mantissa portion of the multiplicand, a partial multiplier selecting means (213) for dividing the most significant bit of the mantissa portion of the multiplier retained in the multiplier retaining means through the least significant bit into the partial mantissa portion of the bit width of the multiplier input of the plurality of mantissa multiplying means when the bit width of the multiplier input of the mantissa multiplying means is shorter than the length of the mantissa portion of the multiplier so as to select, output one for each of the processing steps from among them, a round addition value generating means (217) for generating the round addition value determined uniformly by the round precision, the round mode and the signs of the two floating point data, a mantissa adding means (220) for effecting simultaneously the addition of the three of the sum output, the carry output of the mantissa multiplying means (214) and the round addition value from the round addition value generating means (217) at the first step of the processing so as to generate the first partial product, simultaneously the addition of the three of the sum output of the mantissa multiplying means (214), the carry output and the partial product generated and shifted at the step just before the step so as to generate the new partial product, a shift means (221) for shifting in the least significant bit direction by the number of the bits determined in the position of the partial mantissa portion of the multiplier and the multiplicand multiplied in the mantissa multiplying means (214) the partial product obtained from the mantissa adding means (220) at the first or intermediate step of the processing, shifting the operation result, normalizing them when the operation results to be obtained from the mantissa adding means (220) are the disnormalized numbers at the last step, a partial product retaining means (225) for retaining as the input in the mantissa adding means of the next step the output of the shift means at the first or intermediate step of the processing, a operation result inspecting means (222) for inspecting the respective bits of the shift overflow in the shift means (221) in the first or intermediate step of the processing and a plurality of bits including the least significant bits determined by the round precision of the outputs of the shift means (221) in the final step of the processing so as to judge by judging means (224) based on the bit pattern of the inspected bits - whether or not down to the least significant bit to be determined by the round precision in the output of the shift means (221) in the final step of the processing conforms with respect to the product of the mantissa of the multiplicand rounded into the given precision and the mantissa of the above described multiplier, whether or not the carry to the upper from the inspected bit conforms, but the inspected bit only does not conform, whether or not the carry to the upper from the inspected bit, the bit upper than inspected bits does not conform, either, a round correcting means (223) for correcting one portion or all the portions of the bit the operation result inspecting means (222) inspected with respect to the output of the shift means, in the partial multiplicand selecting means (212) and the partial multiplier selecting means (213), the portions of the mantissa portions of the multiplicand and the multiplier are selected in order from the lower and all the combinations are selected, and are input into the mantissa multiplying means (214), the sum of three, the sum output to be obtained in order, the carry output and the round addition value from the round addition value generating means (217) or the value retained by the partial product retaining means (225) are obtained by the mantissa adding means, the result is shifted by the shifting means (221), and accommodated again in the partial product retaining means (225) or the final computation result is normalized by the shifting means (221), thereafter the processing is completed when the operation result inspecting means (222) has judged to conform with respect to the mantissa of the product rounded to the given precision as far as the least significant bit to be fixed by the round precision out of the output of the shifting means (221), the partial or all the corrections of the output of the shift means (221) by the above described round correcting means (223) so as to complete the processing when the operation results inspecting means (222) has judged that the carrying to the upper from the inspected bit conforms, but the inspected bit only does not conform, the round addition values are added so as to complete the processing by the round adding value generating means (217) and the mantissa addition means (220) with respect to the output of the shift means (221).

19. A multiplying apparatus of floating point data as defined in claim 18, wherein the addition of the sum output, the carry output in the mantissa adding means (220) of the final step of the processing, and the value retained in the partial product retaining means (225), and a normalization in shifting means (221) and an inspection in the operation result inspecting means (222) are effected at one machine cycle, the partial or all the corrections of the inspected bits in the round correcting means are further effected within the machine cycle when the carrying into the upper from the inspection bit conforms, with only the inspected bit does not conform as the results of the inspection, the addition of the round addition value in the mantissa addition means (220) is effected through the insertion of the new machine cycle after the machine cycle when the carrying into the upper from the inspection bit does not conform with the result of the inspection.

20. A multiplying apparatus of floating point data as defined in claim 18, wherein the addition value to be generated by the round addition value generating means (217) is a numeral value with a bit having the weight of -24 power of 2 being 1, the other bit being 0 in the single precision having the twenty-three places of the decimals binary in the round precision and in the latest even rounding toward plus mode when the signs of the operation result is positive in the directed rounding toward plus mode when the signs of the computation result is negative in the directed rounding toward minus mode in the above single precision, a numerical values with a bit having the weight of -53 power of 2 being 1, the other bits being 0 in the double precision having down to fifty-two places of the decimal binary in the round precision, and in the latest even round mode when the signs of the operation result is positive in the directed rounding toward plus mode and in the double precision and the directed rounding toward plus mode when the output signs are negative in the directed rounding toward minus mode in the double precision, a numerical value with all the bits being 0 except for the above description.

21. A multiplying apparatus of floating point data as defined in claim 18, wherein the round addition value to be generated by the round addition value generating means (217) is a numerical value with a bit having the weight of -23 power of 2 being 1, the other bits being 0 in the single precision having the twenty-three places of the decimals binary in the round precision when the signs of the operation result is positive in the directed rounding toward plus mode or when the signs of the operation result is negative in the directed rounding toward minus mode in the single precision, a numerical value with a bit having the weight of -52 power of 2 being 1, the other bits being 0 in the double precision having down to fifty-two places of the decimal binary in the round precision, when the output signs are positive in the directed rounding toward plus mode when the output signs are negative in the directed rounding toward minus mode in the double precision, a numerical value with all the bits being 0 except for the above description.

**22.** A multiplying apparatus of floating point data as defined in claim 18, wherein the round addition value to be generated by the round addition value generating means (217) is a numerical value with a bit having the weight of -24 power of 2, and a bit having the weight smaller than it being 1, the other bits being 0 in the single precision having the twenty-three places of the decimals binary in the round precision when the signs of the operation results are positive in the directed rounding toward plus mode when the signs of the operation results are negative in the directed rounding toward minus mode in the single precision, a numerical value with a bit having the weight of -53 power of 2, and a bit having the weight smaller that it being 1, the other bits being 0 in the double precision having down to fifty-two places of the decimal binary in the round precision when the signs of the operation results are positive in the directed rounding toward plus mode when the output signs are negative in the directed rounding toward minus mode in the double precision, a numerical value with all the bits being 0 except for the above description.

**23.** A multiplying apparatus of floating point data as defined in claim 18, wherein an inspection bit by the computation results inspecting means shows 3 bits having the weights of -22 power of 2, -23 power of 2 and -24 power of 2, a 1 bit which has taken the logical or of bit having the weight smaller than it at the single precision having down to twenty-three places of decimals binary in the round precision, 3 bits having the weights of -51 power of 2, -52 power of 2 and -53 power of 2, and a 1 bit which has took the logical or of each bit having the weight smaller than it at the double precision having down to fifty-two places of decimals binary in the round precision.

**24.** A multiplying apparatus of floating point data as defined in claim 18, wherein a correcting bit by a correcting means is a bit having the weight of -23 of 2, a bit having the weight the weights of -22 power of 2 and -23 power of 2 in the single precision having down to twenty-three places of decimals binary in the round precision, a bit having the weight of -52 power of 2 or a bit having the weights of -51 power of 2 and -52 of 2 in the double precision having down to fifty-two places of decimals binary in the round precision.

**Patentansprüche**

**1.** Additions- und Substraktionsverfahren für Gleitkommadaten, mit den Schritten, daß man

entweder gleichzeitig eine Addition der ersten, zweiten Mantisse, die am gleichen Exponenten ausgerichtet sind, und die Addition des Rundungsadditionswertes, der einheitlich mit der Rundungsgenauigkeit, dem Rundungsmodus und dem Vorzeichen des Berechnungsergebnisses zu bestimmen ist, durchführt, wenn die Operation eine echte Mantissenaddition ist, die eine Addition mit gleichem Vorzeichen oder eine Substraktion mit unterschiedlichen Vorzeichen bei der Berechnung der Gleitkommadaten darstellt, oder gleichzeitig eine Subtraktion der ersten, zweiten Mantisse, die am gleichen Exponenten ausgerichtet sind, und die Addition des Rundungsadditionswertes, der einheitlich mit der Rundungsgenauigkeit, dem Rundungsmodus und dem Vorzeichen des Berechnungsergebnisses bestimmt wurde, durchführt, wenn die Operation eine echte Mantissensubstraktion ist, die eine Subtraktion mit gleichem Vorzeichen oder eine Addition mit unterschiedlichem Vorzeichen der Gleitkommadaten ist,

das beschriebene Berechnungsergebnis zum Normieren um 1 Bit verschiebt, wenn das Berechnungsergebnis nach der Addition, Subtraktion der beschriebenen ersten, zweiten Mantisse und des Rundungsadditionswertes eine entnormierte Zahl ist,

mehrere Bits untersucht unter Einschluß des niederwertigsten Bits, die durch die Berechnungsart ermittelt wurden, die die echte Mantissenaddition oder die echte Mantissensubtraktion und die Rundungsgenauigkeit aus den verschobenen Berechnungsergebnissen vor oder nach der beschriebenen Normierung aufweist, um - auf der Grundlage des Bitmusters der untersuchten Bits - zu beurteilen,

ob oder nicht das beschriebene normierte Berechnungsergebnis bis hinab zum beschriebenen niederwertigsten Bit, welches mit der Rundungsgenauigkeit zu ermitteln ist, in Bezug auf die echte Mantissenaddition oder die echte Mantissensubtraktion der ersten Mantisse und der zweiten Mantisse, die mit der gegebenen Genauigkeit gerundet wurden, übereinstimmt, ob der Übertrag aus den untersuchten Bits in die obere Stelle übereinstimmt und nur die untersuchten Bits nicht überstimmen, ob oder nicht der Übertrag aus den untersuchten Bits in die obere Stelle, die Bits oberhalb der untersuchten Bits ebenfalls nicht übereinstimmen, um zu bewirken,

ob gemäß den beschriebenen Beurteilungsergebnissen die Datenverarbeitung beendet ist, ein Teil oder alle Teile des beschriebenen normierten Berechnungsergebnisses korrigiert sind und die Datenverarbeitung beendet ist, oder der beschriebene Rundungsadditionswert erneut bezüglich des beschriebenen normierten Berechnungsergebnisses addiert wird, um die Datenverarbeitung zu beenden.

2. Verfahren zur Addition, Subtraktion von Gleitkommadaten nach Anspruch 1, mit dem Schritt, daß man die Addition, Subtraktion der ersten, zweiten Mantisse und des Rundungsadditionswertes, die eine Normierung durch Verschiebung um ein Bit und die Untersuchung in einem Verfahrensschritt durchführt, außerdem die Korrekturen des Teils oder aller untersuchten Bits innerhalb des beschriebenen Verfahrensschritts durchführt, wenn der Übertrag aus den untersuchten Bits in die obere Stelle übereinstimmt und nur die untersuchten Bits nicht übereinstimmen,
wobei die erneute Addition des beschriebenen Rundungsadditionswertes bezüglich der beschriebenen normierten Berechnungsergebnisse beim neuen Verfahrensschritt durchgeführt wird, der nach der Beendigung des beschriebenen Verfahrensschrittes eingeschoben wird, wenn der Übertrag aus den untersuchten Bits in die obere Stelle nicht übereinstimmt.

3. Verfahren zur Addition, Subtraktion von Gleitkommadaten nach Anspruch 1, mit dem Schritt, daß man bei der echten Mantissenaddition eine Addition des Rundungsadditionswertes als numerischen Wert durchführt, wobei das Bit mit dem Stellenwert 2 hoch -24 den Wert 1 hat und die anderen Bits 0 sind, wenn der Rundungsmodus einer Rundung zum nächstgelegenen geradzahligen Modus mit einfacher Genauigkeit entspricht, die den Anteil von dreiundzwanzig Binärstellen hat, wenn das Vorzeichen des Berechnungsergebnisses bei der gerichteten Rundung in Richtung auf den Plusmodus bei der einfachen Genauigkeit positiv ist, oder wenn das Vorzeichen des Berechnungsergebnisses bei der gerichteten Rundung in Richtung auf den Minusmodus bei der einfachen Genauigkeit negativ ist,

als numerischer Wert, wobei das Bit mit dem Stellenwert 2 hoch -53 den Wert 1 hat und die anderen Bits 0 sind, wenn der Rundungsmodus eine Rundung zum nächstgelegenen geradzahligen Modus mit doppelter Genauigkeit entspricht, die den Anteil von zweiundfünfzig Binärstellen hat,
wenn das Vorzeichen des Berechnungsergebnisses bei der gerichteten Rundung in Richtung auf den Plusmodus bei der beschriebenen doppelten Genauigkeit positiv ist, oder wenn das Vorzeichen des Berechnungsergebnisses bei der gerichteten Rundung in Richtung auf den Minusmodus bei der beschriebenen doppelten Genauigkeit negativ ist, als numerischer Wert, wobei alle Bits zu der Zeit 0 sind, mit Ausnahme der obigen Beschreibung.

4. Verfahren zur Addition, Subtraktion von Gleitkommadaten nach Anspruch 1, mit dem Schritt, daß man bei der echten Mantissenaddition eine Addition des Rundungsadditionswertes als numerischen Wert durchführt, wobei das Bit mit dem Stellenwert 2 hoch -23 den Wert 1 hat und die anderen Bits 0 sind, wenn der Rundungsmodus mit einfacher Genauigkeit durchgeführt wird, die einen Anteil von dreiundzwanzig Binärstellen hat, wenn das Vorzeichen des Berechnungsergebnisses bei der gerichteten Rundung in Richtung auf den Plusmodus bei der einfachen Genauigkeit positiv ist, oder wenn das Vorzeichen des Berechnungsergebnisses bei der gerichteten Rundung in Richtung auf den Minusmodus bei der einfachen Genauigkeit negativ ist,

als numerischer Wert, wobei das Bit mit dem Stellenwert 2 hoch -52 den Wert 1 hat und die anderen Bits 0 sind, wenn der Rundungsmodus mit doppelter Genauigkeit durchgeführt wird, die einen Anteil von zweiundfünfzig Binärstellen hat,
wenn das Vorzeichen des Berechnungsergebnisses bei der gerichteten Rundung in Richtung auf den Plusmodus bei der beschriebenen doppelten Genauigkeit positiv ist, oder wenn das Vorzeichen des Berechnungsergebnisses bei der gerichteten Rundung in Richtung auf den Minusmodus bei der beschriebenen doppelten Genauigkeit negativ ist, als numerischer Wert, wobei alle Bits zu der Zeit 0 sind, mit Ausnahme der obigen Beschreibung.

5. Verfahren zur Addition, Subtraktion von Gleitkommadaten nach Anspruch 1, mit dem Schritt, daß man bei der echten Mantissenaddition eine Addition des Rundungsadditionswertes als numerischen Wert durchführt, wobei das Bit mit dem Stellenwert 2 hoch -24 den Wert 1 hat und das Bit mit kleinerem Stellenwert 1 ist, wobei die anderen Bits 0 sind, wenn der Rundungsmodus mit einfacher Genauigkeit durchgeführt wird, die den Anteil von dreiundzwanzig Binärstellen hat, wenn das Vorzeichen des Berechnungsergebnisses bei der gerichteten Rundung in Richtung auf den Plusmodus bei der einfachen Genauigkeit positiv ist, oder wenn das Vorzeichen des Berechnungsergebnisses bei der gerichteten Rundung in Richtung auf den Minusmodus bei der einfachen Genauigkeit negativ ist,

als numerischer Wert, wobei das Bit mit dem Stellenwert 2 hoch -53 den Wert 1 hat und das Bit mit kleinerem Stellenwert 1 sind, wobei die anderen Bits 0 sind, wenn der Rundungsmodus mit doppelter Genauigkeit durchgeführt wird, die den Anteil von zweiundfünfzig Binärstellen hat,

wenn das Vorzeichen des Berechnungsergebnisses bei der gerichteten Rundung in Richtung auf den Plusmodus bei der beschriebenen doppelten Genauigkeit positiv ist, oder wenn das Vorzeichen des Berechnungsergebnisses bei der gerichteten Rundung in Richtung auf den Minusmodus bei der beschriebenen doppelten Genauigkeit negativ ist, als numerischer Wert, wobei alle Bits zu der Zeit 0 sind, mit Ausnahme der obigen Beschreibung.

6. Verfahren zur Addition, Subtraktion von Gleitkommadaten nach Anspruch 1, mit dem Schritt, daß man bei der echten Mantissensubtraktion eine Addition des Rundungsadditionswertes als numerischen Wert durchführt,

wobei das Bit mit dem Stellenwert 2 hoch -25 den Wert 1 hat und die anderen Bits 0 sind, wenn der Rundungsmodus einer Rundung zum nächstgelegenen geradzahligen Modus mit einfacher Genauigkeit entspricht, die den Anteil von dreiundzwanzig Binärstellen hat, wenn das Vorzeichen des Berechnungsergebnisses bei der gerichteten Rundung in Richtung auf den Plusmodus bei der einfachen Genauigkeit positiv ist, oder wenn das Vorzeichen des Berechnungsergebnisses bei der gerichteten Rundung in Richtung auf den Minusmodus bei der einfachen Genauigkeit negativ ist, als numerischer Wert, wobei das Bit mit dem Stellenwert 2 hoch -54 den Wert 1 hat und die anderen Bits 0 sind, wenn der Rundungsmodus eine Rundung zum nächstgelegenen geradzahligen Modus mit doppelter Genauigkeit darstellt, die den Anteil von zweiundfünfzig Binärstellen hat, wenn das Vorzeichen des Berechnungsergebnisses bei der gerichteten Rundung in Richtung auf den Plusmodus bei der beschriebenen doppelten Genauigkeit positiv ist, oder wenn das Vorzeichen des Berechnungsergebnisses bei der gerichteten Rundung in Richtung auf den Minusmodus bei der beschriebenen doppelten Genauigkeit negativ ist, als numerischer Wert, wobei alle Bits zu der Zeit 0 sind, mit Ausnahme der obigen Beschreibung.

7. Verfahren zur Addition, Subtraktion von Gleitkommadaten nach Anspruch 1, mit dem Schritt, daß man bei der echten Mantissensubtraktion eine Addition des Rundungsadditionswertes als numerischen Wert durchführt,

wobei das Bit mit dem Stellenwert 2 hoch -24 den Wert 1 hat und die anderen Bits 0 sind, wenn der Rundungsmodus mit einfacher Genauigkeit durchgeführt wird, die den Anteil von dreiundzwanzig Binärstellen hat, wenn das Vorzeichen des Berechnungsergebnisses bei der gerichteten Rundung in Richtung auf den Plusmodus bei der einfachen Genauigkeit positiv ist, oder wenn das Vorzeichen des Berechnungsergebnisses bei der gerichteten Rundung in Richtung auf den Minusmodus bei der einfachen Genauigkeit negativ ist, als numerischer Wert, wobei das Bit mit dem Stellenwert 2 hoch -53 den Wert 1 hat und die anderen Bits 0 sind, wenn der Rundungsmodus mit doppelter Genauigkeit durchgeführt wird, die den Anteil von zweiundfünfzig Binärstellen hat,

wenn das Vorzeichen des Berechnungsergebnisses bei der gerichteten Rundung in Richtung auf den Plusmodus bei der beschriebenen doppelten Genauigkeit positiv ist, oder wenn das Vorzeichen des Berechnungsergebnisses bei der gerichteten Rundung in Richtung auf den Minusmodus bei der beschriebenen doppelten Genauigkeit negativ ist, als numerischer Wert, wobei alle Bits zu der Zeit 0 sind, mit Ausnahme der obigen Beschreibung.

8. Verfahren zur Addition, Subtraktion von Gleitkommadaten nach Anspruch 1, mit dem Schritt, daß man bei der echten Mantissensubtraktion eine Addition des Rundungsadditionswertes als numerischen Wert durchführt,

wobei das Bit mit dem Stellenwert 2 hoch -25 den Wert 1 hat und das Bit mit kleinerem Stellenwert 1 ist, wobei die anderen Bits 0 sind, wenn der Rundungsmous mit einfacher Genauigkeit durchgeführt wird, die den Anteil von dreiundzwanzig Binärstellen hat, wenn das Vorzeichen des Berechnungsergebnisses bei der gerichteten Rundung in Richtung auf den Plusmodus bei der einfachen Genauigkeit positiv ist, oder wenn das Vorzeichen des Berechnungsergebnisses bei der gerichteten Rundung in Richtung auf den Minusmodus bei der einfachen Genauigkeit negativ ist, als numerischer Wert, wobei das Bit mit dem Stellenwert 2 hoch -54 den Wert 1 hat und das Bit mit kleinerem Stellenwert 1 ist, wobei die anderen Bits 0 sind, wenn der Rundungsmodus mit doppelter Genauigkeit durchgeführt wird, die den Anteil von zweiundfünfzig Binärstellen hat,

wenn das Vorzeichen des Berechnungsergebnisses bei der gerichteten Rundung in Richtung auf den Plusmodus bei der beschriebenen doppelten Genauigkeit positiv ist, oder wenn das Vorzeichen des Berechnungsergebnisses bei der gerichteten Rundung in Richtung auf den Minusmodus bei der beschriebenen doppelten Genauigkeit negativ ist, als numerischer Wert, wobei alle Bits zu der Zeit 0 sind, mit Ausnahme der obigen Beschreibung.

9. Verfahren zur Addition, Subtraktion von Gleitkommadaten nach Anspruch 1, mit den Schritten, daß man eine Untersuchung der normierten Berechnungsergebnisse nach der Normierung durchführt, wobei die untersuchten Bits drei Bits sind, die die Stellenwerte 2 hoch -22, 2 hoch -23 und 2 hoch -24 haben und ein Bit, welches die logische ODER-Verknüpfung der Bits darstellt, einen kleineren Stellenwert als diese hat, wenn die Operation der Gleitkommadaten die echte Mantissenaddition darstellt, und die Rundungsgenauigkeit mit einfacher Genauigkeit durchgeführt wird, die den Anteil von dreiundzwanzig Binärstellen hat, wobei drei Bits die Stellenwerte 2 hoch-51, 2 hoch -52 und 2 hoch -53 haben und ein Bit, welches die logische ODER-Verknüpfung der Bits darstellt, einen kleineren Stellenwert als diese hat, wenn die Operation der Gleitkommadaten die echte Mantissenaddition ist, und die Rundungsgenauigkeit mit doppelter Genauigkeit durchgeführt wird, die den Anteil von zweiundfünfzig Binärstellen hat, wobei die drei Bits die Stellenwerte von 2 hoch -23, 2 hoch -24 und 2 hoch -25 haben und ein Bit, welches die logische ODER-Verknüpfung der Bits darstellt, einen kleineren Stellenwert als diese bei der echten Mantissensubtraktion hat, und wobei bei dieser einfachen Genauigkeit die drei Bits die Stellenwerte 2 hoch -52, 2 hoch -53 und 2 hoch -54 haben und ein Bit, welches die logische ODER-Verknüpfung der Bits darstellt, einen kleineren Stellenwert als diese bei der echten Mantissensubtraktion und der doppelten Genauigkeit hat.

10. Verfahren zur Addition, Subtraktion von Gleitkommadaten nach Anspruch 1, mit dem Schritt, daß man eine Korrektur durchführt, wobei die korrigierten Bits ein Bit mit dem Stellenwert von 2 hoch -23 oder Bits mit den Stellenwerten von 2 hoch -22 und 2 hoch -23 bei der einfachen Genauigkeit sind, die den Anteil von dreiundzwanzig Binärstellen hat, ein Bit mit dem Stellenwert von 2 hoch -52 oder Bits mit den Stellenwerten von 2 hoch -51 und 2 hoch -52 bei der doppelten Genauigkeit, die den Anteil von zweiundfünfzig Binärstellen hat.

11. Multiplikationsverfahren für Gleitkommadaten mit den Schritten der Trennung zwischen der Summe und dem Übertrag, Ermittlung des Produkts durch Multiplikation der jeweiligen Mantissenanteile des Multiplikanden der Gleitkommadaten und des Multiplikators, Addition, Ermittlung der Summe und des Übertrags nach der Multiplikation und des Rundungsadditionswertes, die einheitlich zu bestimmen sind mit der Rundungsgenauigkeit, dem Rundungsmodus und dem Vorzeichen des Multiplikanden und des Multiplikators, Verschiebung, Normieren der Operation um 1 Bit, wenn die Ergebnisse der Operation nach der Operation entnormierte Zahlen sind,

Untersuchung von mehreren Bits einschließlich des niederwertigsten Bits, welches zu ermitteln ist mit der Rundungsgenauigkeit aus den Ergebnissen der Operation, die nach der Normierung normiert sind, um auf der Grundlage des Bitmusters der untersuchten Bits zu beurteilen, ob oder nicht das niederwertigste Bit, welches durch die Rundungsgenauigkeit aus den normierten Operationsergebnissen fixiert wurde, in Bezug auf das Produkt der Mantisse des Multiplikanden, der zur gegebenen Genauigkeit gerundet wurde, und das Produkt der Mantisse des Multiplikators übereinstimmt, ob der Übertrag aus dem untersuchten Bit in die obere Stelle übereinstimmt und nur das untersuchte Bit nicht überstimmt, ob der Übertrag aus dem untersuchten Bit in die obere Stelle nicht übereinstimmt, das Bit oberhalb des untersuchten Bits ebenfalls nicht, um zu bewirken, ob oder nicht gemäß den Beurteilungsergebnissen die Datenverarbeitung beendet ist, ob oder nicht ein Teil oder alle Teile der untersuchten Bits, die bezüglich der beschriebenen Ergebnisse der Normierungsoperation untersucht wurden, korrigiert sind und die Datenverarbeitung beendet ist, oder die Rundungsadditionswerte erneut bezüglich der beschriebenen normierten Berechnungsergebnisse addiert werden, um die Datenverarbeitung zu beenden.

12. Multiplikationsverfahren für Gleitkommadaten nach Anspruch 11, mit den Schritten, daß man die Addition der Summe, des Übertrags, des Rundungsadditionswertes, die Normierung durch Verschiebung um ein Bit und die Untersuchung in einem Verfahrensschritt durchführt, weiterhin die Korrektur des Teiles oder aller Teile des untersuchten Bits bei dem Verfahrensschritt durchführt, wenn der Übertrag aus den untersuchten Bits in die obere Stelle übereinstimmt, und nur das untersuchte Bit nicht mit den Ergebnissen der Untersuchung übereinstimmt, die erneute Addition des Rundungsadditionswertes bezüglich der normierten Ergebnisse der Operation durch Einschiebung des neuen Verfahrensschrittes nach der Beendigung des Verfahrensschrittes bewirkt, wobei der Übertrag aus dem untersuchten Bit in die obere Stelle mit den Ergebnissen der Untersuchungsergebnisse nicht übereinstimmt.

13. Multiplikationsverfahren für Gleitkommadaten nach Anspruch 11, mit den Schritten, daß man den Rundungsadditionswert als numerischen Wert einsetzt, wobei das Bit mit dem Stellenwert 2 hoch -24 den Wert 1 hat und das andere Bit bei einfacher Genauigkeit 0 ist, mit den dreiundzwanzig Stellen der Binärzahl der Dezimalzahl bezüglich der Rundungsgenauigkeit und der letzten geradzahligen Rundung in Richtung auf den Plusmodus, wenn die Vorzeichen der Operationsergebnisse bei der gerichteten Rundung bei der einfachen Genauigkeit positiv sind, oder wenn die Vorzeichen der Operationsergebnisse bei der gerichteten Rundung bei der einfachen Genauigkeit negativ sind, als numerischen Wert, wobei das Bit mit dem Stellenwert 2 hoch -53 den Wert 1 hat und das andere Bit bei doppelter Genauigkeit 0 ist, mit den bis hinab zu zweiundfünfzig Stellen der Binärzahl der Dezimalzahl bezüglich der Rundungsgenauigkeit, und wobei bei der letzten geradzahligen Rundung in Richtung auf den Plusmodus, wenn die Vorzeichen der Operationsergebnisse bei der gerichteten Rundung bei der doppelten Genauigkeit positiv sind, oder wenn die Ausgangsvorzeichen bei der gerichteten Rundung bei doppelter Genauigkeit negativ sind, alle Bits den numerischen Wert 0 haben, mit Ausnahme der obigen Beschreibung.

14. Multiplikationsverfahren für Gleitkommadaten nach Anspruch 11, mit den Schritten, daß man den Rundungsadditionswert als numerischen Wert einsetzt, wobei das Bit mit dem Stellenwert 2 hoch -23 den Wert 1 hat und das andere Bit bei einfacher Genauigkeit 0 ist, mit den dreiundzwanzig Stellen der Binärzahl der Dezimalzahl bezüglich der Rundungsgenauigkeit, wenn die Vorzeichen der Operationsergebnisse bei der gerichteten Rundung

in Richtung auf den Plusmodus positiv sind, wenn die Vorzeichen der Operationsergebnisse bei der gerichteten Rundung bei der einfachen Genauigkeit negativ sind, als numerischen Wert, wobei das Bit mit dem Stellenwert 2 hoch -52 den Wert 1 hat und das andere Bit bei doppelter Genauigkeit 0 ist, mit den bis hinab zu zweiundfünfzig Stellen der Binärzahl der Dezimalzahl bezüglich der Rundungsgenauigkeit, wenn die Vorzeichen der Operationsergebnisse bei der gerichteten Rundung in Richtung auf den Plusmodus positiv sind, wenn die Ausgangsvorzeichen bei der gerichteten Rundung bei doppelter Genauigkeit negativ sind, haben alle Bits den numerischen Wert 0, mit Ausnahme der obigen Beschreibung.

15. Multiplikationsverfahren für Gleitkommadaten nach Anspruch 11, mit den Schritten, daß man den Rundungsadditionswert als numerischen Wert einsetzt, wobei das Bit mit dem Stellenwert 2 hoch -24 den Wert 1 hat, ein Bit mit kleinerem Stellenwert als dieses 1 ist und das andere Bit bei einfacher Genauigkeit 0 ist, mit den dreiundzwanzig Stellen der Binärzahl der Dezimalzahl bezüglich der Rundungsgenauigkeit,

wenn die Vorzeichen der Operationsergebnisse bei der gerichteten Rundung in Richtung auf den Minusmodus positiv sind, oder wenn die Vorzeichen der Operationsergebnisse bei der gerichteten Rundung bei der einfachen Genauigkeit negativ sind, als numerischen Wert, wobei das Bit mit dem Stellenwert 2 hoch -53 den Wert 1 hat, ein Bit mit kleinerem Stellenwert als dieses 1 ist und das andere Bit bei doppelter Genauigkeit 0 ist, mit den bis hinab zu zweiundfünfzig Stellen der Binärzahl der Dezimalzahl bezüglich der Rundungsgenauigkeit, wenn die Vorzeichen der Operationsergebnisse bei der gerichteten Rundung bei der doppelten Genauigkeit positiv sind, oder wenn die Ausgangsvorzeichen bei der gerichteten Rundung bei doppelter Genauigkeit negativ sind, haben alle Bits den numerischen Wert 0, mit Ausnahme der obigen Beschreibung.

16. Multiplikationsverfahren für Gleitkommadaten nach Anspruch 11, mit den Schritten, daß man nach der Normierung ein Untersuchungsbit der normierten Operationsergebnisse einsetzt,

als drei Bits mit den Stellenwerten 2 hoch -22, 2 hoch -23 und 2 hoch -24, und ein Bit, welches der logische ODER-Verknüpfung eines jeden Bits entspricht und einen kleineren Stellenwert als dieses bei der einfachen Genauigkeit aufweist, mit den bis hinab zu dreiundzwanzig Stellen der Binärzahl der Dezimalzahl bezüglich der Rundungsgenauigkeit, drei Bits mit den Stellenwerten 2 hoch -51, 2 hoch -52 und 2 hoch -53 und ein Bit, welches der logischen ODER-Verknüpfung eines jeden Bits entspricht und einen kleineren Stellenwert als dieses aufweist, und die Rundungsgenauigkeit mit doppelter Genauigkeit durchgeführt wird, mit den bis hinab zu zweiundfünfzig Stellen der Binärzahl der Dezimalzahl bezüglich der Rundungsgenauigkeit.

17. Multiplikationsverfahren für Gleitkommadaten nach Anspruch 11, mit den Schritten, daß man gemäß dem Beurteilungsergebnis ein Untersuchungsbit einsetzt,

als ein Bit mit dem Stellenwert 2 hoch -23, oder zwei Bits mit den Stellenwerten 2 hoch -22 und 2 hoch -23, wenn mit einfacher Genauigkeit gearbeitet wird, mit den bis hinab zu dreiundzwanzig Stellen der Binärzahl der Dezimalzahl bezüglich der Rundungsgenauigkeit,

als ein Bit mit dem Stellenwert 2 hoch -52, oder zwei Bits mit den Stellenwerten 2 hoch -51 und 2 hoch -52, wenn mit doppelter Genauigkeit gearbeitet wird, mit den bis hinab zu zweiundfünfzig Stellen der Binärzahl der Dezimalzahl bezüglich der Rundungsgenauigkeit.

18. Multiplikationseinrichtung für Gleitkommadaten, aufweisend

eine Multiplikandenspeichereinrichtung (201) zum Speichern der Mantissenanteile des Multiplikanden mit Gleitkomma;

eine Mulplikatorspeichereinrichtung (202) zum Speichern der Mantissenanteile des Multiplikators mit Gleitkomma, eine der Ausgabe dienende Mantissenmultipliziereinrichtung (214), wobei mindestens eine von zwei eingegebenen Bitbreiten kürzer ist als die Länge des Mantissenanteils des Multiplikanden und des Multiplikators, um die Summe und den Übertrag der Bitbreite - bezogen auf die Eingabe - mindestens zweimal soviel auszugeben;

eine Einrichtung (212) zur Teilselektion des Multiplikanden zur Aufteilung des Bereichs vom höherwertigsten Bit des Mantissenanteils des Multiplikanden bis zum niederwertigsten Bit, die in der Multiplikandenspeichereinrichtung (201) gespeichert sind, in einem Teilmantissenabschnitt der Bitbreite des eingegebenen Multiplikanden der mehreren Mantissenmultipliziereinrichtungen (214), wenn die Bitbreite des eingegebenen Multiplikanden der Mantissenmultipliziereinrichtung kürzer ist als die Länge des Mantissenanteils des Multiplikanden;

eine Einrichtung (213) zur Teilselektion des Multiplikators zur Aufteilung des Bereichs vom höherwertigsten Bit des Mantissenanteils des Multiplikators, der in der Multiplikatorspeichereinrichtung enthalten ist, bis zum niederwertigsten Bit in einem Teilmantissenabschnitt der Bitbreite des eingegebenen Multiplikators der mehreren Mantissenmultipliziereinrichtungen, wenn die Bitbreite des eingegebenen Multiplikators der Mantissenmultipliziereinrichtung kürzer ist als die Länge des Mantissenanteils des Multiplikators, um für jeden der Verfahrensschritte einen davon unter ihnen zu selektieren und auszugeben;

eine Einrichtung (217) zur Erzeugung eines Rundungsadditionswertes zum Erzeugen des Rundungsadditionswertes, der einheitlich bestimmt ist durch die Rundungsgenauigkeit, den Rundungsmodus und die Vorzeichen der zwei Gleitkommadaten, einen Mantissenaddiereinrichtung (220) zur gleichzeitigen Durchführung der Addition der drei Größen Summenausgang, Übertragsausgang der Mantissenmultipliziereinrichtung (214) und Rundungsadditionswert der Einrichtung (217) zur Erzeugung des Rundungsadditionswertes beim ersten Verarbeitungsschritt, um das erste Teilprodukt zu bilden und gleichzeitig der Addition der drei Größen Summenausgang der Mantissenmultipliziereinrichtung (214), Übertragsausgang und Teilprodukt, welches erzeugt und beim vorherigen Schritt verschoben wurde, um das neue Teilprodukt zu bilden;

eine Verschiebeeinrichtung (221) zum Verschieben des Teilproduktes, welches erhalten wurde durch die Mantissenaddiereinrichtung (220) beim ersten oder vorherigen Schritt der Verarbeitung, der Verschiebung des Operationsergebnisses, dessen Normierung, wenn die beim letzten Schritt durch die Mantissenaddiereinrichtung (220) erhaltenen Operationsergebnisse entnormierte Zahlen sind, wobei die Verschiebung in Richtung des niederwertigsten Bit um eine Bitstelle erfolgt, die festgelegt ist in der Stelle des Teilmantissenabschnittes (214);

eine Teilspeichereinrichtung (225) zum Speichern in der Mantissenaddiereinrichtung als Eingangswert des nächsten Schrittes den Ausgangswert der Verschiebeeinrichtung beim ersten oder vorherigen Schritt der Verarbeitung;

eine Einrichtung (222) zur Untersuchung des Operationsergebnisses für die Untersuchung des jeweiligen Bit-Verschiebeüberlaufes in die Verschiebeeinrichtung (221) beim ersten oder vorherigen Schritt der Verarbeitung und mehrerer Bits unter Einschluß des niederwertigsten Bits, die durch die Rundungsgenauigkeit der Ausgangswerte der Verschiebeeinrichtung (221) im letzten Schritt der Verarbeitung festgelegt wurden, um - auf der Grundlage des Bitmusters der untersuchten Bits - mit der Beurteilungseinrichtung (224) zu beurteilen ob oder ob nicht das Ergebnis bis hinab zum niederwertigsten Bit, welches durch die Rundungsgenauigkeit im Ausgangswert der Verschiebeeinrichtung (221) beim letzten Schritt der Verarbeitung zu bestimmen ist, in Bezug auf das Produkt aus der Mantisse des Multiplikanden, der mit der gegebenen Genauigkeit gerundet wurde, und der Mantisse des beschriebenen Multiplikators übereinstimmt;

ob oder nicht der Übertrag aus dem untersuchten Bit in die obere Stelle übereinstimmt, jedoch nur das untersuchte Bit nicht übereinstimmt; ob oder nicht der Übertrag aus dem untersuchten Bit in die obere Stelle, das Bit oberhalb der untersuchten Bits ebenfalls nicht übereinstimmt; eine Rundungskorrektureinrichtung (223) zur Korrektur eines Teils oder aller Teile des Bits aus der Einrichtung (222) zum Untersuchen von Operationsergebnissen, welches in Bezug auf den Ausgangswert der Verschiebeeinrichtung, in der Einrichtung (212) zur Teilselektierung der Multiplikanden und der Einrichtung (213) zur Teilselektierung des Multiplikators untersucht wurden;

die Teile der Mantissenanteile des Multiplikanden und des Multiplikators werden der Reihe nach von der kleineren aus selektiert, und es werden alle Kombinationen selektiert und in die Mantissenmultiplizereinrichtung (214) eingegeben, die Summe der drei Größen, Summenausgang, der der Reihe nach zu erhalten ist, Übertragungsausgang und Rundungsadditionswert aus der Einrichtung (217) zur Erzeugung des Rundungsadditionswertes oder der von der Einrichtung (225) zur Teilproduktspeicherung, werden mit der Mantissenaddiereinrichtung ermittelt, das Ergebnis wird durch die Verschiebeeinrichtung (221) verschoben und wiederum in der Einrichtung (225) zur Teilspeicherung gespeichert oder das entgültige Berechnungsergebnis durch die Verschiebeeinrichtung (221) normiert, dann wird die Bearbeitung beendet, wenn die Einrichtung (222) zur Untersuchung der Operationsergebnisse die Übereinstimmung gefunden hat in Bezug auf die Mantisse des Produktes, welches mit der gegebenen Genauigkeit gerundet wurde bis zum niederwertigsten Bit, welches durch die Rundungsgenauigkeit aus dem Ausgangswert der Verschiebeeinrichtung (221) zu fixieren ist, den Teil oder alle der Korrekturen des Ausgangswertes der Verschiebeeinrichtung (221) durch die beschriebene Rundungskorrektureinrichtung (223), um die Verarbeitung zu beenden, wenn die Einrichtung (222) gefunden hat, daß der Übertrag aus den untersuchten Bits in die obere Stelle übereinstimmt und nur die untersuchten Bits nicht übereinstimmen, die Rundungsadditionswerte werden addiert, um die Verarbeitung durch die Einrichtung (217) zur Erzeugung von Rundungsadditionswerten und die Mantissenadditionseinrichtung (220) in Bezug auf den Ausgangswert der Verschiebeeinrichtung (221) zu beenden.

19. Multipliziereinrichtung für Gleitkommadaten nach Anspruch 18, bei dem die Addition des Summenausgangs, des Übertragungsausgangs in der Mantissenaddiereinrichtung (220) beim letzten Schritt der Verarbeitung und der in der Einrichtung (225) zur Teilspeicherung von Produkten gespeicherte Wert und die Normierung der Verschiebeeinrichtung (221) und die Untersuchung in der Einrichtung (222) zur Untersuchung von Operationsergebnissen in einem Maschinenzyklus durchgeführt werden, die Teilkorrekturen oder alle Korrekturen der untersuchten Bits in der Rundungskorrektureinrichtung außerdem innerhalb des Maschinenzyklus durchgeführt wird, wenn der Übertrag aus den untersuchten Bits in die obere Stelle übereinstimmt, wobei als Ergebnis der Untersuchung nur die untersuchten Bits nicht übereinstimmen, die Addition des Rundungsadditionswertes in der Mantissenaddiereinrichtung (220) wird durchgeführt durch die Einschiebung des neuen Maschinenzyklus nach dem Maschinenzyklus, wenn der Übertrag aus dem untersuchten Bit in die obere Stelle mit dem Ergebnis der Untersuchung nicht übereinstimmt.

20. Multipliziereinrichtung für Gleitkommadaten nach Anspruch 18, bei dem der durch die Einrichtung (217) zur Erzeugung von Rundungsadditionswerten zu erzeugende Additionswert ein numerischer Wert ist, wobei ein Bit mit dem Stellenwert 2 hoch -24 den Wert 1 hat und das andere Bit bei einfacher Genauigkeit 0 ist, mit den dreiundzwanzig Stellen der Binärzahl der Dezimalzahl bei der Rundungsgenauigkeit und bei der letzten geradzahligen Rundung in Richtung auf den Plusmodus, wenn das Vorzeichen des Operationsergebnisses bei der gerichteten Rundung in Richtung auf den Plusmodus positiv ist, wenn das Vorzeichen des Berechnungsergebnisses bei der gerichteten Rundung in Richtung auf den Minusmodus bei der beschriebenen einfachen Genauigkeit negativ ist, ein numerischer Wert, bei dem ein Bit mit dem Stellenwert 2 hoch -53 den Wert 1 hat, die anderen Bits bei doppelter Genauigkeit 0 sind, mit den zweiundfünfzig Stellen der Binärzahl der Dezimalzahl bei der Rundungsgenauigkeit, und bei der letzten geradzahligen Rundung, wenn die Vorzeichen der Operationsergebnisse bei der gerichteten Rundung in Richtung auf den Plusmodus und bei doppelter Genauigkeit positiv ist und bei der gerichteten Rundung, wenn die ausgegebenen Vorzeichen bei der gerichteten Rundung in Richtung auf den Plusmodus bei doppelter Genauigkeit negativ sind, ein numerischer Wert, bei dem alle Bits 0 sind, mit Ausnahme der obigen Beschreibung.

21. Multipliziereinrichtung für Gleitkommadaten nach Anspruch 18, bei dem der durch die Einrichtung (217) zur Erzeugung von Rundungsadditionswerten zu erzeugende Additionswert ein numerischer Wert ist,

wobei ein Bit mit dem Stellenwert 2 hoch -23 den Wert 1 hat und die anderen Bits bei einfacher Genauigkeit 0 sind, mit den dreiundzwanzig Stellen der Binärzahl der Dezimalzahl bei der Rundungsgenauigkeit, wenn das Vorzeichen des Operationsergebnisses bei der gerichteten Rundung in Richtung auf den Plusmodus positiv ist, oder wenn das Vorzeichen des Berechnungsergebnisses bei der gerichteten Rundung in Richtung auf den Minusmodus bei der beschriebenen einfachen Genauigkeit negativ ist,
ein numerischer Wert, bei dem ein Bit mit dem Stellenwert 2 hoch -52 den Wert 1 hat und die anderen Bits bei doppelter Genauigkeit 0 sind, mit den zweiundfünfzig Stellen der Binärzahl der Dezimalzahl bei der Rundungsgenauigkeit, wenn die Vorzeichen der Operationsergebnisse bei der gerichteten Rundung in Richtung auf den Plusmodus und bei doppelter Genauigkeit positiv ist und bei der gerichteten Rundung, wenn die ausgegebenen Vorzeichen bei der gerichteten Rundung in Richtung auf den Minusmodus bei doppelter Genauigkeit negativ sind,
ein numerischer Wert, bei dem alle Bits 0 sind, mit Ausnahme der obigen Beschreibung.

22. Multiplikationsverfahren für Gleitkommadaten nach Anspruch 28, bei dem der durch die Einrichtung (217) zur Erzeugung von Rundungsadditionswerten zu erzeugende Additionswert ein numerischer Wert ist,

wobei ein Bit mit dem Stellenwert 2 hoch -24 den Wert 1 hat und ein Bit mit kleinerem Stellenwert als dieses 1 ist und die anderen Bits bei einfacher Genauigkeit 0 sind, mit den dreiundzwanzig Stellen der Binärzahl der Dezimalzahl bei der Rundungsgenauigkeit, wenn die Vorzeichen der Operationsergebnisse bei der gerichteten Rundung in Richtung auf den Plusmodus positiv sind, wenn die Vorzeichen der Operationsergebnisse bei der gerichteten Rundung in Richtung auf den Minusmodus bei der einfachen Genauigkeit negativ sind,
ein numerischer Wert, bei dem ein Bit mit dem Stellenwert 2 hoch -23 den Wert 1 hat und ein Bit mit kleinerem Stellenwert als dieses 1 ist und die anderen Bit bei doppelter Genauigkeit 0 sind, mit den zweiundfünfzig Stellen der Binärzahl der Dezimalzahl bei der gerichteten Rundung in Richtung auf den Minusmodus positiv sind, wenn die Ausgangsvorzeichen bei der gerichteten Rundung in Richtung auf den Minusmodus bei der doppelten Genauigkeit positiv sind, ein numerischer Wert, bei dem alle Bits 0 sind, mit Ausnahme der obigen Beschreibung.

23. Multipliziereinrichtung für Gleitkommadaten nach Anspruch 18, bei der ein Untersuchungsbit der Einrichtung zur Untersuchung der Berechnungsergebnisse drei Bits mit den Stellenwerten 2 hoch -22, 2 hoch -23 und 2 hoch-24 hat und ein Bit, welches der logische ODER-Verknüpfung eines Bits entspricht, welches einen kleineren Stellenwert als dieses bei einfacher Genauigkeit hat, mit den bis hinab zu dreiundzwanzig Stellen der Binärzahl der Dezimalzahl bezüglich der Rundungsgenauigkeit,
drei Bits mit den Stellenwerten 2 hoch -51, 2 hoch -52 und 2 hoch -53 und ein Bit, welches der logischen ODER-Verknüpfung eines jeden Bits entspricht und einen kleineren Stellenwert als dieses bei doppelter Genauigkeit aufweist, mit den bis hinab zu zweiundfünfzig Stellen der Binärzahl der Dezimalzahl bezüglich der Rundungsgenauigkeit.

24. Multiplikationseinrichtung für Gleitkommadaten nach Anspruch 18, bei der ein Korrekturbit der Korrektureinrichtung ein Bit mit dem Stellenwert 2 hoch -23 darstellt, ein Bit mit den Stellenwerten 2 hoch -22 und 2 hoch -23 bei einfacher Genauigkeit, mit den bis hinab zu dreiundzwanzig Stellen der Binärzahl der Dezimalzahl bei der Rundungsgenauigkeit, ein Bit mit dem Stellenwert 2 hoch -52 oder ein Bit mit den Stellenwerten 2 hoch -51 und-2 hoch -52 bei doppelter Genauigkeit, mit den bis hinab zu zweiundfünfzig Stellen der Binärzahl der Dezimalzahl bei der Rundungsgenauigkeit.

## Revendications

1. Procédé d'addition et de soustraction avec des données en virgule flottante comprenant les étapes consistant à effectuer soit simultanément l'addition des première et seconde mantisses alignées au même exposant, et l'addition de la valeur d'addition arrondie devant être déterminée uniformément avec la précision d'arrondi, le mode d'arrondi et le signe du résultat du calcul lorsque l'opération est l'addition réelle des mantisses, laquelle est une addition ayant le même signe ou bien une soustraction ayant le signe différent durant le calcul avec des données en virgule flottante, ou soit à effectuer simultanément la soustraction de la première et de la seconde mantisses alignées au même exposant, et l'addition de la valeur de l'addition arrondie déterminée uniformément par la précision d'arrondi, le mode d'arrondi et le signe du résultat du calcul lorsque l'opération est la soustraction réelle des mantisses, laquelle est une soustraction ayant le même signe ou bien une addition ayant le signe différent en ce qui concerne les données en virgule flottante, à décaler le résultat du calcul décrit ci-dessus de 1 bit pour le normaliser lorsque le résultat du calcul est un nombre dénormalisé après l'addition, la soustraction de la première et de la seconde mantisses décrites ci-dessus et des valeurs d'addition arrondies, à inspecter une pluralité de bits comprenant le bit le moins significatif déterminé par le type de calcul représentant l'addition réelle des mantisses ou la soustraction réelle des mantisses et la précision d'arrondi à partir des résultats du calcul décalé avant ou après la normalisation décrite ci-dessus, de manière à estimer - sur la base du dessin de bits des bits inspectés - si oui ou non le résultat du calcul normalisé décrit ci-dessus y compris le bit le moins significatif décrit ci-dessus devant être déterminé par la précision d'arrondi est conforme en ce qui concerne l'addition réelle des mantisses ou la soustraction réelle des mantisses de la première mantisse et de la seconde mantisse arrondie pour obtenir la précision donnée, si le report pour former la partie supérieure des bits inspectés est conforme, et si seulement les bits inspectés ne sont pas conformes, si oui ou non le report dans la position supérieure des bits inspectés, des bits supérieures faisant partie des bits inspectés ne sont pas conformes, les uns et les autres, à l'effet, conformément au résultat de l'estimation décrite ci-dessus, si le traitement est achevé, une partie ou toutes les parties des bits inspectés du résultat du calcul normalisé décrit ci-dessus est ou sont corrigées de manière à achever le traitement, ou bien la valeur d'addition arrondie décrite ci-dessus est additionnée à nouveau en ce qui concerne le résultat du calcul normalisé décrit ci-dessus pour achever le traitement.

2. Procédé d'addition et de soustraction avec des données en virgule flottante selon la revendication 1, comprenant l'étape consistant à effectuer une addition, une soustraction de la première et de la seconde mantisses et des valeurs d'addition arrondies, une normalisation de décalage de 1 bit, et une inspection au niveau de l'une des étapes de traitement, à effectuer en outre les corrections d'une partie ou de la totalité des bits inspectés dans l'étape de traitement décrite ci-dessus lorsque le report dans les bits supérieurs faisant partie des bits inspectés est conforme, et que seulement les bits inspectés ne sont pas conformes, l'addition à nouveau de la valeur d'addition d'arrondi décrite ci-dessus en ce qui concerne le résultat du calcul normalisé décrit ci-dessus est effectué alors que la nouvelle étape de traitement est introduite après l'achèvement de l'étape de traitement décrite ci-dessus, lors du report dans les bits supérieurs faisant partie des bits inspectés qui ne sont pas conformes.

3. Procédé d'addition et de soustraction avec des données en virgule flottante selon la revendication 1, comprenant l'étape consistant à effectuer une addition de la valeur d'addition arrondie à l'addition réelle des mantisses, comme une valeur numérique dont le bit ayant la valeur significative de la puissance -24 de 2 est 1, les autres bits étant 0, lorsque le mode d'arrondi est l'arrondissage au mode toujours le plus proche suivant la précision simple qui a la fraction de vingt trois chiffres binaires, lorsque le signe du résultat du calcul est positif suivant l'arrondissage orienté vers le mode plus suivant ladite précision simple ou lorsque le signe du résultat du calcul est négatif suivant l'arrondissage orienté vers le mode moins suivant ladite précision simple, comme une valeur numérique dont le bit ayant la valeur significative de la puissance -53 de 2 est 1, les autres bits étant 0 lorsque le mode d'arrondi est arrondi au mode même le plus proche suivant la précision double qui a la fraction de cinquante deux chiffres binaires, lorsque le signe du résultat du calcul est positif durant l'arrondissage orienté vers le mode plus suivant la précision double décrite ci-dessus ou lorsque le signe du résultat du calcul est négatif durant l'arrondissage orienté vers le mode moins suivant la précision double décrite ci-dessus, comme une valeur numérique dont les bits sont 0 à ce moment, à l'exception de la description ci-dessus.

4. Procédé d'addition et de soustraction de données en virgule flottante selon la revendication 1, comprenant l'étape consistant à effectuer une addition de la valeur d'addition arrondie à l'addition réelle des mantisses, comme une valeur numérique dont le bit ayant la valeur significative de la puissance -23 de 2 est 1, les autres bits étant 0, lorsque le mode d'arrondi suivant la précision simple qui a la fraction de vingt trois chiffres binaires, lorsque le signe du résultat du calcul est positif durant l'arrondissage orienté vers le mode plus suivant ladite précision simple ou lorsque le signe du résultat du calcul est négatif durant l'arrondissage orienté vers le mode moins suivant ladite précision simple, comme une valeur numérique dont le bit ayant la valeur significative de la puissance -52 de 2 est 1, les autres bits étant 0 lorsque le mode d'arrondi est arrondi au mode même le plus proche suivant la précision double qui a la fraction de cinquante deux chiffres binaires, lorsque le signe du résultat du calcul est positif dans l'arrondissage orienté vers le mode plus suivant la précision double décrite ci-dessus ou lorsque le signe du résultat du calcul est négatif dans l'arrondissage orienté vers le mode moins suivant la précision double décrite ci-dessus, comme une valeur numérique dont tous les bits sont 0 à ce moment à l'exception de la description ci-dessus.

5. Procédé d'addition et de soustraction avec des données en virgule flottante selon la revendication 1, comprenant l'étape consistant à effectuer une addition de la valeur d'addition arrondie à l'addition réelle des mantisses, comme une valeur numérique dont le bit ayant la valeur significative de la puissance -24 de 2 est 1, les autres bits étant 0, lorsque le mode d'arrondi est l'arrondissage au mode toujours le plus proche suivant la précision simple qui a la fraction de vingt trois chiffres binaires, lorsque le signe du résultat du calcul est positif dans l'arrondissage orienté vers le mode plus suivant ladite précision simple ou lorsque le signe du résultat du calcul est négatif dans l'arrondissage orienté vers le mode moins suivant ladite précision simple, comme une valeur numérique dont le bit ayant la valeur significative de la puissance -53 de 2 est 1, les autres bits étant 0 lorsque le mode d'arrondi est arrondi au mode même le plus proche suivant la précision double qui a la fraction de cinquante deux chiffres binaires, lorsque le signe du résultat du calcul est positif dans l'arrondissage orienté vers le mode plus suivant la précision double décrite ci-dessus ou lorsque le signe du résultat du calcul est négatif dans l'arrondissage orienté vers le mode moins suivant la précision double décrite ci-dessus, comme une valeur numérique dont tous les bits sont 0 à ce moment à l'exception de la description ci-dessus.

**6.** Procédé d'addition et de soustraction avec des données en virgule flottante selon la revendication 1, comprenant l'étape consistant à effectuer une addition de la valeur d'addition arrondie à l'addition réelle des mantisses, comme une valeur numérique dont le bit ayant la valeur significative de la puissance -25 de 2 est 1, les autres bits étant 0, lorsque le mode d'arrondi est l'arrondissage au mode toujours le plus proche suivant la précision simple qui a la fraction de vingt trois chiffres binaires, lorsque le signe du résultat du calcul est positif dans l'arrondissage orienté vers le mode plus suivant ladite précision simple ou lorsque le signe du résultat du calcul est négatif durant l'arrondissage orienté vers le mode moins suivant ladite précision simple, comme une valeur numérique dont le bit a la valeur significative de la puissance -54 de 2 est 1, les autres bits étant 0 lorsque le mode d'arrondi est arrondi au mode même le plus proche suivant la précision double qui a la fraction de cinquante deux chiffres binaires, lorsque le signe du résultat du calcul est positif dans l'arrondissage orienté vers le mode plus suivant la précision double décrite ci-dessus ou lorsque le signe du résultat du calcul est négatif durant l'arrondissage orienté vers le mode moins suivant ladite précision double décrite ci-dessus, comme une valeur numérique dont les bits sont 0 à ce moment à l'exception de la description ci-dessus.

**7.** Procédé d'addition et de soustraction avec des données en virgule flottante selon la revendication 1, comprenant l'étape consistant à effectuer une addition de la valeur d'addition arrondie à l'addition réelle des mantisses, comme une valeur numérique dont le bit ayant la valeur significative de la puissance -24 de 2 est 1, les autres bits étant 0, lorsque le mode d'arrondi est l'arrondissage au mode toujours le plus proche suivant la précision simple qui a la fraction de vingt trois chiffres binaires, lorsque le signe du résultat du calcul est positif durant l'arrondissage orienté vers le mode plus suivant ladite précision simple ou lorsque le signe du résultat du calcul est négatif dans l'arrondissage orienté vers le mode moins suivant ladite précision simple, comme une valeur numérique dont le bit ayant la valeur significative de la puissance -53 de 2 est 1, les autres bits étant 0 lorsque le mode d'arrondi est arrondi au mode même le plus proche suivant la précision double qui a la fraction de cinquante deux chiffres binaires, lorsque le signe du résultat du calcul est positif dans l'arrondissage orienté vers le mode plus suivant la précision double décrite ci-dessus ou lorsque le signe du résultat du calcul est négatif durant l'arrondissage orienté vers le mode moins suivant ladite précision double, comme une valeur numérique dont les bits sont 0 à ce moment à l'exception de la description ci-dessus.

**8.** Procédé d'addition et de soustraction avec des données en virgule flottante selon la revendication 1, comprenant l'étape consistant à effectuer une addition de la valeur d'addition arrondie à l'addition réelle des mantisses, comme une valeur numérique dont le bit possède la valeur significative de la puissance -25 de 2 est 1, les autres bits étant 0, lorsque le mode d'arrondi est l'arrondissage au mode toujours le plus proche suivant la précision simple qui a la fraction de vingt trois chiffres binaires, lorsque le signe du résultat du calcul est positif dans l'arrondissage orienté vers le mode plus suivant ladite précision simple ou lorsque le signe du résultat du calcul est négatif durant l'arrondissage orienté vers le mode moins suivant ladite précision simple, comme une valeur numérique dont le bit a la valeur significative de la puissance -54 de 2 est 1, les autres bits étant 0 lorsque le mode d'arrondi est arrondi au mode même le plus proche suivant la précision double qui a la fraction de cinquante deux chiffres binaires, lorsque le signe du résultat du calcul est positif dans l'arrondissage orienté vers le mode plus suivant la précision double décrite ci-dessus ou lorsque le signe du résultat du calcul est négatif dans l'arrondissage orienté vers le mode moins suivant ladite précision double, comme une valeur numérique dont les bits sont 0 à ce moment à l'exception de la description ci-dessus.

**9.** Procédé d'addition et de soustraction avec des données en virgule flottante selon la revendication 1, comprenant les étapes consistant à effectuer une inspection des résultats de calcul normalisés après la normalisation, où les bits inspectés sont trois bits ayant les valeurs significatives de la puissance -22 de 2, de la puissance -23 de 2 et de la puissance -24 de 2, et un bit qui est le ou logique des bits ayant la valeur significative plus petite que ceux-ci lorsque l'opération sur les données en virgule flottante est l'addition réelle des mantisses, et que la précision d'arrondi est la précision simple qui a la fraction de vingt trois chiffres binaires, trois bits ayant les valeurs significatives de la puissance -51 de 2, de la puissance -52 de 2 et de la puissance -53 de 2, et un bit qui est le ou logique des bits ayant la valeur significative plus petite que ceux-ci lorsque l'opération sur les données en virgule flottante est l'addition réelle des mantisses, et que la précision d'arrondi est la précision double d'arrondi a la fraction de cinquante deux chiffres binaires, les trois bits ayant les valeurs significatives de la puissance -23 de 2, de la puissance -24 de 2 et de la puissance -25 de 2, et un bit qui est le ou logique des bits ayant la valeur significative plus petite que ceux-ci au niveau de la soustraction réelle des mantisses, et au niveau de ladite précision simple, les trois bits ayant les valeurs significatives de la puissance -52 de 2, de la puissance -53 de 2 et de la puissance -54 de 2, et un bit qui est le ou logique des bits ayant la valeur significative plus petite que ceux-ci au niveau de la soustraction réelle des mantisses, et au niveau de ladite précision double.

10. Procédé d'addition et de soustraction avec des données en virgule flottante selon la revendication 1, comprenant l'étape consistant à effectuer une correction dans laquelle les bits corrigés sont 1 bit ayant la valeur significative de la puissance -23 de 2 ou des bits ayant les valeurs significatives de la puissance -22 de 2 et de la puissance -23 de 2 suivant la précision simple qui a la fraction de vingt trois chiffres binaires, un bit ayant la valeur significative de la puissance -52 de 2 ou des bits ayant les valeurs significatives de la puissance -51 de 2 et de la puissance -52 de 2 suivant la précision double qui a la fraction de cinquante deux chiffres binaires.

11. Procédé de multiplication des données en virgule flottante comprenant les étapes de division entre la somme et le report, d'obtention du produit en multipliant les parties respectives formant mantisse du multiplicande des données en virgule flottante et du multiplicateur, d'addition, de calcul de la somme et du report, après la multiplication, et la valeur d'addition arrondie devant être déterminée uniformément au moyen de la précision d'arrondi, du mode d'arrondi et des signes du multiplicande et du multiplicateur, de décalage, de normalisation de l'opération de 1 bit lorsque les résultats de l'opération sont les nombres non normalisés après l'opération, d'inspection d'une pluralité de bits comprenant les bits les moins significatifs devant être déterminés par la précision d'arrondi parmi les résultats normalisés de l'opération après la normalisation de manière à estimer sur la base du dessin de bits des bits inspectés si oui ou non jusqu'au bit le moins significatif fixé par la précision d'arrondi parmi les résultats normalisés de l'opération est conforme en ce qui concerne le produit de la mantisse du multiplicande arrondi à la précision données et le produit de la mantisse du multiplicateur, si le report pour obtenir les bits supérieurs faisant partie des bits inspectés est conforme, sauf si seulement les bits inspectés ne sont pas conforme, si le report dans les bits supérieurs faisant partie des bits inspectés n'est pas conforme, les bits supérieurs faisant partie des bits inspectés ne sont pas conforme non plus, de manière à réaliser si oui ou non le traitement est achevé conformément au résultat de l'estimation, si oui ou non une partie ou toutes les parties des bits inspectés en ce qui concerne les résultats normalisés de l'opération décrite ci-dessus sont corrigés pour achever le traitement, les valeurs d'addition arrondie sont additionnées à nouveau en ce qui concerne les résultats normalisés de l'opération pour achever le traitement.

12. Procédé de multiplication avec des données en virgule flottante selon la revendication 11, comprenant les étapes consistant à effectuer l'addition de la somme, du report, de la valeur d'addition arrondie, la normalisation de décalage de 1 bit et l'inspection durant l'une des étapes de traitement, à effectuer en outre la correction d'une partie partielle ou de toutes les parties du bit inspecté dans l'étape de traitement lorsque le report dans les bits supérieurs faisant partie des bits inspectés est conforme, et que seulement le bit inspecté n'est pas conforme aux résultats de l'inspection, à effectuer l'addition à nouveau de la valeur d'addition arrondie en ce qui concerne les résultats normalisés de l'opération par l'introduction de la nouvelle étape de traitement après l'achèvement de l'étape de traitement, le report étant dans les bits supérieurs faisant partie des bits d'inspection avec les résultats de l'inspection n'est pas conforme.

13. Procédé de multiplication des données en virgule flottante selon la revendication 11, comprenant les étapes dans lesquelles la valeur d'addition arrondie est une valeur numérique avec un bit ayant la valeur significative de la puissance -24 de 2 qui est 1, l'autre bit étant 0 suivant la précision simple ayant les trente trois places des décimales binaires suivant la précision d'arrondi et dans le dernier arrondissage égal vers le mode plus lorsque les signes des résultats de l'opération sont positifs dans les modes d'arrondi orientés suivant la précision simple ou lorsque les signes des résultats de l'opération sont négatifs dans le mode d'arrondi orienté suivant le signe de la précision simple, une valeur numérique avec un bit ayant la valeur significative de la puissance -53 de 2 qui est 1, l'autre bit étant 0 dans la précision double descendant jusqu'à cinquante deux places des décimales binaires dans la précision d'arrondi, et dans le dernier arrondissage pair vers le mode plus lorsque les signes des résultats de l'opération sont positifs dans le mode d'arrondi orienté suivant la précision double ou lorsque les signes de sortie sont négatifs dans le mode d'arrondi orienté suivant la précision double, tous les bits sont 0 en valeur numérique à ce moment mis à part pour la description ci-dessus.

14. Procédé de multiplication des données en virgule flottante selon la revendication 11, comprenant les étapes où la valeur d'addition arrondie est une valeur numérique avec un bit ayant la valeur significative de la puissance -24 de 2 qui est 1, les autres bits étant 0 suivant la précision simple qui a les trente trois places des décimales binaires dans la précision d'arrondi et dans le dernier arrondissage pair vers le mode plus lorsque les signes des résultats de l'opération sont positifs dans les modes d'arrondi orientés suivant la précision simple ou lorsque les signes des résultats de l'opération négatifs dans le mode d'arrondi orienté avec le signe de précision simple, une valeur numérique avec un bit ayant la valeur significative de puissance -53 de 2 étant 1, l'autre bit étant 0 dans la précision double descendant jusqu'à cinquante deux places du binaire décimal dans la précision d'arrondi, et dans le dernier arrondi égal vers le mode plus lorsque les signes des résultats de l'opération sont positifs dans le mode d'arrondi orienté dans la précision double ou lorsque les signes de sortie sont négatifs dans le mode d'arrondi orienté dans la double précision, tous les bits sont 0 en valeur numérique à ce moment mis à part pour la description ci-dessus.

15. Procédé de multiplication des données en virgule flottante selon la revendication 11, comprenant les étapes où la valeur d'addition arrondie est une valeur numérique avec un bit ayant la valeur significative de puissance -24 de 2 étant 1, l'autre bit étant 0 dans la précision simple ayant les trente trois places des décimales binaires dans la précision d'arrondi et dans le dernier arrondissement égal vers le mode plus lorsque les signes des résultats de l'opération sont positifs dans les modes d'arrondi orientés avec la précision simple ou lorsque les signes des résultats de l'opération sont négatifs dans le mode d'arrondi orienté avec le signe de précision simple, une valeur numérique avec un bit ayant la valeur significative de puissance -53 de 2 étant 1, l'autre bit étant 0 dans la précision double descendant jusqu'à cinquante deux places du binaire décimal dans la précision d'arrondi, et dans le dernier arrondi égal vers le mode plus lorsque les signes des résultats de l'opération sont positifs dans le mode d'arrondi orienté dans la précision double ou lorsque les signes de sortie sont négatifs dans le mode d'arrondi orienté suivant la double précision, tous les bits sont 0 en valeur numérique à ce moment mis à part pour la description ci-dessus.

16. Procédé de multiplication des données en virgule flottante selon la revendication 11, comprenant les étapes dans lesquelles un bit d'inspection des résultats normalisés de l'opération après la normalisation correspond à 3 bits ayant la valeur significative de la puissance -22 de 2, de la puissance -23 de 2 et de la puissance -24 de 2, et à 1 bit qui a saisi le ou logique de chaque bit ayant la valeur significative plus petite que ceux-ci au niveau de la précision simple ayant jusqu'à vingt trois emplacements de décimales binaires dans la précision d'arrondi, 3 bits ayant les valeurs significatives de la puissance -51 de 2, de la puissance -52 de 2 et de la puissance -53 de 2, et 1 bit qui a saisi le ou logique de chaque bit ayant la valeur significative plus petite que ceux-ci et la précision d'arrondi est au niveau de la précision double ayant descendue de cinquante deux emplacements de décimales binaires dans la précision d'arrondi.

17. Procédé de multiplication des données en virgule flottante selon la revendication 11, comprenant les étapes dans lesquelles un bit de correction conforme aux résultats de l'opération correspond à un bit ayant la valeur significative de la puissance -23 de 2 ou à un bit ayant les valeurs significatives de la puissance -22 de 2 et de la puissance -23 de 2 suivant la précision simple ayant descendu de vingt trois emplacements de décimales binaires dans la précision d'arrondi, à un bit ayant la valeur significative de la puissance -52 de 2 ou un bit ayant les valeurs significatives de la puissance -51 de 2 et de la puissance -52 de 2 suivant la précision double ayant descendu de cinquante deux emplacements de décimales binaires dans la précision d'arrondi.

18. Dispositif de multiplication de données en virgule flottante comprenant un moyen de retenue de multiplicande 201 destiné à retenir les parties formant mantisse du multiplicande du type en virgule flottante, un moyen de retenue de multiplicateur 202 destiné à retenir la partie formant mantisse du multiplicateur du type en virgule flottante, un moyen de multiplication de mantisse 214 destiné à la sortie, si au moins une largeur d'entrée de bit parmi deux entrées est plus courte que la longueur de la partie formant mantisse du multiplicande et du multiplicateur de manière à sortir la somme et le report de la largeur de bit au moins deux fois égales à l'entrée en ce qui concerne l'entrée, un moyen de sélection partielle de multiplicande 212 destiné à diviser le bit le plus significatif de la partie formant mantisse du multiplicande par le bit le moins significatif retenu dans le moyen de retenue de multiplicande 201 pour former la partie partielle formant mantisse de la largeur de bit de l'entrée de multiplicande de la pluralité de moyens de multiplication de mantisse 214 lorsque la largeur de bit de l'entrée de multiplicande du moyen de multiplication de mantisse est plus courte que la longueur de la partie formant mantisse du multiplicande, un moyen de sélection partielle de multiplicateur 213 destiné à diviser le bit le plus significatif de la partie formant mantisse du multiplicateur retenu dans le moyen de retenue de multiplicateur par le bit le moins significatif pour former la partie partielle formant mantisse de la largeur de bit de l'entrée de multiplicateur de la pluralité de moyens de multiplication de mantisse lorsque la largeur de bit de l'entrée de multiplicateur des moyens de multiplication de mantisse est plus courte que la longueur de la partie formant mantisse du multiplicateur de manière à sélectionner et à sortir l'un d'entre eux pour chacune des étapes de traitement, un moyen de création de valeur d'addition arrondie 217 destiné à créer la valeur d'addition arrondie déterminée uniformément au moyen de la précision d'arrondi, du mode d'arrondi et des signes des deux données en virgule flottante, un moyen d'addition de mantisse 220 destiné à effectuer simultanément l'addition de trois éléments comprenant la sortie de la somme, la sortie du report du moyen de multiplication de mantisse 214 et la valeur d'addition arrondie provenant du moyen de création de valeur d'addition arrondie 217 à la première étape du traitement de manière à créer le premier produit partiel, simultanément l'addition de trois éléments comprenant la sortie de la somme du moyen de multiplication de mantisse 214, la sortie de report et le produit partiel créé et décalé à l'étape juste avant l'étape de manière à créer le nouveau produit partiel, un moyen de décalage 221 destiné à décaler dans la direction du bit le moins significatif du nombre des bits déterminés suivant la position de la partie partielle formant mantisse du multiplicateur et du multiplicande multiplié dans le moyen de multiplication de mantisse 214, le produit partiel obtenu à partir du moyen d'addition de mantisse 220 à la première ou à une étape intermédiaire du traitement, au décalage des résultats de l'opération, à la normalisation de ceux-ci lorsque les résultats de l'opération devant être obtenus à partir du moyen d'addition de mantisse 220 sont les nombres dénormalisés au niveau de la dernière étape, un moyen de retenue partielle de produit 225 destiné à retenir en tant qu'entrée dans le moyen d'addition de mantisse de l'étape suivante la sortie du moyen de décalage au niveau de la première ou de l'étape intermédiaire du traitement, un moyen d'inspection des résultats de l'opération 222 destiné à inspecter les bits respectifs du débordement de décalage dans le moyen de décalage 221 durant la première étape ou l'étape intermédiaire du traitement et une pluralité de bits comprenant les bits les moins significatifs déterminés par la précision d'arrondi des sorties du moyen de décalage 221 durant l'étape finale du traitement de manière à estimer grâce au moyen d'estimation 224 - sur la base du dessin de bit des bits inspectés - si oui ou non, jusqu'au bit le moins significatif devant être déterminé par la précision d'arrondi durant la sortie du moyen de décalage 221 durant l'étape finale du traitement est conforme en ce qui concerne le produit de la mantisse du multiplicande arrondi pour obtenir la précision donnée et de la mantisse du multiplicateur décrit ci-dessus, si oui ou non le report dans les bits supérieurs faisant partie des bits inspectés est conforme, mais que seulement le bit inspecté n'est pas conforme, si oui ou non le report dans les bits supérieurs faisant partie des bits inspectés, le bit plus haut que les bits inspectés n'est pas conforme, non plus, un moyen de correction d'arrondi 223 destiné à corriger une partie ou toutes les parties du bit du moyen d'inspection du résultat de l'opération 222 inspecté en ce qui concerne la sortie du moyen de décalage, dans le moyen de sélection partielle de multiplicande 212 et dans le moyen de sélection partielle de multiplicateur 213, les parties des parties formant mantisse du multiplicande et du multiplicateur sont sélectionnées dans l'ordre à partir du plus bas et toutes les combinaisons sont sélectionnées, et sont entrées dans le moyen de multiplication de mantisse 214, la somme de trois, la sortie de la somme devant être obtenue dans l'ordre, la sortie du report et la valeur d'addition arrondie provenant du moyen de création de valeur d'addition arrondie 217 ou bien la valeur retenue par le moyen de retenue partielle du produit 225 sont obtenues par le moyen d'addition de mantisse, le résultat est décalé par le moyen de décalage 221, et logé à nouveau dans le moyen de retenue partielle de produit 225 ou bien le résultat final du calcul est normalisé par le moyen de décalage 221, après cela le traitement est achevé lorsque le moyen d'inspection du résultat de l'opération 22 a estimé correspondre en ce qui concerne la mantisse du produit arrondi à la précision donnée dans la mesure où le bit le moins significatif devant être fixé par la précision d'arrondi en dehors de la sortie du moyen de décalage 221, les corrections partielles ou toutes les corrections de la sortie du moyen de décalage 221 grâce au moyen de correction d'arrondi décrit ci-dessus 223 de manière à achever le traitement lorsque le moyen d'inspection des résultats de l'opération 222 a estimé que le report à la partie supérieure à partir du bit inspecté est conforme, mais que seulement le bit inspecté n'est pas conforme, les valeurs d'addition arrondie sont additionnées de manière à achever le traitement grâce au moyen de création de valeur d'addition arrondie 217 et au moyen d'addition de mantisse 220 en ce qui concerne la sortie du moyen de décalage 221.

19. Dispositif de multiplication avec des données en virgule flottante selon la revendication 18, dans lequel l'addition de la sortie de la somme, de la sortie du report dans le moyen d'addition de mantisses 220 de l'étape finale du traitement, et la valeur retenue dans le moyen de retenue partielle de produit 225, et une normalisation dans le moyen de décalage 221 ainsi qu'une inspection dans le moyen d'inspection du résultat de l'opération 222 sont effectuées au niveau d'un cycle de machine, dans lequel les corrections partielles ou toutes les corrections des bits inspectés dans le moyen de correction d'arrondi sont en outre effectuées à l'intérieur du cycle de machine lorsque le report dans les bits supérieurs faisant partie des bits d'inspection est conforme, seulement le bit inspecté n'étant pas conforme en tant que résultats de l'inspection, l'addition de la valeur d'addition arrondie dans le moyen d'addition de mantisse 220 est effectuée par l'introduction du nouveau cycle de machine après le cycle de machine lorsque le report dans les bits supérieurs faisant partie des bits d'inspection n'est pas conforme au résultat de l'inspection.

20. Dispositif de multiplication avec des données en virgule flottante selon la revendication 18, dans lequel la valeur d'addition devant être créée par le moyen de création de valeur d'addition arrondie 217 est une valeur numérique avec un bit ayant la valeur significative de la puissance -24 de 2 qui est 1, l'autre bit étant 0 suivant la précision simple, ayant les vingt trois emplacements des décimales binaires dans la précision arrondie et dans le dernier arrondissage pair vers le mode plus lorsque les signes du résultat de l'opération sont positifs dans l'arrondissage orienté vers le mode plus, lorsque les signe du résultat du calcul sont négatifs dans l'arrondissage orienté vers le mode moins suivant la précision simple ci-dessus, une valeur numérique avec un bit ayant la valeur significative de la puissance -53 de 2 qui est 1, les autres bits étant 0 suivant la précision double ayant jusqu'à cinquante deux emplacements des décimales binaires dans la précision d'arrondi, et dans le dernier mode d'arrondi pair lorsque les signes du résultat de l'opération sont positifs dans l'arrondissage orienté vers le mode plus et suivant la précision double et l'arrondissage orienté vers le mode plus lorsque les signes de sortie sont négatifs dans l'arrondissage orienté vers le mode moins suivant la précision double, une valeur numérique dans laquelle tous les bits sont 0 excepté pour la description ci-dessus.

21. Dispositif de multiplication avec des données en virgule flottante selon la revendication 18, dans lequel la valeur d'addition arrondie devant être créée par le moyen de création de valeur d'addition arrondie 217 est une valeur numérique, un bit ayant la valeur significative de la puissance -23 de 2 étant 1, les autres bits étant 0 suivant la précision simple, ayant les vingt trois emplacements des décimales binaires dans la précision arrondie lorsque les signes du résultat de l'opération sont positifs dans l'arrondissage orienté vers le mode plus ou lorsque les signes du résultat de l'opération sont négatifs dans l'arrondissage orienté vers le mode moins suivant la précision simple, une valeur numérique avec un bit ayant la valeur significative de la puissance -52 de 2 qui est 1, les autres bits étant 0 suivant la précision double ayant jusqu'à cinquante deux emplacements des décimales binaires dans la précision arrondie, lorsque les signes de sortie sont positifs dans l'arrondissage orienté vers le mode plus, lorsque les signes de sortie sont négatifs dans l'arrondissage orienté vers le mode plus suivant la précision double, une valeur numérique dont tous les bits sont 0 excepté en ce qui concerne la description ci-dessus.

22. Dispositif de multiplication avec des données en virgule flottante selon la revendication 18, dans lequel la valeur d'addition arrondie devant être créée par le moyen de création de valeur d'addition arrondie 217 est une valeur numérique, un bit ayant la valeur significative de la puissance -23 de 2 étant 1, les autres bits étant 0 suivant la précision simple, ayant les vingt trois emplacements des décimales binaires dans la précision arrondie lorsque les signes du résultat de l'opération sont positifs dans l'arrondissage orienté vers le mode plus ou lorsque les signes du résultat de l'opération sont négatifs dans l'arrondissage orienté vers le mode moins suivant la précision simple, une valeur numérique avec un bit ayant la valeur significative de la puissance -52 de 2 qui est 1, les autres bits étant 0 suivant la double précision ayant jusqu'à cinquante deux emplacements des décimales binaires dans la précision d'arrondi, lorsque les signes de sortie sont positifs dans l'arrondissage orienté vers le mode plus, lorsque les signes de sortie sont négatifs dans l'arrondissage orienté vers le mode plus suivant la précision double, une valeur numérique dont tous les bits sont 0 excepté en ce qui concerne la description ci-dessus.

23. Dispositif de multiplication avec des données en virgule flottante selon la revendication 18, dans lequel un bit d'inspection grâce au moyen d'inspection des résultats du calcul présente 3 bits ayant les valeurs significatives de la puissance -22 de 2, de la puissance -23 de 2 et de la puissance -24 de 2, un bit 1 qui a saisi le ou logique du bit ayant la valeur significative plus petite que ceux-ci au niveau de la précision simple ayant jusqu'à vingt trois emplacements de décimales binaires dans la précision d'arrondi, 3 bits ayant les valeurs significatives de la puissance -51 de 2, de la puissance -52 de 2 et de la puissance -53 de 2, et un bit 1 qui a saisi le ou logique de chaque bit ayant la valeur significative plus petite que ceux-ci au niveau de la précision double ayant jusqu'à cinquante deux emplacements de décimales binaires dans la précision arrondie.

24. Dispositif de multiplication avec des données en virgule flottante selon la revendication 18, dans lequel un bit de correction grâce à un moyen de correction est un bit ayant la valeur significative de la puissance de-23 de 2, un bit ayant les valeurs significatives de la puissance -22 de 2 et de la puissance -23 de 2 suivant la précision simple ayant jusqu'à vingt trois emplacements de décimales binaires dans la précision d'arrondi, 1 bit ayant la valeur significative de la puissance -52 de 2 ou un bit ayant les valeurs significatives de la puissance-51 de 2 et de la puissance -52 de 2 suivant la précision double ayant jusqu'à cinquante deux emplacements de décimales binaires dans la précision d'arrondi.

# Fig. 1

EP 0 472 148 B1

Fig. 2

## Fig. 3(a)

| real value | | value of adding 1 to $2^{-24}$ | value after real rounding | reround signal | correction signal |
|---|---|---|---|---|---|
| $2^1$ | $2^{-22}$ $2^{-23}$ $2^{-24}$ S | C $2^{-22}$ $2^{-23}$ $2^{-24}$ S | C $2^{-22}$ $2^{-23}$ | | |
| 0 | 0 0 0 0 | 0 0 0 1 0 | 0 0 0 | 0 | 0 0 |
| 1 | | | 0 0 | 0 | 0 0 |
| 0 | 0 0 0 1 | 0 0 0 1 1 | 0 0 0 | 0 | 0 0 |
| 1 | | | 0 0 | 0 | 0 0 |
| 0 | 0 0 1 0 | 0 0 1 0 0 | 0 0 0 | 0 | 0 1 |
| 1 | | | 0 0 | 0 | 0 0 |
| 0 | 0 0 1 1 | 0 0 1 0 1 | 0 0 1 | 0 | 0 0 |
| 1 | | | 0 0 | 0 | 0 0 |
| 0 | 0 1 0 0 | 0 0 1 1 0 | 0 0 1 | 0 | 0 0 |
| 1 | | | 0 0 | 0 | 0 0 |
| 0 | 0 1 0 1 | 0 0 1 1 1 | 0 0 1 | 0 | 0 0 |
| 1 | | | 0 1 | 0 | 0 1 |
| 0 | 0 1 1 0 | 0 1 0 0 0 | 0 1 0 | 0 | 0 0 |
| 1 | | | 0 1 | 0 | 0 0 |
| 0 | 0 1 1 1 | 0 1 0 0 1 | 0 1 0 | 0 | 0 0 |
| 1 | | | 0 1 | 0 | 0 0 |
| 0 | 1 0 0 0 | 0 1 0 1 0 | 0 1 0 | 0 | 0 0 |
| 1 | | | 0 1 | 0 | 0 0 |
| 0 | 1 0 0 1 | 0 1 0 1 1 | 0 1 0 | 0 | 0 0 |
| 1 | | | 0 1 | 0 | 0 0 |
| 0 | 1 0 1 0 | 0 1 1 0 0 | 0 1 0 | 0 | 0 1 |
| 1 | | | 0 1 | 0 | 0 0 |
| 0 | 1 0 1 1 | 0 1 1 0 1 | 0 1 1 | 0 | 0 0 |
| 1 | | | 0 1 | 0 | 0 0 |
| 0 | 1 1 0 0 | 0 1 1 1 0 | 0 1 1 | 0 | 0 0 |
| 1 | | | 1 0 | 1 | 0 0 |
| 0 | 1 1 0 1 | 0 1 1 1 1 | 0 1 1 | 0 | 0 0 |
| 1 | | | 1 0 | 1 | 0 0 |
| 0 | 1 1 1 0 | 1 0 0 0 0 | 1 0 0 | 0 | 0 0 |
| 1 | | | 1 0 | 0 | 0 0 |
| 0 | 1 1 1 1 | 1 0 0 0 | 1 0 0 | 0 | 0 0 |
| 1 | | | 1 0 | 0 | 0 0 |

C --- carry to $2^{-50}$

S --- sticky bits

# Fig. 3(b)

| 2^1 | real value $2^{-51}$ | $2^{-52}$ | $2^{-53}$ | S | value of adding 1 to $2^{-53}$ C | $2^{-51}$ | $2^{-52}$ | $2^{-53}$ | S | value after real rounding C | $2^{-51}$ | $2^{-52}$ | reround signal | correction signal |
|---|---|---|---|---|---|---|---|---|---|---|---|---|---|---|
| 0 | 0 | 0 | 0 | 0 | 0 | 0 | 0 | 1 | 0 | 0 | 0 | 0 | 0 | 0 0 |
| 1 | | | | | | | | | | 0 | 0 | | 0 | 0 0 |
| 0 | 0 | 0 | 0 | 1 | 0 | 0 | 0 | 1 | 1 | 0 | 0 | 0 | 0 | 0 0 |
| 1 | | | | | | | | | | 0 | 0 | | 0 | 0 0 |
| 0 | 0 | 0 | 1 | 0 | 0 | 0 | 1 | 0 | 0 | 0 | 0 | 0 | 0 | 0 1 |
| 1 | | | | | | | | | | 0 | 0 | | 0 | 0 0 |
| 0 | 0 | 0 | 1 | 1 | 0 | 0 | 1 | 0 | 1 | 0 | 0 | 1 | 0 | 0 0 |
| 1 | | | | | | | | | | 0 | 0 | | 0 | 0 0 |
| 0 | 0 | 1 | 0 | 0 | 0 | 0 | 1 | 1 | 0 | 0 | 0 | 1 | 0 | 0 0 |
| 1 | | | | | | | | | | 0 | 0 | | 0 | 0 0 |
| 0 | 0 | 1 | 0 | 1 | 0 | 0 | 1 | 1 | 1 | 0 | 0 | 1 | 0 | 0 0 |
| 1 | | | | | | | | | | 0 | 1 | | 0 | 0 1 |
| 0 | 0 | 1 | 1 | 0 | 0 | 1 | 0 | 0 | 0 | 0 | 1 | 0 | 0 | 0 0 |
| 1 | | | | | | | | | | 0 | 1 | | 0 | 0 0 |
| 0 | 0 | 1 | 1 | 1 | 0 | 1 | 0 | 0 | 1 | 0 | 1 | 0 | 0 | 0 0 |
| 1 | | | | | | | | | | 0 | 1 | | 0 | 0 1 |
| 0 | 1 | 0 | 0 | 0 | 0 | 1 | 0 | 1 | 0 | 0 | 1 | 0 | 0 | 0 0 |
| 1 | | | | | | | | | | 0 | 1 | | 0 | 0 0 |
| 0 | 1 | 0 | 0 | 1 | 0 | 1 | 0 | 1 | 1 | 0 | 1 | 0 | 0 | 0 0 |
| 1 | | | | | | | | | | 0 | 1 | | 0 | 0 0 |
| 0 | 1 | 0 | 1 | 0 | 0 | 1 | 1 | 0 | 0 | 0 | 1 | 0 | 0 | 0 1 |
| 1 | | | | | | | | | | 0 | 1 | | 0 | 0 0 |
| 0 | 1 | 0 | 1 | 1 | 0 | 1 | 1 | 0 | 1 | 0 | 1 | 1 | 0 | 0 0 |
| 1 | | | | | | | | | | 0 | 1 | | 0 | 0 0 |
| 0 | 1 | 1 | 0 | 0 | 0 | 1 | 1 | 1 | 0 | 0 | 1 | 1 | 0 | 0 0 |
| 1 | | | | | | | | | | 1 | 0 | | 1 | 0 0 |
| 0 | 1 | 1 | 0 | 1 | 0 | 1 | 1 | 1 | 1 | 0 | 1 | 1 | 0 | 0 0 |
| 1 | | | | | | | | | | 1 | 0 | | 1 | 0 0 |
| 0 | 1 | 1 | 1 | 0 | 1 | 0 | 0 | 0 | 0 | 1 | 0 | 0 | 0 | 0 0 |
| 1 | | | | | | | | | | 1 | 0 | | 0 | 0 0 |
| 0 | 1 | 1 | 1 | 1 | 1 | 0 | 0 | 0 | 1 | 1 | 0 | 0 | 0 | 0 0 |
| 1 | | | | | | | | | | 1 | 0 | | 0 | 0 0 |

C --- carry to $2^{-21}$

S --- sticky bits

## Fig. 3(c)

| real value | | value of adding 1 to $2^{-25}$ | value after real rounding | reround signal | correction signal |
|---|---|---|---|---|---|
| $2^0$ | $2^{-23}\ 2^{-24}\ 2^{-25}\ S$ | $C\ 2^{-23}\ 2^{-24}\ 2^{-25}\ S$ | $C\ 2^{-23}\ 2^{-24}$ | | |
| 0 | 0 0 0 0 | 0 0 0 1 \| 0 | 0 0 0 | 0 | 0 0 |
| 1 | | | 0 0 | 0 | 0 0 |
| 0 | 0 0 0 1 | 0 0 0 1 \| 1 | 0 0 0 | 0 | 0 0 |
| 1 | | | 0 0 | 0 | 0 0 |
| 0 | 0 0 1 0 | 0 0 1 0 \| 0 | 0 0 0 | 0 | 0 1 |
| 1 | | | 0 0 | 0 | 0 0 |
| 0 | 0 0 1 1 | 0 0 1 0 \| 1 | 0 0 1 | 0 | 0 0 |
| 1 | | | 0 0 | 0 | 0 0 |
| 0 | 0 1 0 0 | 0 0 1 1 \| 0 | 0 0 1 | 0 | 0 0 |
| 1 | | | 0 0 | 0 | 0 0 |
| 0 | 0 1 0 1 | 0 0 1 1 \| 1 | 0 0 1 | 0 | 0 0 |
| 1 | | | 0 1 | 0 | 0 1 |
| 0 | 0 1 1 0 | 0 1 0 0 \| 0 | 0 1 0 | 0 | 0 0 |
| 1 | | | 0 1 | 0 | 0 0 |
| 0 | 0 1 1 1 | 0 1 0 0 \| 1 | 0 1 0 | 0 | 0 0 |
| 1 | | | 0 1 | 0 | 0 0 |
| 0 | 1 0 0 0 | 0 1 0 1 \| 0 | 0 1 0 | 0 | 0 0 |
| 1 | | | 0 1 | 0 | 0 0 |
| 0 | 1 0 0 1 | 0 1 0 1 \| 1 | 0 1 0 | 0 | 0 0 |
| 1 | | | 0 1 | 0 | 0 0 |
| 0 | 1 0 1 0 | 0 1 1 0 \| 0 | 0 1 0 | 0 | 0 1 |
| 1 | | | 0 1 | 0 | 0 0 |
| 0 | 1 0 1 1 | 0 1 1 0 \| 1 | 0 1 1 | 0 | 0 0 |
| 1 | | | 0 1 | 0 | 0 0 |
| 0 | 1 1 0 0 | 0 1 1 1 \| 0 | 0 1 1 | 0 | 0 0 |
| 1 | | | 1 0 | 1 | 0 0 |
| 0 | 1 1 0 1 | 0 1 1 1 \| 1 | 0 1 1 | 0 | 0 0 |
| 1 | | | 1 0 | 1 | 0 0 |
| 0 | 1 1 1 0 | 1 0 0 0 \| 0 | 1 0 0 | 0 | 0 0 |
| 1 | | | 1 0 | 0 | 0 0 |
| 0 | 1 1 1 1 | 1 0 0 0 \| 1 | 1 0 0 | 0 | 0 0 |
| 1 | | | 1 0 | 0 | 0 0 |

$C$ - - - carry to $2^{-22}$

$S$ - - - sticky bits

Fig. 3(d)

| real value | | | | | value of adding 1 to $2^{-54}$ | | | | | value after real rounding | | | reround signal | correction signal |
|---|---|---|---|---|---|---|---|---|---|---|---|---|---|---|
| $2^0$ | $2^{-52}$ | $2^{-53}$ | $2^{-54}$ | $S$ | $C$ | $2^{-52}$ | $2^{-53}$ | $2^{-54}$ | $S$ | $C$ | $2^{-52}$ | $2^{-53}$ | | |
| 0 | 0 | 0 | 0 | 0 | | 0 | 0 | 0 | 1 | 0 | 0 | 0 | 0 | 0 | 0 0 |
| 1 | | | | | | | | | | | 0 | 0 | 0 | 0 0 |
| 0 | 0 | 0 | 0 | 1 | | 0 | 0 | 0 | 1 | 1 | 0 | 0 | 0 | 0 | 0 0 |
| 1 | | | | | | | | | | | 0 | 0 | 0 | 0 0 |
| 0 | 0 | 0 | 1 | 0 | | 0 | 0 | 1 | 0 | 0 | 0 | 0 | 0 | 0 | 0 1 |
| 1 | | | | | | | | | | | 0 | 0 | 0 | 0 0 |
| 0 | 0 | 0 | 1 | 1 | | 0 | 0 | 1 | 0 | 1 | 0 | 0 | 1 | 0 | 0 0 |
| 1 | | | | | | | | | | | 0 | 0 | 0 | 0 0 |
| 0 | 0 | 1 | 0 | 0 | | 0 | 0 | 1 | 1 | 0 | 0 | 0 | 1 | 0 | 0 0 |
| 1 | | | | | | | | | | | 0 | 0 | 0 | 0 0 |
| 0 | 0 | 1 | 0 | 1 | | 0 | 0 | 1 | 1 | 1 | 0 | 0 | 1 | 0 | 0 0 |
| 1 | | | | | | | | | | | 0 | 1 | 0 | 0 1 |
| 0 | 0 | 1 | 1 | 0 | | 0 | 1 | 0 | 0 | 0 | 0 | 1 | 0 | 0 | 0 0 |
| 1 | | | | | | | | | | | 0 | 1 | 0 | 0 0 |
| 0 | 0 | 1 | 1 | 1 | | 0 | 1 | 0 | 0 | 1 | 0 | 1 | 0 | 0 | 0 0 |
| 1 | | | | | | | | | | | 0 | 1 | 0 | 0 0 |
| 0 | 1 | 0 | 0 | 0 | | 0 | 1 | 0 | 1 | 0 | 0 | 1 | 0 | 0 | 0 0 |
| 1 | | | | | | | | | | | 0 | 1 | 0 | 0 0 |
| 0 | 1 | 0 | 0 | 1 | | 0 | 1 | 0 | 1 | 1 | 0 | 1 | 0 | 0 | 0 0 |
| 1 | | | | | | | | | | | 0 | 1 | 0 | 0 0 |
| 0 | 1 | 0 | 1 | 0 | | 0 | 1 | 1 | 0 | 0 | 0 | 1 | 0 | 0 | 0 1 |
| 1 | | | | | | | | | | | 0 | 1 | 0 | 0 0 |
| 0 | 1 | 0 | 1 | 1 | | 0 | 1 | 1 | 0 | 1 | 0 | 1 | 1 | 0 | 0 0 |
| 1 | | | | | | | | | | | 0 | 1 | 0 | 0 0 |
| 0 | 1 | 1 | 0 | 0 | | 0 | 1 | 1 | 1 | 0 | 0 | 1 | 1 | 0 | 0 0 |
| 1 | | | | | | | | | | | 1 | 0 | 1 | 0 0 |
| 0 | 1 | 1 | 0 | 1 | | 0 | 1 | 1 | 1 | 1 | 0 | 1 | 1 | 0 | 0 0 |
| 1 | | | | | | | | | | | 1 | 0 | 1 | 0 0 |
| 0 | 1 | 1 | 1 | 0 | | 1 | 0 | 0 | 0 | 0 | 1 | 0 | 0 | 0 | 0 0 |
| 1 | | | | | | | | | | | 1 | 0 | 0 | 0 0 |
| 0 | 1 | 1 | 1 | 1 | | 1 | 0 | 0 | 0 | 1 | 1 | 0 | 0 | 0 | 0 0 |
| 1 | | | | | | | | | | | 1 | 0 | 0 | 0 0 |

C – – – carry to 2

S – – – sticky bits

# Fig. 4(a)

C ---carry to $2^{-21}$
S ---sticky bits

| real value | | value of adding 1 to $2^{-24}$ | value after real rounding | reround signal | correction signal |
|---|---|---|---|---|---|
| $2^1$ | $2^{-22}\ 2^{-23}\ 2^{-24}\ S$ | $C\ 2^{-22}\ 2^{-23}\ 2^{-24}\ S$ | $C\ 2^{-22}\ 2^{-23}$ | | |
| 0 | 0 0 0 0 | 0 0 0 1 0 | 0 0 0 | 0 | 0 0 |
| 1 | | | 0 0 | 0 | 0 0 |
| 0 | 0 0 0 1 | 0 0 0 1 1 | 0 0 1 | 0 | 0 1 |
| 1 | | | 0 1 | 0 | 0 1 |
| 0 | 0 0 1 0 | 0 0 1 0 0 | 0 0 1 | 0 | 0 0 |
| 1 | | | 0 1 | 0 | 0 1 |
| 0 | 0 0 1 1 | 0 0 1 0 1 | 0 0 1 | 0 | 0 0 |
| 1 | | | 0 1 | 0 | 0 1 |
| 0 | 0 1 0 0 | 0 0 1 1 0 | 0 0 1 | 0 | 0 0 |
| 1 | | | 0 1 | 0 | 0 1 |
| 0 | 0 1 0 1 | 0 0 1 1 1 | 0 1 0 | 0 | 1 0 |
| 1 | | | 0 1 | 0 | 0 1 |
| 0 | 0 1 1 0 | 0 1 0 0 0 | 0 1 0 | 0 | 0 0 |
| 1 | | | 0 1 | 0 | 0 0 |
| 0 | 0 1 1 1 | 0 1 0 0 1 | 0 1 0 | 0 | 0 0 |
| 1 | | | 0 1 | 0 | 0 0 |
| 0 | 1 0 0 0 | 0 1 0 1 0 | 0 1 0 | 0 | 0 0 |
| 1 | | | 0 1 | 0 | 0 0 |
| 0 | 1 0 0 1 | 0 1 0 1 1 | 0 1 1 | 0 | 0 1 |
| 1 | | | 1 0 | 1 | 0 1 |
| 0 | 1 0 1 0 | 0 1 1 0 0 | 0 1 1 | 0 | 0 0 |
| 1 | | | 1 0 | 1 | 0 0 |
| 0 | 1 0 1 1 | 0 1 1 0 1 | 0 1 1 | 0 | 0 0 |
| 1 | | | 1 0 | 1 | 0 0 |
| 0 | 1 1 0 0 | 0 1 1 1 0 | 0 1 1 | 0 | 0 0 |
| 1 | | | 1 0 | 1 | 0 0 |
| 0 | 1 1 0 1 | 0 1 1 1 1 | 1 0 0 | 1 | 0 0 |
| 1 | | | 1 0 | 1 | 0 0 |
| 0 | 1 1 1 0 | 1 0 0 0 0 | 1 0 0 | 0 | 0 0 |
| 1 | | | 1 0 | 0 | 0 0 |
| 0 | 1 1 1 1 | 1 0 0 0 1 | 1 0 0 | 0 | 0 0 |
| 1 | | | 1 0 | 0 | 0 0 |

## Fig. 4(b)

C --- carry to $2^{-50}$
S --- sticky bits

| real value | | value of adding 1 to $2^{-53}$ | | value after real rounding | | reround signal | correction signal |
|---|---|---|---|---|---|---|---|
| $2^1$ | $2^{-51} 2^{-52} 2^{-53}$ S | C $2^{-51} 2^{-52} 2^{-53}$ S | C $2^{-51} 2^{-52}$ | | | | |
| 0 | 0 0 0 0 | 0 0 0 1 0 | 0 0 0 | | 0 | 0 0 |
| 1 | | | 0 0 | | 0 | 0 0 |
| 0 | 0 0 0 1 | 0 0 0 1 1 | 0 0 1 | | 0 | 0 1 |
| 1 | | | 0 1 | | 0 | 0 1 |
| 0 | 0 0 1 0 | 0 0 1 0 0 | 0 0 1 | | 0 | 0 0 |
| 1 | | | 0 1 | | 0 | 0 1 |
| 0 | 0 0 1 1 | 0 0 1 0 1 | 0 0 1 | | 0 | 0 0 |
| 1 | | | 0 1 | | 0 | 0 1 |
| 0 | 0 1 0 0 | 0 0 1 1 0 | 0 0 1 | | 0 | 0 0 |
| 1 | | | 0 1 | | 0 | 0 1 |
| 0 | 0 1 0 1 | 0 0 1 1 1 | 0 1 0 | | 0 | 1 0 |
| 1 | | | 0 1 | | 0 | 0 1 |
| 0 | 0 1 1 0 | 0 1 0 0 0 | 0 1 0 | | 0 | 0 0 |
| 1 | | | 0 1 | | 0 | 0 0 |
| 0 | 0 1 1 1 | 0 1 0 0 1 | 0 1 0 | | 0 | 0 0 |
| 1 | | | 0 1 | | 0 | 0 0 |
| 0 | 1 0 0 0 | 0 1 0 1 0 | 0 1 0 | | 0 | 0 0 |
| 1 | | | 0 1 | | 0 | 0 0 |
| 0 | 1 0 0 1 | 0 1 0 1 1 | 0 1 1 | | 0 | 0 1 |
| 1 | | | 1 0 | | 1 | 0 1 |
| 0 | 1 0 1 0 | 0 1 1 0 0 | 0 1 1 | | 0 | 0 0 |
| 1 | | | 1 0 | | 1 | 0 0 |
| 0 | 1 0 1 1 | 0 1 1 0 1 | 0 1 1 | | 0 | 0 0 |
| 1 | | | 1 0 | | 1 | 0 0 |
| 0 | 1 1 0 0 | 0 1 1 1 0 | 0 1 1 | | 0 | 0 0 |
| 1 | | | 1 0 | | 1 | 0 0 |
| 0 | 1 1 0 1 | 0 1 1 1 1 | 1 0 0 | | 1 | 0 0 |
| 1 | | | 1 0 | | 1 | 0 0 |
| 0 | 1 1 1 0 | 1 0 0 0 0 | 1 0 0 | | 0 | 0 0 |
| 1 | | | 1 0 | | 0 | 0 0 |
| 0 | 1 1 1 1 | 1 0 0 0 1 | 1 0 0 | | 0 | 0 0 |
| 1 | | | 1 0 | | 0 | 0 0 |

# Fig. 4(c)

C --- carry to $2^{-22}$
S --- sticky bits

| real value | | value of adding 1 to $2^{-25}$ | value after real rounding | reround signal | correction signal |
|---|---|---|---|---|---|
| $2^0$ | $2^{-23}2^{-24}2^{-25}S$ | $C\ 2^{-23}2^{-24}2^{-25}S$ | $C\ 2^{-23}2^{-24}$ | | |
| 0 | 0 0 0 0 | 0 0 0 1 \| 0 | 0 0 0 | 0 | 0 0 |
| 1 | | | 0 0 | 0 | 0 0 |
| 0 | 0 0 0 1 | 0 0 0 1 \| 1 | 0 0 1 | 0 | 0 1 |
| 1 | | | 0 1 | 0 | 0 1 |
| 0 | 0 0 1 0 | 0 0 1 0 \| 0 | 0 0 1 | 0 | 0 0 |
| 1 | | | 0 1 | 0 | 0 1 |
| 0 | 0 0 1 1 | 0 0 1 0 \| 1 | 0 0 1 | 0 | 0 0 |
| 1 | | | 0 1 | 0 | 0 1 |
| 0 | 0 1 0 0 | 0 0 1 1 \| 0 | 0 0 1 | 0 | 0 0 |
| 1 | | | 0 1 | 0 | 0 1 |
| 0 | 0 1 0 1 | 0 0 1 1 \| 1 | 0 1 0 | 0 | 1 0 |
| 1 | | | 0 1 | 0 | 0 1 |
| 0 | 0 1 1 0 | 0 1 0 0 \| 0 | 0 1 0 | 0 | 0 0 |
| 1 | | | 0 1 | 0 | 0 0 |
| 0 | 0 1 1 1 | 0 1 0 0 \| 1 | 0 1 0 | 0 | 0 0 |
| 1 | | | 0 1 | 0 | 0 0 |
| 0 | 1 0 0 0 | 0 1 0 1 \| 0 | 0 1 0 | 0 | 0 0 |
| 1 | | | 0 1 | 0 | 0 0 |
| 0 | 1 0 0 1 | 0 1 0 1 \| 1 | 0 1 1 | 0 | 0 1 |
| 1 | | | 1 0 | 1 | 0 1 |
| 0 | 1 0 1 0 | 0 1 1 0 \| 0 | 0 1 1 | 0 | 0 0 |
| 1 | | | 1 0 | 1 | 0 0 |
| 0 | 1 0 1 1 | 0 1 1 0 \| 1 | 0 1 1 | 0 | 0 0 |
| 1 | | | 1 0 | 1 | 0 0 |
| 0 | 1 1 0 0 | 0 1 1 1 \| 0 | 0 1 1 | 0 | 0 0 |
| 1 | | | 1 0 | 1 | 0 0 |
| 0 | 1 1 0 1 | 0 1 1 1 \| 1 | 1 0 0 | 1 | 0 0 |
| 1 | | | 1 0 | 1 | 0 0 |
| 0 | 1 1 1 0 | 1 0 0 0 \| 0 | 1 0 0 | 0 | 0 0 |
| 1 | | | 1 0 | 0 | 0 0 |
| 0 | 1 1 1 1 | 1 0 0 0 \| 1 | 1 0 0 | 0 | 0 0 |
| 1 | | | 1 0 | 0 | 0 0 |

# Fig. 4(d)

C --- carry to $2^{-51}$
S --- sticky bits

| real value | | value of adding 1 to $2^{-54}$ | value after real rounding | reround signal | correction signal |
|---|---|---|---|---|---|
| $2^0$ | $2^{-52}\ 2^{-53}\ 2^{-54}\ S$ | $C\ 2^{-52}\ 2^{-53}\ 2^{-54}\ S$ | $C\ 2^{-52}\ 2^{-53}$ | | |
| 0 | 0 0 0 0 | 0 0 0 1 0 | 0 0 0 | 0 | 0 0 |
| 1 | | | 0 0 | 0 | 0 0 |
| 0 | 0 0 0 1 | 0 0 0 1 1 | 0 0 1 | 0 | 0 1 |
| 1 | | | 0 1 | 0 | 0 1 |
| 0 | 0 0 1 0 | 0 0 1 0 0 | 0 0 1 | 0 | 0 0 |
| 1 | | | 0 1 | 0 | 0 1 |
| 0 | 0 0 1 1 | 0 0 1 0 1 | 0 0 1 | 0 | 0 0 |
| 1 | | | 0 1 | 0 | 0 1 |
| 0 | 0 1 0 0 | 0 0 1 1 0 | 0 0 1 | 0 | 0 0 |
| 1 | | | 0 1 | 0 | 0 1 |
| 0 | 0 1 0 1 | 0 0 1 1 1 | 0 1 0 | 0 | 1 0 |
| 1 | | | 0 1 | 0 | 0 1 |
| 0 | 0 1 1 0 | 0 1 0 0 0 | 0 1 0 | 0 | 0 0 |
| 1 | | | 0 1 | 0 | 0 0 |
| 0 | 0 1 1 1 | 0 1 0 0 1 | 0 1 0 | 0 | 0 0 |
| 1 | | | 0 1 | 0 | 0 0 |
| 0 | 1 0 0 0 | 0 1 0 1 0 | 0 1 0 | 0 | 0 0 |
| 1 | | | 0 1 | 0 | 0 0 |
| 0 | 1 0 0 1 | 0 1 0 1 1 | 0 1 1 | 0 | 0 1 |
| 1 | | | 1 0 | 1 | 0 1 |
| 0 | 1 0 1 0 | 0 1 1 0 0 | 0 1 1 | 0 | 0 0 |
| 1 | | | 1 0 | 1 | 0 0 |
| 0 | 1 0 1 1 | 0 1 1 0 1 | 0 1 1 | 0 | 0 0 |
| 1 | | | 1 0 | 1 | 0 0 |
| 0 | 1 1 0 0 | 0 1 1 1 0 | 0 1 1 | 0 | 0 0 |
| 1 | | | 1 0 | 1 | 0 0 |
| 0 | 1 1 0 1 | 0 1 1 1 1 | 1 0 0 | 1 | 0 0 |
| 1 | | | 1 0 | 1 | 0 0 |
| 0 | 1 1 1 0 | 1 0 0 0 0 | 1 0 0 | 0 | 0 0 |
| 1 | | | 1 0 | 0 | 0 0 |
| 0 | 1 1 1 1 | 1 0 0 0 1 | 1 0 0 | 0 | 0 0 |
| 1 | | | 1 0 | 0 | 0 0 |

## Fig. 5(a)

C --- carry to $2^{-21}$

S --- sticky bits

| real value | | | | | value of adding 1 to $2^{-23}$ | | | | | value after real rounding | | | reround signal | correction signal |
|---|---|---|---|---|---|---|---|---|---|---|---|---|---|---|
| $2^1$ | $2^{-22}$ | $2^{-23}$ | $2^{-24}$ | S | C | $2^{-22}$ | $2^{-23}$ | $2^{-24}$ | S | C | $2^{-22}$ | $2^{-23}$ | | |
| 0 | 0 | 0 | 0 | 0 | 0 | 0 | 1 | 0 | 0 | 0 | 0 | 0 | 0 | 0 1 |
| 1 |   |   |   |   |   |   |   |   |   | 0 | 0 | | 0 | 0 0 |
| 0 | 0 | 0 | 0 | 1 | 0 | 0 | 1 | 0 | 1 | 0 | 0 | 1 | 0 | 0 0 |
| 1 |   |   |   |   |   |   |   |   |   | 0 | 1 | | 0 | 0 1 |
| 0 | 0 | 0 | 1 | 0 | 0 | 0 | 1 | 1 | 0 | 0 | 0 | 1 | 0 | 0 0 |
| 1 |   |   |   |   |   |   |   |   |   | 0 | 1 | | 0 | 0 1 |
| 0 | 0 | 0 | 1 | 1 | 0 | 0 | 1 | 1 | 1 | 0 | 0 | 1 | 0 | 0 0 |
| 1 |   |   |   |   |   |   |   |   |   | 0 | 1 | | 0 | 0 1 |
| 0 | 0 | 1 | 0 | 0 | 0 | 1 | 0 | 0 | 0 | 0 | 0 | 1 | 0 | 1 0 |
| 1 |   |   |   |   |   |   |   |   |   | 0 | 1 | | 0 | 0 0 |
| 0 | 0 | 1 | 0 | 1 | 0 | 1 | 0 | 0 | 1 | 0 | 1 | 0 | 0 | 0 0 |
| 1 |   |   |   |   |   |   |   |   |   | 0 | 1 | | 0 | 0 0 |
| 0 | 0 | 1 | 1 | 0 | 0 | 1 | 0 | 1 | 0 | 0 | 1 | 0 | 0 | 0 0 |
| 1 |   |   |   |   |   |   |   |   |   | 0 | 1 | | 0 | 0 0 |
| 0 | 0 | 1 | 1 | 1 | 0 | 1 | 0 | 1 | 1 | 0 | 1 | 0 | 0 | 0 0 |
| 1 |   |   |   |   |   |   |   |   |   | 0 | 1 | | 0 | 0 0 |
| 0 | 1 | 0 | 0 | 0 | 0 | 1 | 1 | 0 | 0 | 0 | 1 | 0 | 0 | 0 1 |
| 1 |   |   |   |   |   |   |   |   |   | 0 | 1 | | 0 | 0 0 |
| 0 | 1 | 0 | 0 | 1 | 0 | 1 | 1 | 0 | 1 | 0 | 1 | 1 | 0 | 0 0 |
| 1 |   |   |   |   |   |   |   |   |   | 1 | 0 | | 1 | 0 0 |
| 0 | 1 | 0 | 1 | 0 | 0 | 1 | 1 | 1 | 0 | 0 | 1 | 1 | 0 | 0 0 |
| 1 |   |   |   |   |   |   |   |   |   | 1 | 0 | | 1 | 0 0 |
| 0 | 1 | 0 | 1 | 1 | 0 | 1 | 1 | 1 | 1 | 0 | 1 | 1 | 0 | 0 0 |
| 1 |   |   |   |   |   |   |   |   |   | 1 | 0 | | 1 | 0 0 |
| 0 | 1 | 1 | 0 | 0 | 1 | 0 | 0 | 0 | 0 | 0 | 1 | 1 | 1 | 1 1 |
| 1 |   |   |   |   |   |   |   |   |   | 1 | 0 | | 0 | 0 0 |
| 0 | 1 | 1 | 0 | 1 | 1 | 0 | 0 | 0 | 1 | 1 | 0 | 0 | 0 | 0 0 |
| 1 |   |   |   |   |   |   |   |   |   | 1 | 0 | | 0 | 0 0 |
| 0 | 1 | 1 | 1 | 0 | 1 | 0 | 0 | 1 | 0 | 1 | 0 | 0 | 0 | 0 0 |
| 1 |   |   |   |   |   |   |   |   |   | 1 | 0 | | 0 | 0 0 |
| 0 | 1 | 1 | 1 | 1 | 1 | 0 | 0 | 1 | 1 | 1 | 0 | 0 | 0 | 0 0 |
| 1 |   |   |   |   |   |   |   |   |   | 1 | 0 | | 0 | 0 0 |

## Fig. 5(b)

C --- carry to $2^{-50}$

S --- sticky bits

| real value | | | | | value of adding 1 to $2^{-52}$ | | | | | value after real rounding | | | reround signal | correction signal | |
|---|---|---|---|---|---|---|---|---|---|---|---|---|---|---|---|
| $2^1$ | $2^{-51}$ | $2^{-52}$ | $2^{-53}$ | S | C | $2^{-51}$ | $2^{-52}$ | $2^{-53}$ | S | C | $2^{-51}$ | $2^{-52}$ | | | |
| 0 | 0 | 0 | 0 | 0 | 0 | 0 | 1 | 0 | 0 | 0 | 0 | 0 | 0 | 0 | 1 |
| 1 | | | | | | | | | | 0 | 0 | | 0 | 0 | 0 |
| 0 | 0 | 0 | 0 | 1 | 0 | 0 | 1 | 0 | 1 | 0 | 0 | 1 | 0 | 0 | 0 |
| 1 | | | | | | | | | | 0 | 1 | | 0 | 0 | 1 |
| 0 | 0 | 0 | 1 | 0 | 0 | 0 | 1 | 1 | 0 | 0 | 0 | 1 | 0 | 0 | 0 |
| 1 | | | | | | | | | | 0 | 1 | | 0 | 0 | 1 |
| 0 | 0 | 0 | 1 | 1 | 0 | 0 | 1 | 1 | 1 | 0 | 0 | 1 | 0 | 0 | 0 |
| 1 | | | | | | | | | | 0 | 1 | | 0 | 0 | 1 |
| 0 | 0 | 1 | 0 | 0 | 0 | 1 | 0 | 0 | 0 | 0 | 0 | 1 | 0 | 1 | 0 |
| 1 | | | | | | | | | | 0 | 1 | | 0 | 0 | 0 |
| 0 | 0 | 1 | 0 | 1 | 0 | 1 | 0 | 0 | 1 | 0 | 1 | 0 | 0 | 0 | 0 |
| 1 | | | | | | | | | | 0 | 1 | | 0 | 0 | 0 |
| 0 | 0 | 1 | 1 | 0 | 0 | 1 | 0 | 1 | 0 | 0 | 1 | 0 | 0 | 0 | 0 |
| 1 | | | | | | | | | | 0 | 1 | | 0 | 0 | 0 |
| 0 | 0 | 1 | 1 | 1 | 0 | 1 | 0 | 1 | 1 | 0 | 1 | 0 | 0 | 0 | 0 |
| 1 | | | | | | | | | | 0 | 1 | | 0 | 0 | 0 |
| 0 | 1 | 0 | 0 | 0 | 0 | 1 | 1 | 0 | 0 | 0 | 1 | 0 | 0 | 0 | 1 |
| 1 | | | | | | | | | | 0 | 1 | | 0 | 0 | 0 |
| 0 | 1 | 0 | 0 | 1 | 0 | 1 | 1 | 0 | 1 | 0 | 1 | 1 | 0 | 0 | 0 |
| 1 | | | | | | | | | | 1 | 0 | | 1 | 0 | 0 |
| 0 | 1 | 0 | 1 | 0 | 0 | 1 | 1 | 1 | 0 | 0 | 1 | 1 | 0 | 0 | 0 |
| 1 | | | | | | | | | | 1 | 0 | | 1 | 0 | 0 |
| 0 | 1 | 0 | 1 | 1 | 0 | 1 | 1 | 1 | 1 | 0 | 1 | 1 | 0 | 0 | 0 |
| 1 | | | | | | | | | | 1 | 0 | | 1 | 0 | 0 |
| 0 | 1 | 1 | 0 | 0 | 1 | 0 | 0 | 0 | 0 | 0 | 1 | 1 | 1 | 1 | 1 |
| 1 | | | | | | | | | | 1 | 0 | | 0 | 0 | 0 |
| 0 | 1 | 1 | 0 | 1 | 1 | 0 | 0 | 0 | 1 | 1 | 0 | 0 | 0 | 0 | 0 |
| 1 | | | | | | | | | | 1 | 0 | | 0 | 0 | 0 |
| 0 | 1 | 1 | 1 | 0 | 1 | 0 | 0 | 1 | 0 | 1 | 0 | 0 | 0 | 0 | 0 |
| 1 | | | | | | | | | | 1 | 0 | | 0 | 0 | 0 |
| 0 | 1 | 1 | 1 | 1 | 1 | 0 | 0 | 1 | 1 | 1 | 0 | 0 | 0 | 0 | 0 |
| 1 | | | | | | | | | | 1 | 0 | | 0 | 0 | 0 |

## Fig. 5(c)

C --- carry to $2^{-22}$
S --- sticky bits

| real value | | value of adding 1 to $2^{-24}$ | value after real rounding | reround signal | correction signal |
|---|---|---|---|---|---|
| $2^0$ | $2^{-23}\ 2^{-24}\ 2^{-25}$ S | C $2^{-23}\ 2^{-24}\ 2^{-25}$ S | C $2^{-23}\ 2^{-24}$ | | |
| 0 | 0 0 0 0 | 0 0 1 ̱   0¦0 | 0 0 0̱ | 0 | 0 1 |
| 1 | | | 0 0 | 0 | 0 0 |
| 0 | 0 0 0 1 | 0 0̰ 1   0¦1 | 0 0 1 | 0 | 0 0 |
| 1 | | | 0 1̰ | 0 | 0 1 |
| 0 | 0 0 1 0 | 0 0̰ 1   1¦0 | 0 0 1 | 0 | 0 0 |
| 1 | | | 0 1̰ | 0 | 0 1 |
| 0 | 0 0 1 1 | 0 0̰ 1   1¦1 | 0 0 1 | 0 | 0 0 |
| 1 | | | 0 1̰ | 0 | 0 1 |
| 0 | 0 1 0 0 | 0 1 0̱   0¦0 | 0 0̱ 1 | 0 | 1 0 |
| 1 | | | 0 1 | 0 | 0 0 |
| 0 | 0 1 0 1 | 0 1 0   0¦1 | 0 1 0 | 0 | 0 0 |
| 1 | | | 0 1 | 0 | 0 0 |
| 0 | 0 1 1 0 | 0 1 0   1¦0 | 0 1 0 | 0 | 0 0 |
| 1 | | | 0 1 | 0 | 0 0 |
| 0 | 0 1 1 1 | 0 1 0   1¦1 | 0 1 0 | 0 | 0 0 |
| 1 | | | 0 1 | 0 | 0 0 |
| 0 | 1 0 0 0 | 0 1 1   0¦0 | 0 1 0̱ | 0 | 0 1 |
| 1 | | | 0 1 | 0 | 0 0 |
| 0 | 1 0 0 1 | 0̰ 1̰ 1   0¦1 | 0 1 1 | 0 | 0 0 |
| 1 | | | 1̰ 0̰ | 1̰ | 0 0 |
| 0 | 1 0 1 0 | 0̰ 1̰ 1   1¦0 | 0 1 1 | 0 | 0 0 |
| 1 | | | 1̰ 0̰ | 1̰ | 0 0 |
| 0 | 1 0 1 1 | 0̰ 1̰ 1   1¦1 | 0 1 1 | 0 | 0 0 |
| 1 | | | 1̰ 0̰ | 1̰ | 0 0 |
| 0 | 1 1 0 0 | 1̱ 0 0   0¦0 | 0̱ 1 1 | 1̱ | 1 1 |
| 1 | | | 1 0 | 0 | 0 0 |
| 0 | 1 1 0 1 | 1 0 0   0¦1 | 1 0 0 | 0 | 0 0 |
| 1 | | | 1 0 | 0 | 0 0 |
| 0 | 1 1 1 0 | 1 0 0   1¦0 | 1 0 0 | 0 | 0 0 |
| 1 | | | 1 0 | 0 | 0 0 |
| 0 | 1 1 1 1 | 1 0 0   1¦1 | 1 0 0 | 0 | 0 0 |
| 1 | | | 1 0 | 0 | 0 0 |

# Fig. 5 (d)

C---carry to $2^{-51}$
S---sticky bits

| real value | | | | | value of adding 1 to $2^{-53}$ | | | | | value after real rounding | | | reround signal | correction signal |
|---|---|---|---|---|---|---|---|---|---|---|---|---|---|---|
| $2^0$ | $2^{-52}$ | $2^{-53}$ | $2^{-54}$ | S | C | $2^{-52}$ | $2^{-53}$ | $2^{-54}$ | S | C | $2^{-52}$ | $2^{-53}$ | signal | signal |
| 0 | 0 | 0 | 0 | | | 0 | 0 | 1 | 0 0 | | 0 | 0 0 | 0 | 0 1 |
| 1 | | | | | | | | | | | 0 | 0 | 0 | 0 0 |
| 0 | 0 | 0 | 0 1 | | | 0 | 0 | 1 | 0 1 | | 0 | 0 1 | 0 | 0 0 |
| 1 | | | | | | | | | | | 0 | 1 | 0 | 0 1 |
| 0 | 0 | 0 | 1 0 | | | 0 | 0 | 1 | 1 0 | | 0 | 0 1 | 0 | 0 0 |
| 1 | | | | | | | | | | | 0 | 1 | 0 | 0 1 |
| 0 | 0 | 0 | 1 1 | | | 0 | 0 | 1 | 1 1 | | 0 | 0 1 | 0 | 0 0 |
| 1 | | | | | | | | | | | 0 | 1 | 0 | 0 1 |
| 0 | 0 | 1 | 0 0 | | | 0 | 1 | 0 | 0 0 | | 0 | 0 1 | 0 | 1 0 |
| 1 | | | | | | | | | | | 0 | 1 | 0 | 0 0 |
| 0 | 0 | 1 | 0 1 | | | 0 | 1 | 0 | 0 1 | | 0 | 1 0 | 0 | 0 0 |
| 1 | | | | | | | | | | | 0 | 1 | 0 | 0 0 |
| 0 | 0 | 1 | 1 0 | | | 0 | 1 | 0 | 1 0 | | 0 | 1 0 | 0 | 0 0 |
| 1 | | | | | | | | | | | 0 | 1 | 0 | 0 0 |
| 0 | 0 | 1 | 1 1 | | | 0 | 1 | 0 | 1 1 | | 0 | 1 0 | 0 | 0 0 |
| 1 | | | | | | | | | | | 0 | 1 | 0 | 0 0 |
| 0 | 1 | 0 | 0 0 | | | 0 | 1 | 1 | 0 0 | | 0 | 1 0 | 0 | 0 1 |
| 1 | | | | | | | | | | | 0 | 1 | 0 | 0 0 |
| 0 | 1 | 0 | 0 1 | | | 0 | 1 | 1 | 0 1 | | 0 | 1 1 | 0 | 0 0 |
| 1 | | | | | | | | | | | 1 | 0 | 1 | 0 0 |
| 0 | 1 | 0 | 1 0 | | | 0 | 1 | 1 | 1 0 | | 0 | 1 1 | 0 | 0 0 |
| 1 | | | | | | | | | | | 1 | 0 | 1 | 0 0 |
| 0 | 1 | 0 | 1 1 | | | 0 | 1 | 1 | 1 1 | | 0 | 1 1 | 0 | 0 0 |
| 1 | | | | | | | | | | | 1 | 0 | 1 | 0 0 |
| 0 | 1 | 1 | 0 0 | | | 1 | 0 | 0 | 0 0 | | 0 | 1 1 | 1 | 1 1 |
| 1 | | | | | | | | | | | 1 | 0 | 0 | 0 0 |
| 0 | 1 | 1 | 0 1 | | | 1 | 0 | 0 | 0 1 | | 1 | 0 0 | 0 | 0 0 |
| 1 | | | | | | | | | | | 1 | 0 | 0 | 0 0 |
| 0 | 1 | 1 | 1 0 | | | 1 | 0 | 0 | 1 0 | | 1 | 0 0 | 0 | 0 0 |
| 1 | | | | | | | | | | | 1 | 0 | 0 | 0 0 |
| 0 | 1 | 1 | 1 1 | | | 1 | 0 | 0 | 1 1 | | 1 | 0 0 | 0 | 0 0 |
| 1 | | | | | | | | | | | 1 | 0 | 0 | 0 0 |

# Fig. 6(a)

C --- carry to $2^{-21}$

S --- sticky bits

| real value | | | | | value of adding 1 to $2^{-24}$ | | | | | value after real rounding | | | reround signal | correction signal |
|---|---|---|---|---|---|---|---|---|---|---|---|---|---|---|
| $2^{1}$ | $2^{-22}$ | $2^{-23}$ | $2^{-24}$ | S | c | $2^{-22}$ | $2^{-23}$ | $2^{-24}$ | S | c | $2^{-22}$ | $2^{-23}$ | | |
| 0 | 0 | 0 | 0 | 0 | 0 | 0 | 0 | 1 | 1 | 0 | 0 | 0 | 0 | 0 0 |
| 1 | | | | | | | | | | 0 | 0 | | 0 | 0 0 |
| 0 | 0 | 0 | 0 | 1 | 0 | 0 | 1 | 0 | 0 | 0 | 0 | 1 | 0 | 0 0 |
| 1 | | | | | | | | | | 0 | 1 | | 0 | 0 1 |
| 0 | 0 | 0 | 1 | 0 | 0 | 0 | 1 | 0 | 1 | 0 | 0 | 1 | 0 | 0 0 |
| 1 | | | | | | | | | | 0 | 1 | | 0 | 0 1 |
| 0 | 0 | 0 | 1 | 1 | 0 | 0 | 1 | 1 | 0 | 0 | 0 | 1 | 0 | 0 0 |
| 1 | | | | | | | | | | 0 | 1 | | 0 | 0 1 |
| 0 | 0 | 1 | 0 | 0 | 0 | 0 | 1 | 1 | 1 | 0 | 0 | 1 | 0 | 0 0 |
| 1 | | | | | | | | | | 0 | 1 | | 0 | 0 1 |
| 0 | 0 | 1 | 0 | 1 | 0 | 1 | 0 | 0 | 0 | 0 | 1 | 0 | 0 | 0 0 |
| 1 | | | | | | | | | | 0 | 1 | | 0 | 0 0 |
| 0 | 0 | 1 | 1 | 0 | 0 | 1 | 0 | 0 | 1 | 0 | 1 | 0 | 0 | 0 0 |
| 1 | | | | | | | | | | 0 | 1 | | 0 | 0 0 |
| 0 | 0 | 1 | 1 | 1 | 0 | 1 | 0 | 1 | 0 | 0 | 1 | 0 | 0 | 0 0 |
| 1 | | | | | | | | | | 0 | 1 | | 0 | 0 0 |
| 0 | 1 | 0 | 0 | 0 | 0 | 1 | 0 | 1 | 1 | 0 | 1 | 0 | 0 | 0 0 |
| 1 | | | | | | | | | | 0 | 1 | | 0 | 0 0 |
| 0 | 1 | 0 | 0 | 1 | 0 | 1 | 1 | 0 | 0 | 0 | 1 | 1 | 0 | 0 0 |
| 1 | | | | | | | | | | 1 | 0 | | 1 | 0 0 |
| 0 | 1 | 0 | 1 | 0 | 0 | 1 | 1 | 0 | 1 | 0 | 1 | 1 | 0 | 0 0 |
| 1 | | | | | | | | | | 1 | 0 | | 1 | 0 0 |
| 0 | 1 | 0 | 1 | 1 | 0 | 1 | 1 | 1 | 0 | 0 | 1 | 1 | 0 | 0 0 |
| 1 | | | | | | | | | | 1 | 0 | | 1 | 0 0 |
| 0 | 1 | 1 | 0 | 0 | 0 | 1 | 1 | 1 | 1 | 0 | 1 | 1 | 0 | 0 0 |
| 1 | | | | | | | | | | 1 | 0 | | 1 | 0 0 |
| 0 | 1 | 1 | 0 | 1 | 1 | 0 | 0 | 0 | 0 | 1 | 0 | 0 | 0 | 0 0 |
| 1 | | | | | | | | | | 1 | 0 | | 0 | 0 0 |
| 0 | 1 | 1 | 1 | 0 | 1 | 0 | 0 | 0 | 1 | 1 | 0 | 0 | 0 | 0 0 |
| 1 | | | | | | | | | | 1 | 0 | | 0 | 0 0 |
| 0 | 1 | 1 | 1 | 1 | 1 | 0 | 0 | 1 | 0 | 1 | 0 | 0 | 0 | 0 0 |
| 1 | | | | | | | | | | 1 | 0 | | 0 | 0 0 |

EP 0 472 148 B1

# Fig. 6(b)

C --- carry to $2^{-50}$
S --- sticky bits

| real value | | value of adding 1 to $2^{-53}$ | | value after real rounding | | reround signal | correction signal |
|---|---|---|---|---|---|---|---|
| $2^1$ | $2^{-51}\ 2^{-52}\ 2^{-53}\ S$ | $c$ | $2^{-51}\ 2^{-52}\ 2^{-53}\ S$ | $c$ | $2^{-51}\ 2^{-52}$ | signal | signal |
| 0 | 0 0 0 0 | | 0 0 0  1 1 1 | | 0 0 0 | 0 | 0 0 |
| 1 | | | | | 0 0 | 0 | 0 0 |
| 0 | 0 0 0 1 | | 0 0 1  0 0 | | 0 0 1 | 0 | 0 0 |
| 1 | | | | | 0 1 | 0 | 0 1 |
| 0 | 0 0 1 0 | | 0 0 1  0 1 | | 0 0 1 | 0 | 0 0 |
| 1 | | | | | 0 1 | 0 | 0 1 |
| 0 | 0 0 1 1 | | 0 0 1  1 0 | | 0 0 1 | 0 | 0 0 |
| 1 | | | | | 0 1 | 0 | 0 1 |
| 0 | 0 1 0 0 | | 0 0 1  1 1 | | 0 0 1 | 0 | 0 0 |
| 1 | | | | | 0 1 | 0 | 0 1 |
| 0 | 0 1 0 1 | | 0 1 0  0 0 | | 0 1 0 | 0 | 0 0 |
| 1 | | | | | 0 1 | 0 | 0 0 |
| 0 | 0 1 1 0 | | 0 1 0  0 1 | | 0 1 0 | 0 | 0 0 |
| 1 | | | | | 0 1 | 0 | 0 0 |
| 0 | 0 1 1 1 | | 0 1 0  1 0 | | 0 1 0 | 0 | 0 0 |
| 1 | | | | | 0 1 | 0 | 0 0 |
| 0 | 1 0 0 0 | | 0 1 0  1 1 | | 0 1 0 | 0 | 0 0 |
| 1 | | | | | 0 1 | 0 | 0 0 |
| 0 | 1 0 0 1 | | 0 1 1  0 0 | | 0 1 1 | 0 | 0 0 |
| 1 | | | | | 1 0 | 1 | 0 0 |
| 0 | 1 0 1 0 | | 0 1 1  0 1 | | 0 1 1 | 0 | 0 0 |
| 1 | | | | | 1 0 | 1 | 0 0 |
| 0 | 1 0 1 1 | | 0 1 1  1 0 | | 0 1 1 | 0 | 0 0 |
| 1 | | | | | 1 0 | 1 | 0 0 |
| 0 | 1 1 0 0 | | 0 1 1  1 1 | | 0 1 1 | 0 | 0 0 |
| 1 | | | | | 1 0 | 1 | 0 0 |
| 0 | 1 1 0 1 | | 1 0 0  0 0 | | 1 0 0 | 0 | 0 0 |
| 1 | | | | | 1 0 | 0 | 0 0 |
| 0 | 1 1 1 0 | | 1 0 0  0 1 | | 1 0 0 | 0 | 0 0 |
| 1 | | | | | 1 0 | 0 | 0 0 |
| 0 | 1 1 1 1 | | 1 0 0  1 0 | | 1 0 0 | 0 | 0 0 |
| 1 | | | | | 1 0 | 0 | 0 0 |

67

# Fig. 6(c)

C --- carry to $2^{-22}$
S --- sticky bits

| real value | | | | | value of adding 1 to $2^{-25}$ | | | | | value after real rounding | | | reround signal | correction signal |
|---|---|---|---|---|---|---|---|---|---|---|---|---|---|---|
| $2^0$ | $2^{-23}$ | $2^{-24}$ | $2^{-25}$ | S | C | $2^{-23}$ | $2^{-24}$ | $2^{-25}$ | S | C | $2^{-23}$ | $2^{-24}$ | | |
| 0 | 0 | 0 | 0 | 0 | 0 | 0 | 0 | 1 | 1 1 | 0 | 0 | 0 | 0 | 0 0 |
| 1 | | | | | | | | | | | 0 | 0 | 0 | 0 0 |
| 0 | 0 | 0 | 0 | 1 | 0 | 0 | 1 | 0 | 0 | 0 | 0 | 1 | 0 | 0 0 |
| 1 | | | | | | | | | | | 0 | 1 | 0 | 0 1 |
| 0 | 0 | 0 | 1 | 0 | 0 | 0 | 1 | 0 | 1 | 0 | 0 | 1 | 0 | 0 0 |
| 1 | | | | | | | | | | | 0 | 1 | 0 | 0 1 |
| 0 | 0 | 0 | 1 | 1 | 0 | 0 | 1 | 1 | 0 | 0 | 0 | 1 | 0 | 0 0 |
| 1 | | | | | | | | | | | 0 | 1 | 0 | 0 1 |
| 0 | 0 | 1 | 0 | 0 | 0 | 0 | 1 | 1 | 1 | 0 | 0 | 1 | 0 | 0 0 |
| 1 | | | | | | | | | | | 0 | 1 | 0 | 0 1 |
| 0 | 0 | 1 | 0 | 1 | 0 | 1 | 0 | 0 | 0 | 0 | 1 | 0 | 0 | 0 0 |
| 1 | | | | | | | | | | | 0 | 1 | 0 | 0 0 |
| 0 | 0 | 1 | 1 | 0 | 0 | 1 | 0 | 0 | 1 | 0 | 1 | 0 | 0 | 0 0 |
| 1 | | | | | | | | | | | 0 | 1 | 0 | 0 0 |
| 0 | 0 | 1 | 1 | 1 | 0 | 1 | 0 | 1 | 0 | 0 | 1 | 0 | 0 | 0 0 |
| 1 | | | | | | | | | | | 0 | 1 | 0 | 0 0 |
| 0 | 1 | 0 | 0 | 0 | 0 | 1 | 0 | 1 | 1 | 0 | 1 | 0 | 0 | 0 0 |
| 1 | | | | | | | | | | | 0 | 1 | 0 | 0 0 |
| 0 | 1 | 0 | 0 | 1 | 0 | 1 | 1 | 0 | 0 | 0 | 1 | 1 | 0 | 0 0 |
| 1 | | | | | | | | | | | 1 | 0 | 1 | 0 0 |
| 0 | 1 | 0 | 1 | 0 | 0 | 1 | 1 | 0 | 1 | 0 | 1 | 1 | 0 | 0 0 |
| 1 | | | | | | | | | | | 1 | 0 | 1 | 0 0 |
| 0 | 1 | 0 | 1 | 1 | 0 | 1 | 1 | 1 | 0 | 0 | 1 | 1 | 0 | 0 0 |
| 1 | | | | | | | | | | | 1 | 0 | 1 | 0 0 |
| 0 | 1 | 1 | 0 | 0 | 0 | 1 | 1 | 1 | 1 | 0 | 1 | 1 | 0 | 0 0 |
| 1 | | | | | | | | | | | 1 | 0 | 1 | 0 0 |
| 0 | 1 | 1 | 0 | 1 | 1 | 0 | 0 | 0 | 0 | 1 | 0 | 0 | 0 | 0 0 |
| 1 | | | | | | | | | | | 1 | 0 | 0 | 0 0 |
| 0 | 1 | 1 | 1 | 0 | 1 | 0 | 0 | 0 | 1 | 1 | 0 | 0 | 0 | 0 0 |
| 1 | | | | | | | | | | | 1 | 0 | 0 | 0 0 |
| 0 | 1 | 1 | 1 | 1 | 1 | 0 | 0 | 1 | 0 | 1 | 0 | 0 | 0 | 0 0 |
| 1 | | | | | | | | | | | 1 | 0 | 0 | 0 0 |

# Fig. 6(d)

C --- carry to $2^{-51}$
S --- sticky bits

| real value | | | | | value of adding 1 to $2^{-54}$ | | | | | value after real rounding | | | reround signal | correction signal |
|---|---|---|---|---|---|---|---|---|---|---|---|---|---|---|
| $2^0$ | $2^{-52}$ | $2^{-53}$ | $2^{-54}$ | S | C | $2^{-52}$ | $2^{-53}$ | $2^{-54}$ | S | C | $2^{-53}$ | $2^{-54}$ | | |
| 0 | 0 | 0 | 0 | 0 | 0 | 0 | 0 | 1 | 1 | 0 | 0 | 0 | 0 | 0 0 |
| 1 | | | | | | | | | | | 0 | 0 | 0 | 0 0 |
| 0 | 0 | 0 | 0 | 1 | 0 | 0 | 1 | 0 | 0 | 0 | 0 | 1 | 0 | 0 0 |
| 1 | | | | | | | | | | | 0 | 1 | 0 | 0 1 |
| 0 | 0 | 0 | 1 | 0 | 0 | 0 | 1 | 0 | 1 | 0 | 0 | 1 | 0 | 0 0 |
| 1 | | | | | | | | | | | 0 | 1 | 0 | 0 1 |
| 0 | 0 | 0 | 1 | 1 | 0 | 0 | 1 | 1 | 0 | 0 | 0 | 1 | 0 | 0 0 |
| 1 | | | | | | | | | | | 0 | 1 | 0 | 0 1 |
| 0 | 0 | 1 | 0 | 0 | 0 | 0 | 1 | 1 | 1 | 0 | 0 | 1 | 0 | 0 0 |
| 1 | | | | | | | | | | | 0 | 1 | 0 | 0 1 |
| 0 | 0 | 1 | 0 | 1 | 0 | 1 | 0 | 0 | 0 | 0 | 1 | 0 | 0 | 0 0 |
| 1 | | | | | | | | | | | 0 | 1 | 0 | 0 0 |
| 0 | 0 | 1 | 1 | 0 | 0 | 1 | 0 | 0 | 1 | 0 | 1 | 0 | 0 | 0 0 |
| 1 | | | | | | | | | | | 0 | 1 | 0 | 0 0 |
| 0 | 0 | 1 | 1 | 1 | 0 | 1 | 0 | 1 | 0 | 0 | 1 | 0 | 0 | 0 0 |
| 1 | | | | | | | | | | | 0 | 1 | 0 | 0 0 |
| 0 | 1 | 0 | 0 | 0 | 0 | 1 | 0 | 1 | 1 | 0 | 1 | 0 | 0 | 0 0 |
| 1 | | | | | | | | | | | 0 | 1 | 0 | 0 0 |
| 0 | 1 | 0 | 0 | 1 | 0 | 1 | 1 | 0 | 0 | 0 | 1 | 1 | 0 | 0 0 |
| 1 | | | | | | | | | | | 1 | 0 | 1 | 0 0 |
| 0 | 1 | 0 | 1 | 0 | 0 | 1 | 1 | 0 | 1 | 0 | 1 | 1 | 0 | 0 0 |
| 1 | | | | | | | | | | | 1 | 0 | 1 | 0 0 |
| 0 | 1 | 0 | 1 | 1 | 0 | 1 | 1 | 1 | 0 | 0 | 1 | 1 | 0 | 0 0 |
| 1 | | | | | | | | | | | 1 | 0 | 1 | 0 0 |
| 0 | 1 | 1 | 0 | 0 | 0 | 1 | 1 | 1 | 1 | 0 | 1 | 1 | 0 | 0 0 |
| 1 | | | | | | | | | | | 1 | 0 | 1 | 0 0 |
| 0 | 1 | 1 | 0 | 1 | 1 | 0 | 0 | 0 | 0 | 1 | 0 | 0 | 0 | 0 0 |
| 1 | | | | | | | | | | | 1 | 0 | 0 | 0 0 |
| 0 | 1 | 1 | 1 | 0 | 1 | 0 | 0 | 0 | 1 | 1 | 0 | 0 | 0 | 0 0 |
| 1 | | | | | | | | | | | 1 | 0 | 0 | 0 0 |
| 0 | 1 | 1 | 1 | 1 | 1 | 0 | 0 | 1 | 0 | 1 | 0 | 0 | 0 | 0 0 |
| 1 | | | | | | | | | | | 1 | 0 | 0 | 0 0 |

## Fig. 7(a)

| input $2^{-24}$ $2^{-25}$ S | | | complete of 2 to input $2^{-24}$ $2^{-25}$ S | | | complete of 1 to input $2^{-24}$ $2^{-25}$ S | | | RN, RP(+),RM(-) Cin | RP(-), RM(+),RZ Cin |
|---|---|---|---|---|---|---|---|---|---|---|
| 0 | 0 | 0 | 0 | 0 | 0 | 1 | 1 | 1 | 1 | 0 |
| 0 | 0 | 1 | 1 | 1 | 1 | 1 | 1 | 0 | 1 | 0 |
| 0 | 1 | 0 | 1 | 1 | 0 | 1 | 0 | 1 | 1 | 0 |
| 0 | 1 | 1 | 1 | 0 | 1 | 1 | 0 | 0 | 1 | 0 |
| 1 | 0 | 0 | 1 | 0 | 0 | 0 | 1 | 1 | 1 | 0 |
| 1 | 0 | 1 | 0 | 1 | 1 | 0 | 1 | 0 | 1 | 0 |
| 1 | 1 | 0 | 0 | 1 | 0 | 0 | 0 | 1 | 1 | 0 |
| 1 | 1 | 1 | 0 | 0 | 1 | 0 | 0 | 0 | 1 | 0 |

## Fig. 7(b)

| input $2^{-53}$ $2^{-54}$ S | | | complete of 2 to input $2^{-53}$ $2^{-54}$ S | | | complete of 1 to input $2^{-53}$ $2^{-54}$ S | | | RN, RP(+),RM(-) Cin | RP(-), RM(+),RZ Cin |
|---|---|---|---|---|---|---|---|---|---|---|
| 0 | 0 | 0 | 0 | 0 | 0 | 1 | 1 | 1 | 1 | 0 |
| 0 | 0 | 1 | 1 | 1 | 1 | 1 | 1 | 0 | 1 | 0 |
| 0 | 1 | 0 | 1 | 1 | 0 | 1 | 0 | 1 | 1 | 0 |
| 0 | 1 | 1 | 1 | 0 | 1 | 1 | 0 | 0 | 1 | 0 |
| 1 | 0 | 0 | 1 | 0 | 0 | 0 | 1 | 1 | 1 | 0 |
| 1 | 0 | 1 | 0 | 1 | 1 | 0 | 1 | 0 | 1 | 0 |
| 1 | 1 | 0 | 0 | 1 | 0 | 0 | 0 | 1 | 1 | 0 |
| 1 | 1 | 1 | 0 | 0 | 1 | 0 | 0 | 0 | 1 | 0 |

## Fig. 7(c)

| input | | | complete of 2 to input | | | complete of 1 to input | | | RN, RP(+),RM(−) | RP(−), RM(+),RZ |
|---|---|---|---|---|---|---|---|---|---|---|
| $2^{-24}$ | $2^{-25}$ | S | $2^{-24}$ | $2^{-25}$ | S | $2^{-24}$ | $2^{-25}$ | S | Cin | Cin |
| 0 | 0 | 0 | 0 | 0 | 0 | 1 | 1 | 1 | 1 | 1 |
| 0 | 0 | 1 | 1 | 1 | 1 | 1 | 1 | 0 | 1 | 0 |
| 0 | 1 | 0 | 1 | 1 | 0 | 1 | 0 | 1 | 1 | 0 |
| 0 | 1 | 1 | 1 | 0 | 1 | 1 | 0 | 0 | 0 | 0 |
| 1 | 0 | 0 | 1 | 0 | 0 | 0 | 1 | 1 | 1 | 1 |
| 1 | 0 | 1 | 0 | 1 | 1 | 0 | 1 | 0 | 1 | 0 |
| 1 | 1 | 0 | 0 | 1 | 0 | 0 | 0 | 1 | 1 | 0 |
| 1 | 1 | 1 | 0 | 0 | 1 | 0 | 0 | 0 | 0 | 0 |

## Fig. 7(d)

| input | | | complete of 2 to input | | | complete of 1 to input | | | RN, RP(+),RM(−) | RP(−), RM(+),RZ |
|---|---|---|---|---|---|---|---|---|---|---|
| $2^{-53}$ | $2^{-54}$ | S | $2^{-53}$ | $2^{-54}$ | S | $2^{-53}$ | $2^{-54}$ | S | Cin | Cin |
| 0 | 0 | 0 | 0 | 0 | 0 | 1 | 1 | 1 | 1 | 1 |
| 0 | 0 | 1 | 1 | 1 | 1 | 1 | 1 | 0 | 1 | 0 |
| 0 | 1 | 0 | 1 | 1 | 0 | 1 | 0 | 1 | 1 | 0 |
| 0 | 1 | 1 | 1 | 0 | 1 | 1 | 0 | 0 | 0 | 0 |
| 1 | 0 | 0 | 1 | 0 | 0 | 0 | 1 | 1 | 1 | 1 |
| 1 | 0 | 1 | 0 | 1 | 1 | 0 | 1 | 0 | 1 | 0 |
| 1 | 1 | 0 | 0 | 1 | 0 | 0 | 0 | 1 | 1 | 0 |
| 1 | 1 | 1 | 0 | 0 | 1 | 0 | 0 | 0 | 0 | 0 |

# Fig. 8

## (a)

```
┌─────────────────┐
│    alignment    │
└─────────────────┘
         ↓
┌─────────────────┐
│  addition  and  │
│   substraction  │
└─────────────────┘
         ↓
┌─────────────────┐
│    normalize    │
└─────────────────┘
         ↓
┌─────────────────┐
│   round 1 bit   │
│      shift      │
└─────────────────┘
         ↓
       ( end )
```

## (b)

```
┌─────────────────┐
│    alignment    │
└─────────────────┘
         ↓
┌──────────────────────────┐
│ addition  and substraction│
│  round, 1 bit  shift      │
└──────────────────────────┘
         ↓
   ( end )   ┌───────────┐   ┌───────────┐
             │ re-round  │   │ normalize │
             └───────────┘   └───────────┘
                      ↓
                   ( end )
```

EP 0 472 148 B1

## Fig. 9(a)

$n$ --- no addition
$*$ --- don't care

| re-round | round mode | code of operation result | real operation | round addition bits | |
|---|---|---|---|---|---|
| | | | | expnt. diff. 0/1 | exc. for expnt. diff. 0/1 |
| 0 | RN | $*$ | add / substract | $2^{-24}$ / $n$ | $2^{-24}$ / $2^{-25}$ |
| | RP | $+$ | add / substract | $2^{-24}$ / $n$ | $2^{-24}$ / $2^{-25}$ |
| | | $-$ | $*$ | $n$ | $n$ |
| | RM | $+$ | $*$ | $n$ | $n$ |
| | | $-$ | add / substract | $2^{-24}$ / $n$ | $2^{-24}$ / $2^{-25}$ |
| | RZ | $*$ | $*$ | $n$ | $n$ |
| 1 | $*$ | $*$ | add | $2^{-24}$ | $2^{-24}$ |

## Fig. 9(b)

$n$ --- no addition
$*$ --- don't care

| re-round | round mode | code of operation result | real operation | round addition bits | |
|---|---|---|---|---|---|
| | | | | expnt. diff. 0/1 | exc. for expnt. diff. 0/1 |
| 0 | RN | $*$ | add / substract | $2^{-53}$ / $n$ | $2^{-53}$ / $2^{-54}$ |
| | RP | $+$ | add / substract | $2^{-53}$ / $n$ | $2^{-53}$ / $2^{-54}$ |
| | | $-$ | $*$ | $n$ | $n$ |
| | RM | $+$ | $*$ | $n$ | $n$ |
| | | $-$ | add / substract | $2^{-53}$ / $n$ | $2^{-53}$ / $2^{-54}$ |
| | RZ | $*$ | $*$ | $n$ | $n$ |
| 1 | $*$ | $*$ | add | $2^{-53}$ | $2^{-53}$ |

# *Fig. 10*

| order | exponential size | data 1 code | data 2. code | real operation | code of operation result | remarks |
|---|---|---|---|---|---|---|
| addition | $e_1 = e_2$ | + | + | add | + | $f_1 + f_2$ |
| | | + | − | substract | (×1) | $f_1 - f_2$ |
| | | − | + | substract | (×1) | $f_2 - f_1$ |
| | | − | − | add | − | $-(f_1 + f_2)$ |
| | $e_1 < e_2$ | + | + | add | + | $f'_1 + f_2$ |
| | | + | − | substract | − | $-(f_2 - f'_1)$ |
| | | − | + | substract | + | $f_2 - f'_1$ |
| | | − | − | add | − | $-(f'_1 + f_2)$ |
| | $e_1 > e_2$ | + | + | add | + | $f_1 + f'_2$ |
| | | + | − | substract | + | $f_1 - f'_2$ |
| | | − | + | substract | − | $-(f_1 - f'_2)$ |
| | | − | − | add | − | $-(f_1 + f_2)$ |
| substraction | $e_1 = e_2$ | + | + | substract | (×1) | $f_2 - f_1$ |
| | | + | − | add | − | $-(f_2 + f_1)$ |
| | | − | + | add | + | $f_2 + f_1$ |
| | | − | − | substract | (×1) | $-(f_2 - f_1)$ |
| | $e_1 < e_2$ | + | + | substract | + | $f_2 - f'_1$ |
| | | + | − | add | − | $-(f_2 + f'_1)$ |
| | | − | + | add | + | $f_2 + f'_1$ |
| | | − | − | substract | − | $-(f_2 - f'_1)$ |
| | $e_1 > e_2$ | + | + | substract | − | $-(f_1 - f'_2)$ |
| | | + | − | add | − | $-(f_1 + f'_2)$ |
| | | − | + | add | + | $f_1 + f'_2$ |
| | | − | − | substract | + | $f_1 - f'_2$ |

f1 : mantissa of data 1
f2 : mantissa of data 2
$e_1$ : exponential of data 1
$e_2$ : exponential of data 2
f1' : data aligned f1
f2' : data aligned f2

(×) code of result after effective operation

# Fig. 11

| L R S | code of operation result | round addition signal | | | |
|---|---|---|---|---|---|
| | | R M | R P | R N | R Z |
| 0 0 0 | + | 0 | 0 | 0 | 0 |
| | − | | | | |
| 0 0 1 | + | 0 | 1 | 0 | 0 |
| | − | 1 | 0 | | |
| 0 1 0 | + | 0 | 1 | 0 | 0 |
| | − | 1 | 0 | | |
| 0 1 1 | + | 0 | 1 | 1 | 0 |
| | − | 1 | 0 | | |
| 1 0 0 | + | 0 | 0 | 0 | 0 |
| | − | | | | |
| 1 0 1 | + | 0 | 1 | 0 | 0 |
| | − | 1 | 0 | | |
| 1 1 0 | + | 0 | 1 | 1 | 0 |
| | − | 1 | 0 | | |
| 1 1 1 | + | 0 | 1 | 1 | 0 |
| | − | 1 | 0 | | |

# Fig. 12

(a)

```
  L R
  1 1
+)    1
  ‾0 0‾
  carry 1
```

(b)

```
  L R
  0 1
+)    1
  ‾1 0‾
  carry 0
```

(c)

```
  R S
  0 0
+) 1 1
  ‾1 1‾
  carry 0
```

(d)

```
  R S
  0 1
+) 1 1
  ‾0 0‾
  carry 1
```

(e)

```
  R S
  1 0
+) 1 1
  ‾0 1‾
  carry 1
```

(f)

```
  R S
  1 1
+) 1 1
  ‾1 0‾
  carry 1
```

Fig. 13(a)

$$2^1 \; 2^0 \; 2^{-1} \text{-----} \; 2^{-23} 2^{-24} 2^{-25} \; S$$

$1_{\blacktriangle}$ - - - - - - - -

$+ \;)\; 0_{\blacktriangle}$ - - - - - - - - - $G' \; R' \; S'$

$0 \; 1_{\blacktriangle}$ - - - - - - - $D_1 \; G' R' S'$    — (1) $\begin{cases} L = D_1 \\ R = G' \\ S = R' + S' \end{cases}$

or

$1$ - - - - - - - - $D_2 \; D_1 \; G' R' S'$    — (2) $\begin{cases} L = D_2 \\ R = D_1 \\ S = G' + R' + S' \end{cases}$

Fig. 13(b)

$$2^1 \; 2^0 \; 2^{-1} \text{-----} \; 2^{-23} 2^{-24} 2^{-25} \; S$$

$1_{\blacktriangle}$ - - - - - - - -

$- \;)\; 0_{\blacktriangle} \; 0$ - - - - - - $G' \; R' \; S'$

$0_{\blacktriangle} \; 1$ - - - - - - $D_1 \; G'' R' S''$    — (3) $\begin{cases} L = G'' \\ R = R'' \\ S = S'' \end{cases}$

or

$1_{\blacktriangle}$ - - - - - - - $D_1 \; G'' R' S''$    — (4) $\begin{cases} L = D_1 \\ R = G'' \\ S = R'' + S'' \end{cases}$

wherein $G'' R'' S'' = \overline{G' R' S'} + 1$

Fig. 14

EP 0 472 148 B1

# Fig. 15

# Fig. 16

Fig. 17(a)

| Z22 | Z23 | Z24 | Z51 | Z52 | Z53 | S | Cout | correction signal | round addition signal |
|---|---|---|---|---|---|---|---|---|---|
| 0 | 0 | 0 | * | * | * | 0 | 0 | 0 | 0 |
|  |  |  |  |  |  | 0 | 1 | 0 | 0 |
|  |  |  |  |  |  | 1 | 0 | 0 | 0 |
|  |  |  |  |  |  | 1 | 1 | 0 | 0 |
| 0 | 0 | 1 | * | * | * | 0 | 0 | 0 | 0 |
|  |  |  |  |  |  | 0 | 1 | 0 | 0 |
|  |  |  |  |  |  | 1 | 0 | 0 | 0 |
|  |  |  |  |  |  | 1 | 1 | 0 | 0 |
| 0 | 1 | 0 | * | * | * | 0 | 0 | 1 | 0 |
|  |  |  |  |  |  | 0 | 1 | 0 | 0 |
|  |  |  |  |  |  | 1 | 0 | 0 | 0 |
|  |  |  |  |  |  | 1 | 1 | 0 | 0 |
| 0 | 1 | 1 | * | * | * | 0 | 0 | 0 | 0 |
|  |  |  |  |  |  | 0 | 1 | 0 | 0 |
|  |  |  |  |  |  | 1 | 0 | 0 | 0 |
|  |  |  |  |  |  | 1 | 1 | 1 | 0 |
| 1 | 0 | 0 | * | * | * | 0 | 0 | 0 | 0 |
|  |  |  |  |  |  | 0 | 1 | 0 | 0 |
|  |  |  |  |  |  | 1 | 0 | 0 | 0 |
|  |  |  |  |  |  | 1 | 1 | 0 | 0 |
| 1 | 0 | 1 | * | * | * | 0 | 0 | 0 | 0 |
|  |  |  |  |  |  | 0 | 1 | 0 | 0 |
|  |  |  |  |  |  | 1 | 0 | 0 | 0 |
|  |  |  |  |  |  | 1 | 1 | 0 | 0 |
| 1 | 1 | 0 | * | * | * | 0 | 0 | 1 | 0 |
|  |  |  |  |  |  | 0 | 1 | 0 | 0 |
|  |  |  |  |  |  | 1 | 0 | 0 | 0 |
|  |  |  |  |  |  | 1 | 1 | 0 | 0 |
| 1 | 1 | 1 | * | * | * | 0 | 0 | 0 | 0 |
|  |  |  |  |  |  | 0 | 1 | 0 | 1 |
|  |  |  |  |  |  | 1 | 0 | 0 | 0 |
|  |  |  |  |  |  | 1 | 1 | 0 | 1 |

# Fig. 17(b)

| $Z_{22}$ | $Z_{23}$ | $Z_{24}$ | $Z_{51}$ | $Z_{52}$ | $Z_{53}$ | S | Cout | correction signal | round addition signal |
|---|---|---|---|---|---|---|---|---|---|
| * | * | * | 0 | 0 | 0 | 0<br>0<br>1<br>1 | 0<br>1<br>0<br>1 | 0<br>0<br>0<br>0 | 0<br>0<br>0<br>0 |
| * | * | * | 0 | 0 | 1 | 0<br>0<br>1<br>1 | 0<br>1<br>0<br>1 | 0<br>0<br>0<br>0 | 0<br>0<br>0<br>0 |
| * | * | * | 0 | 1 | 0 | 0<br>0<br>1<br>1 | 0<br>1<br>0<br>1 | 1<br>0<br>0<br>0 | 0<br>0<br>0<br>0 |
| * | * | * | 0 | 1 | 1 | 0<br>0<br>1<br>1 | 0<br>1<br>0<br>1 | 0<br>0<br>0<br>1 | 0<br>0<br>0<br>0 |
| * | * | * | 1 | 0 | 0 | 0<br>0<br>1<br>1 | 0<br>1<br>0<br>1 | 0<br>0<br>0<br>0 | 0<br>0<br>0<br>0 |
| * | * | * | 1 | 0 | 1 | 0<br>0<br>1<br>1 | 0<br>1<br>0<br>1 | 0<br>0<br>0<br>0 | 0<br>0<br>0<br>0 |
| * | * | * | 1 | 1 | 0 | 0<br>0<br>1<br>1 | 0<br>1<br>0<br>1 | 1<br>0<br>0<br>0 | 0<br>0<br>0<br>0 |
| * | * | * | 1 | 1 | 1 | 0<br>0<br>1<br>1 | 0<br>1<br>0<br>1 | 0<br>0<br>0<br>0 | 0<br>1<br>0<br>1 |

# Fig. 18

|  | step 1 | step 2 | insert step |
|---|---|---|---|
| exponential adder | addition bias correction | correction by normalize | |
| exception detector | | detect | |
| multiplier | A · B | | |
| mantissa adder | | S.C<br>S + C + round value A | addition of round value A |
| shift | | 0 or 1 bit right (normalize) | round addition (signal=1) |
| mantissa correction | | R23 correction | |

EP 0 472 148 B1

**Fig. 19(a)**

**Fig. 19(b)**

- S₁ — sum output of A and B
- C₁ — carry output of A and B
- +) Round-A — round addition value A

shift  correction control  S generation

$Z_{-1} = 0$
$Z_{-1} = 1$ (1 bit right shift)

$R_0 R_1 \cdots R_{23} R_{24} R_{25} \cdots$ = correction bits

(step 2)

EP 0 472 148 B1

# Fig. 20

EP 0 472 148 B1

EP 0 472 148 B1

# Fig. 21 (a)

*Fig. 21 (b)*

Fig. 22

EP 0 472 148 B1

# Fig. 23

|  | step 1 | step 2 |
|---|---|---|
| exponential substractor | substraction bias correction | correction by normalize |
| exception detector |  | detection |
| mantissa operation | divid, round normalize | |

# Fig. 24

## EP 0 472 148 B1

## Fig. 25

## Fig. 26

54 bits

23

round addition value D

round addition value E

## Fig. 27

| | step 1 | step 2 | step 3 | step 4 |
|---|---|---|---|---|
| exponential adder | addition | bias correction | correction by normalize | correction by normalize |
| multiplier | A — B | | | |
| product generate adder | | S, C | (S + C) | |
| mantissa adder | | S + C | (S + C) + O | addition of round value D |
| shift | | | O or 1 bit right (normalize) | O or bit right (normalize) |

## Fig. 28

| | step 1 | step 2 | step 3 | step 4 | step 5 | step 6 | step 7 |
|---|---|---|---|---|---|---|---|
| exponential adder | adder | bias correction | → | | | correction by normalize | correction by normalize |
| multiplier | AL · BL | AL · BU | AU · BL | AU · BU | | | |
| product generate adder | | S1 + C1 | S2 + C2 | S3 + C3 | S4 + C4 | | |
| mantissa adder | | | (S1 +C1) + O | (S2 + C2)+ shift output | (S3+C3)+ shift output | (S4 +C4)+ shift output | addition of round value E |
| shift | | | 26 bits right | O bit | 26 bits right | O or I bit right (normalize) | O or I bit right (normalize) |

EP 0 472 148 B1